# EUROPEAN PATENT APPLICATION

(11) **EP 4 169 381 A1**
(43) Date of publication of application: **26.04.2023**
(21) Application number: 21827132.8
(22) Date of filing: 17.06.2021
(51) Int. Cl.: A01N 37/42, A01N 37/44, A01N 37/46, A01P 21/00, C07K 5/062, C07K 5/068, C07K 5/072, C07K 5/078, A01N 43/36, A01N 43/54, A01N 47/12, A01N 47/28

(54) **METHOD FOR INDUCING ENVIRONMENTAL STRESS TOLERANCE IN PLANTS**

(30) Priority: 17.06.2020 JP 2020104749
(71) Applicant: AJINOMOTO CO., INC., Chuo-ku Tokyo 104-8315 (JP)
(72) Inventor: TAKEDA, Taito, Kawasaki-shi, Kanagawa 210-8681 (JP); TAHARA, Yuki, Kawasaki-shi, Kanagawa 210-8681 (JP); SATO, Seiichi, Kawasaki-shi, Kanagawa 210-8681 (JP)
(74) Representative: Strehl Schübel-Hopf & Partner
(86) International application number: PCT/JP2021/023114
(87) International publication number: WO 2021/256546

(57) **Abstract**

A technique for inducing environmental stress tolerance of a plant is provided. Environmental stress tolerance of a plant is induced by applying to the plant an abscisic acid-like substance, such as abscisic acid and agonists thereof, in combination with a nitrogen-containing compound, such as amino acids and amino acid derivatives.

## Description

### Technical Field

The present invention relates to a technique for inducing environmental stress tolerance of a plant.

### Background Art

Abscisic acid (ABA) is known to have a function of conferring tolerance to environmental stresses such as drought and salt damage to plants. ABA can confer drought tolerance to plants, for example, by inducing stomatal closure and synthesis of compatible solutes.

In addition, glutamic acid has been reported to exert a stomatal closure action in Arabidopsis thaliana (Non-patent document 1). Since the stomatal closure action by glutamic acid has also been observed in an ABA-insensitive mutant of Arabidopsis thaliana, it is considered to be independent of the ABA signaling pathway (Non-patent document 1).

It has also been reported that coloration of fruits can be promoted by using abscisic acid in combination with an amino acid selected from leucine, isoleucine, and phenylalanine (Patent document 1).

However, it has not been known that concomitant use of abscisic acid and an amino acid further improves environmental stress tolerance of plants.

### Prior art references

### Patent documents

Patent document 1: WO2017/026313

### Non-patent documents

Non-patent document 1: Riichiro Yoshida et al. Glutamate functions in stomatal closure in Arabidopsis and fava bean. J Plant Res. 2016; 129(1): 39-49.

### Summary of the Invention

### Object to be Achieved by the Invention

An object of the present invention is to provide a technique for inducing environmental stress tolerance of a plant.

### Means for Achieving the Object

The inventors of the present invention conducted various researches in order to achieve the aforementioned object. As a result, they found that environmental stress tolerance of a plant can be induced by applying to the plant an abscisic acid-like substance, such as abscisic acid and agonists thereof, in combination with a nitrogen-containing compound, such as amino acids and amino acid derivatives, and accomplished the present invention.

The present invention can thus be embodied, for example, as follows.
[1] A composition for inducing environmental stress tolerance of a plant, wherein the composition contains the following ingredients (A) and (B):
   (A) an abscisic acid-like substance;
   (B) one or more kinds of compounds selected from the group consisting of an amino acid, an amino acid derivative, and another nitrogen-containing compound.
[2] The composition mentioned above, wherein the ingredient (A) is one or more kinds of ingredients selected from the group consisting of abscisic acid, an abscisic acid derivative, an abscisic acid agonist, and an inhibitor of abscisic acid degradation.
[3] The composition mentioned above, wherein the ingredient (A) is (S)-(+)-abscisic acid.
[4] The composition mentioned above, wherein the amino acid of the ingredient (B) is one or more kinds of amino acids selected from the group consisting of lysine, tryptophan, valine, arginine, histidine, glutamine, asparagine, leucine, glycine, and glutamic acid.
[5] The composition mentioned above, wherein the amino acid of the ingredient (B) is one or more kinds of amino acids selected from the group consisting of lysine, tryptophan, and valine.
[6] The composition mentioned above, wherein the amino acid of the ingredient (B) is lysine.
[7] The composition mentioned above, wherein the amino acid of the ingredient (B) is an L-isomer.
[8] The composition mentioned above, wherein the amino acid derivative of the ingredient (B) is a compound shown by the formula (I) described later:
   wherein, in the formula (I),
   "n" represents an integer of 1 to 4,
   R1 to R4 each independently represent a hydrogen atom, an alkyl group that may be substituted, a cycloalkyl group that may be substituted, an aryl group that may be substituted, a heteroaryl group that may be substituted, an alkenyl group that may be substituted, an alkynyl group that may be substituted, an acyl group, a sulfo group, a sulfonyl group, an acylamino group, an acyloxy group, a carbamoyl group, or an amidino group, or at least some of R1 to R4 together form a substituent, and
   R5 represents a hydrogen atom, a hydroxyl group, an alkoxy group that may be substituted, an alkoxyaryl group that may be substituted, an amino group, an alkylamino group that may be substituted, or an arylamino group that may be substituted.
[9] The composition mentioned above, wherein the compound shown by the formula (I) satisfies one or more conditions selected from the following (1) to (7):
   (1) the R1 and R3 are hydrogen atoms;
   (2) the R1 to R4 are hydrogen atoms;
   (3) the R2 and R4 are each independently an acyl group having a carbon number of 1 to 20;
   (4) one of the R2 and R4 is a hydrogen atom and the other is an acyl group having a carbon number of 1 to 20;
   (5) the R1 is a hydrogen atom and one or each of the R3 and R4 is an alkyl group that may be substituted, the alkyl group having a carbon number of 1 to 6;
   (6) the R5 is an alkoxy group that may be substituted, the alkoxy group having a carbon number of 1 to 6;
   (7) the R5 is an amino group or an alkylamino group that may be substituted, the alkylamino group having a carbon number of 1 to 6.
[10] The composition mentioned above, wherein the substituent formed by at least some of R1 to R4 together is a cyclic group having 1 to 3 hetero atoms.
[11] The composition mentioned above, wherein the amino acid derivative of the ingredient (B) is a dipeptide.
[12] The composition mentioned above, wherein the amino acid derivative of the ingredient (B) is one or more kinds of compounds selected from the compounds shown by the formulas (I-1) to (1-91) and (AD-1) to (AD-4) described later.
[13] The composition mentioned above, wherein the nitrogen-containing compound of the ingredient (B) is a compound shown by the formula (II) described later:
   wherein, in the formula (II),
   "n" represents an integer of 2 to 5, and
   R1 and R2 each independently represent a hydrogen atom or an acyl group.
[14] The composition mentioned above, wherein the nitrogen-containing compound of the ingredient (B) is the compound shown by the formula (II-1) described later and/or the compound shown by the formula (II-2) described later.
[15] The composition mentioned above, wherein a part or the whole of the ingredient (A) forms a condensate with a part or the whole of the ingredient (B).
[16] The composition mentioned above, which is used in the form of a liquid containing the ingredient (A) at a concentration of 0.004 µM to 10 mM.
[17] The composition mentioned above, which is used in the form of a liquid containing the ingredient (B) at a concentration of 0.25 mM to 100 mM.
[18] A method for inducing environmental stress tolerance of a plant, the method comprising:
   applying the following ingredients (A) and (B) to the plant:
   (A) an abscisic acid-like substance;
   (B) one or more kinds of compounds selected from the group consisting of an amino acid, an amino acid derivative, and another nitrogen-containing compound.
[19] A method for producing a plant body, the method comprising:
   cultivating a plant with applying the following ingredients (A) and (B) to the plant; and
   collecting a plant body:
      (A) an abscisic acid-like substance;
      (B) one or more kinds of compounds selected from the group consisting of an amino acid, an amino acid derivative, and another nitrogen-containing compound.
[20] A method for suppressing dehydration of a plant after harvest, the method comprising:
   applying the following ingredients (A) and (B) to the plant before harvesting the plant:
   (A) an abscisic acid-like substance;
   (B) one or more kinds of compounds selected from the group consisting of an amino acid, an amino acid derivative, and another nitrogen-containing compound.
[21] A search method for a method for modulating a function of the following ingredient (A), the search method comprising:
   applying the following ingredients (A) and (B) to a plant; and
   identifying action of the ingredient (B):
      (A) an abscisic acid-like substance;
      (B) one or more kinds of compounds selected from the group consisting of an amino acid, an amino acid derivative, and another nitrogen-containing compound.
[22] The method mentioned above, wherein the action is regulation of expression of a gene of the plant.
[23] The method mentioned above, wherein the ingredient (A) is one or more kinds of ingredients selected from the group consisting of abscisic acid, an abscisic acid derivative, an abscisic acid agonist, and an inhibitor of abscisic acid degradation.
[24] The method mentioned above, wherein the ingredient (A) is (S)-(+)-abscisic acid.
[25] The method mentioned above, wherein the amino acid of the ingredient (B) is one or more kinds of amino acids selected from the group consisting of lysine, tryptophan, valine, arginine, histidine, glutamine, asparagine, leucine, glycine, and glutamic acid.
[26] The method mentioned above, wherein the amino acid of the ingredient (B) is one or more kinds of amino acids selected from the group consisting of lysine, tryptophan, and valine.
[27] The method mentioned above, wherein the amino acid of the ingredient (B) is lysine.
[28] The method mentioned above, wherein the amino acid of the ingredient (B) is an L-isomer.
[29] The method mentioned above, wherein the amino acid derivative of the ingredient (B) is a compound shown by the formula (I) described later:
   wherein, in the formula (I),
   "n" represents an integer of 1 to 4,
   R1 to R4 each independently represent a hydrogen atom, an alkyl group that may be substituted, a cycloalkyl group that may be substituted, an aryl group that may be substituted, a heteroaryl group that may be substituted, an alkenyl group that may be substituted, an alkynyl group that may be substituted, an acyl group, a sulfo group, a sulfonyl group, an acylamino group, an acyloxy group, a carbamoyl group, or an amidino group, or at least some of R1 to R4 together form a substituent, and
   R5 represents a hydrogen atom, a hydroxyl group, an alkoxy group that may be substituted, an alkoxyaryl group that may be substituted, an amino group, an alkylamino group that may be substituted, or an arylamino group that may be substituted.
[30] The method mentioned above, wherein the compound shown by the formula (I) satisfies one or more conditions selected from the following (1) to (7):
   (1) the R1 and R3 are hydrogen atoms;
   (2) the R1 to R4 are hydrogen atoms;
   (3) the R2 and R4 are each independently an acyl group having a carbon number of 1 to 20;
   (4) one of the R2 and R4 is a hydrogen atom and the other is an acyl group having a carbon number of 1 to 20;
   (5) the R1 is a hydrogen atom and one or each of the R3 and R4 is an alkyl group that may be substituted, the alkyl group having a carbon number of 1 to 6;
   (6) the R5 is an alkoxy group that may be substituted, the alkoxy group having a carbon number of 1 to 6;
   (7) the R5 is an amino group or an alkylamino group that may be substituted, the alkylamino group having a carbon number of 1 to 6.
[31] The method mentioned above, wherein the substituent formed by at least some of R1 to R4 together is a cyclic group having 1 to 3 hetero atoms.
[32] The method mentioned above, wherein the amino acid derivative of the ingredient (B) is a dipeptide.
[33] The method mentioned above, wherein the amino acid derivative of the ingredient (B) is one or more kinds of compounds selected from the compounds shown by the formulas (I-1) to (1-91) and (AD-1) to (AD-4) described later.
[34] The method mentioned above, wherein the nitrogen-containing compound of the ingredient (B) is a compound shown by the formula (II) described later:
   wherein, in the formula (II),
   "n" represents an integer of 2 to 5, and
   R1 and R2 each independently represent a hydrogen atom or an acyl group.
[35] The method mentioned above, wherein the nitrogen-containing compound of the ingredient (B) is the compound shown by the formula (II-1) described later and/or the compound shown by the formula (II-2) described later.
[36] The method mentioned above, wherein a part or the whole of the ingredient (A) forms a condensate with a part or the whole of the ingredient (B).
[37] The method mentioned above, wherein the ingredient (A) is used in the form of a liquid containing the ingredient (A) at a concentration of 0.004 µM to 10 mM.
[38] The method mentioned above, wherein the ingredient (B) is used in the form of a liquid containing the ingredient (B) at a concentration of 0.25 mM to 100 mM.
[39] The method mentioned above, wherein the inducing of environmental stress tolerance is an increase in expression of a gene involved in environmental stress tolerance.
[40] The method mentioned above, wherein the gene involved in environmental stress tolerance is one or more kinds of genes selected from MAPKKK18 gene, RD29A gene, RD29B gene, ABF3F gene, and SLAC1 gene.
[41] A condensate of abscisic acid and lysine.
[42] The condensate mentioned above, wherein the abscisic acid is (S)-(+)-abscisic acid.
[43] The condensate mentioned above, wherein the lysine is L-lysine.

### Brief Description of the Drawings

[Fig. 1] A diagram showing an effect of inducing expression of ABA-responsive genes in Arabidopsis thaliana by combinations of various amino acids and ABA. The expression level of each gene is shown as a relative expression level to that of the GAPDH gene (the same shall apply hereinafter).
[Fig. 2] A diagram showing an effect of inducing expression of environmental stress tolerance genes in Arabidopsis thaliana by amino acids (Trp, Lys, and Val) alone or by combinations of ABA and amino acids (Trp, Lys, and Val). Asterisks indicate significant differences by Tukey's multiple test (p<0.05).
[Fig. 3] A diagram showing an effect of inducing expression of environmental stress tolerance genes in Arabidopsis thaliana by combinations of various concentrations of Lys and ABA.
[Fig. 4] A diagram showing an effect of inducing expression of environmental stress tolerance genes in Arabidopsis thaliana by a combination of Lys and ABA or by a seaweed extract.
[Fig. 5] A diagram showing an effect of inducing expression of environmental stress tolerance genes in a wild-type strain (Col-0) and an ABA-insensitive mutant (abi-1) of Arabidopsis thaliana by Lys alone or by a combination of Lys and ABA.
[Fig. 6] A diagram showing an effect of conferring drought stress tolerance in Arabidopsis thaliana by Lys or ABA alone or by a combination of Lys and ABA.
[Fig. 7] A diagram showing an effect of conferring drought stress tolerance in Arabidopsis thaliana by Lys or ABA alone or by a combination of Lys and ABA.
[Fig. 8] A diagram showing an effect of inducing expression of environmental stress tolerance genes in Arabidopsis thaliana by a combination of Lys, Quinabactin, or Opabactin and ABA.
[Fig. 9] A diagram (photograph) showing an effect of conferring drought stress tolerance in tomato by ABA alone or by a combination of Lys and ABA.
[Fig. 10] A diagram (photograph) showing an effect of conferring drought stress tolerance in wheat by Lys or ABA alone or by a combination of Lys and ABA. Asterisks indicate significant differences by Tukey's multiple test (p<0.05).
[Fig. 11] A diagram (photograph) showing an effect of conferring drought stress tolerance in wheat by Lys or ABA alone or by a combination of Lys and ABA. Asterisks indicate significant differences by Tukey's multiple test (p<0.05).

### Modes for Carrying out the Invention

Hereinafter, the present invention will be explained in detail.

In the present invention, the following ingredients (A) and (B) are used:
(A) an abscisic acid-like substance;
(B) a nitrogen-containing compound.

The ingredients (A) and (B) may also be collectively referred to as "active ingredients".

By using the active ingredients, specifically, by applying the active ingredients to a plant, environmental stress tolerance of the plant can be induced. The term "induction of environmental stress tolerance of a plant" may be used interchangeably with the term "conferment of environmental stress tolerance to a plant" or "improvement of environmental stress tolerance of a plant". The term "environmental stress tolerance" refers to tolerance to an environmental stress. Examples of the environmental stress include drought stress, chilling stress, freezing stress, high temperature stress, and high salinity stress. Particular examples of the environmental stress include drought stress. Tolerance to drought stress, chilling stress, freezing stress, high temperature stress, and high salinity stress is also referred to as "drought tolerance", "chilling tolerance", "freezing tolerance", "high temperature tolerance", and "salt tolerance", respectively. Use of the active ingredients may induce one type of environmental stress tolerance or two or more types of environmental stress tolerance.

The ingredient (B) may have a function as a modulator of the ingredient (A). The term "function as a modulator of the ingredient (A)" may refer to a function of modulating a function of the ingredient (A). The term "function of modulating a function of the ingredient (A)" may specifically refer to a function of enhancing or suppressing a function of the ingredient (A). Examples of the function of the ingredient (A) include a function of inducing environmental stress tolerance of a plant. Examples of the function of the ingredient (A) also include a function of closing stomata of a plant and a function of suppressing germination of a plant. The ingredient (B) may at least enhance the function of inducing environmental stress tolerance of a plant by the ingredient (A). That is, while the ingredient (A) alone may have the function of inducing environmental stress tolerance of a plant, concomitant use of the ingredients (A) and (B) may further improve environmental stress tolerance of the plant compared with that observed when the ingredient (A) alone is used. Concomitant use of the ingredients (A) and (B) may enhance induction of one type of environmental stress tolerance or two or more types of environmental stress tolerance compared with that observed when the ingredient (A) alone is used. Also, the ingredient (B) may enhance a certain function of the ingredient (A) and may suppress another function of the ingredient (A). For example, the ingredient (B) may enhance the function of inducing environmental stress tolerance of a plant by the ingredient (A) and may suppress another function of the ingredient (A). That is, in one embodiment, concomitant use of the ingredients (A) and (B) can induce environmental stress tolerance of a plant while suppressing multiple functions of the ingredient (A). Specifically, for example, the ingredient (B) may enhance the function of inducing environmental stress tolerance of a plant by the ingredient (A) and may suppress the function of closing stomata of the plant and/or the function of suppressing germination of the plant by the ingredient (A). Suppression of the function of suppressing germination of a plant may, for example, promote germination. Suppression of the function of closing stomata of a plant may, for example, induce high temperature stress tolerance. That is, suppression of the function of closing stomata of a plant at a high temperature may promote transpiration, to decrease the body temperature of the plant, and thereby high temperature stress tolerance may be induced. That is, enhancement of the function of closing stomata of a plant can be effective for inducing drought stress tolerance while suppression of the function of closing stomata of a plant can be effective for inducing high temperature tolerance.

The ingredient (B) may function as a modulator of the ingredient (A), for example, by further regulating (for example, enhancing or suppressing) expression of a gene of a plant whose expression is regulated (for example, enhanced or suppressed) by the ingredient (A). That is, examples of the function of the ingredient (B) include a function of regulating (for example, enhancing or suppressing) expression of a gene of a plant. For example, the ingredient (B) may specifically regulate (for example, enhance or suppress) expression of a certain gene of a plant. Also, for example, the ingredient (B) may specifically enhance expression of a certain gene of a plant and may specifically suppress expression of another gene of the plant.

The ingredient (B) may function as a modulator of the ingredient (A), for example, by regulating (for example, enhancing or suppressing) binding between the ingredient (A) and a receptor thereof. That is, examples of the function of the ingredient (B) include a function of regulating (for example, enhancing or suppressing) binding between the ingredient (A) and a receptor thereof.

Whether the ingredient (B) has the function as a modulator of the ingredient (A) can be confirmed by identifying action of the ingredient (B) in case that the ingredient (B) is used in combination with the ingredient (A). The term "function of the ingredient (B)" may be used interchangeably with the term "action of the ingredient (B)". The action of the ingredient (B) can be identified, for example, by comparing a response of a plant observed when the ingredient (A) alone is applied to the plant with that observed when both the ingredients (A) and (B) are applied to the plant. The response of a plant can be appropriately confirmed, for example, depending on the function of the ingredient (A). That is, for example, whether the induction of environmental stress tolerance of a plant is regulated can be confirmed on the basis of the induction of environmental stress tolerance of the plant as an indicator. Also, for example, whether the function of closing stomata of a plant is regulated can be confirmed on the basis of the transpiration rate of the plant or the drought tolerance or the high temperature tolerance of the plant as an indicator. Also, for example, whether the function of suppressing germination of a plant is regulated can be confirmed on the basis of germination of the plant as an indicator. Also, for example, whether expression of a gene of a plant is regulated can be confirmed on the basis of the expression level of the gene as an indicator. Also, for example, whether the binding between the ingredient (A) and a receptor thereof is regulated can be confirmed on the basis of the degree of the binding between the ingredient (A) and the receptor thereof as an indicator.

The induction of environmental stress tolerance of a plant can be confirmed, for example, on the basis of an increase in expression of a gene involved in environmental stress tolerance. In other words, the induction of environmental stress tolerance of a plant may be due to, for example, an increase in expression of a gene involved in environmental stress tolerance. That is, if expression of a gene involved in environmental stress tolerance is increased when the active ingredients are used compared with that observed when the active ingredients are not used, it can be judged that environmental stress tolerance of a plant is induced by the active ingredients. Also, if expression of a gene involved in environmental stress tolerance is increased when the ingredients (A) and (B) are used in combination compared with that observed when the ingredient (A) alone is used, it can be judged that environmental stress tolerance of a plant is further improved by the ingredient (B). Also, in other words, examples of the induction of environmental stress tolerance of a plant include increase in expression of a gene involved in environmental stress tolerance. The term "increase in expression of a gene" may be used interchangeably with the term "induction of expression of a gene". Examples of the gene involved in environmental stress tolerance include genes whose expression is induced by abscisic acid. Specific examples of the gene involved in environmental stress tolerance include MAPKKK18 gene, RD29A gene, RD29B gene, ABF3F gene, and SLAC1 gene. For example, expression of one or more kinds (for example, all) of genes selected from these genes involved in environmental stress tolerance may be increased. In particular, expression of MAPKKK18 gene and/or RD29B gene may be increased. That is, specific examples of the induction of environmental stress tolerance of a plant include increase in expression of one or more kinds (for example, all) of genes selected from MAPKKK18 gene, RD29A gene, RD29B gene, ABF3F gene, and SLAC1 gene. Particular examples of the induction of environmental stress tolerance of a plant include increase in expression of MAPKKK18 gene and/or RD29B gene. An increase in expression of a gene can be confirmed by, for example, measuring the transcription amount of the gene (for example, the amount of mRNA), the translation amount of the gene (for example, the amount of the protein encoded by the gene), or the activity of the protein encoded by the gene. Examples of methods for measuring the amount of mRNA include northern hybridization and RT-PCR. Examples of methods for measuring the amount of a protein include western blotting. Methods for measuring the activity of a protein can be appropriately chosen depending on various conditions such as the type of the target protein.

The induction of environmental stress tolerance of a plant can also be confirmed, for example, on the basis of a decrease in an environmental stress symptom as an indicator. That is, if an environmental stress symptom is decreased when the active ingredients are used compared with that observed when the active ingredients are not used, it can be judged that environmental stress tolerance of a plant is induced by the active ingredients. Also, if an environmental stress symptom is decreased when the ingredients (A) and (B) are used in combination compared with that observed when the ingredient (A) alone is used, it can be judged that environmental stress tolerance of a plant is further improved by the ingredient (B). Also, in other words, examples of the induction of environmental stress tolerance of a plant include decrease in an environmental stress symptom. The term "environmental stress symptom" may refer to a symptom caused by an environmental stress. Examples of the environmental stress symptom include deterioration of growth of a plant, wilting of a plant, death of a plant, and decrease in the yield of a plant. That is, examples of the induction of environmental stress tolerance of a plant, specifically, examples of the decrease in an environmental stress symptom, include improvement in growth of a plant, decrease in wilting of a plant, improvement in viability of a plant, and improvement in the yield of a plant. Examples of the improvement in the yield of a plant include improvement in the yield of the whole of plant body and improvement in the yield of a part, such as leaf, root, fruit, and seed, of plant body. The term "decrease in an environmental stress symptom" also includes complete elimination of an environmental stress symptom. In addition, the term "decrease in an environmental stress symptom" includes both a decrease in an environmental stress symptom that can occur in future and a decrease in an environmental stress symptom that has already occurred. Examples of the decrease in an environmental stress symptom that can occur in future include no occurrence of an environmental stress symptom in future and decrease in an environmental stress symptom in case that the environmental stress symptom occurs in future. Examples of the decrease in an environmental stress symptom that has already occurred include improvement in an environmental stress symptom that has already occurred and inhibition of deterioration of an environmental stress symptom that has already occurred.

### <1> Plant

The type of the plant is not particularly limited. The plant may be an arboreous plant or herb plant. Examples of the plant include *Gramineae* plants (rice plant, barley, wheat, corn, oats, lawn grass, etc.), *Solanaceae* plants (tomato, green pepper, eggplant, potato, etc.), *Cucurbitaceae* plants (cucumber, melon, Japanese pumpkin, etc.), *Leguminosae* plants (green pea, soybean, kidney bean, alfalfa, peanut, broad bean, etc.), *Brassicaceae* plants (Japanese radish, Chinese cabbage, cabbage, komatsuna (*Brassica rapa* var. *perviridis*), turnip rape (*Brassica rapa* var. *amplexicaulis*), bok choy (*Brassica rapa subsp. chinensis*), thale cress (*Arabidopsis thaliana*), etc.), *Rosaceae* plants (strawberry, apple, pear, etc.), *Moraceae* plants (mulberry, etc.), *Malvaceae* plants (cotton, etc.), *Umbelliferae* plants (carrot, parsley, celery, etc.), *Liliaceae* plants (spring onion (*Allium fistulosum*), onion, asparagus, etc.), *Compositae* plants (burdock, sunflower, *Chrysanthemum morifolium*, *Garland chrysanthemum,* safflower, lettuce, etc.), *Ericaceae* plants (blueberry, etc.), *Vitaceae* plants (grape, etc.), *Rutaceae* plants (*Citrus unshiu*, lemon, *Citrus junos*, etc.), *Rubiaceae* plants (coffee tree, etc.), *Oleaceae* plants (olive, etc.), *Lauraceae* plants (avocado, etc.), and *Anacardiaceae* plants (mango, cashew nut tree, etc.). As the plant, one kind of plant or two or more kinds of plants may be targeted.

### <2> Active ingredients

### <2-1> Abscisic acid-like substance; ingredient (A)

The ingredient (A) is an abscisic acid-like substance.

The term "abscisic acid-like substance" collectively refers to abscisic acid (ABA) and abscisic acid alternatives.

Examples of abscisic acid include various isomers of abscisic acid. Specific examples of abscisic acid include (S)-(+)-abscisic acid and (R)-(-)-abscisic acid. Particular examples of abscisic acid include (S)-(+)-abscisic acid.

Abscisic acid may be, for example, (S)-(+)-abscisic acid, (R)-(-)-abscisic acid, or a combination of them. The ratio of (S)-(+)-abscisic acid and (R)-(-)-abscisic acid in the combination is not particularly limited. The ratio of (S)-(+)-abscisic acid and (R)-(-)-abscisic acid in the combination may be, for example, 20 to 80%, 30 to 70%, 40 to 60%, or 45 to 55% in terms of molar ratio. If (S)-(+)-abscisic acid or (R)-(-)-abscisic acid is chosen, it is sufficient that (S)-(+)-abscisic acid or (R)-(-)-abscisic acid is used as the active ingredient, and concomitant use of (R)-(-)-abscisic acid or (S)-(+)-abscisic acid is not excluded. In such a case, (R)-(-)-abscisic acid or (S)-(+)-abscisic acid concomitantly used (namely, one isomer not chosen as the active ingredient) is not regarded as the ingredient (A) (namely, it is regarded as an ingredient other than the active ingredients).

The term "abscisic acid alternative" may refer to a substance having a function similar to abscisic acid. The term "function similar to abscisic acid" may refer to a function of inducing environmental stress tolerance of a plant when the substance alone is applied to the plant. The abscisic acid alternative may have a function of conferring tolerance to one or more types of environmental stresses selected from the environmental stresses exemplified above to a plant. The abscisic acid alternative may further have another function, such as a function of closing stomata of a plant and a function of suppressing germination of a plant. Examples of the abscisic acid alternative include abscisic acid derivatives, abscisic acid agonists, and inhibitors of abscisic acid degradation. Examples of the abscisic acid derivatives include trifluoromethyl abscisic acid. For abscisic acid constituting the abscisic acid derivatives, the aforementioned descriptions concerning abscisic acid can be similarly applied. Examples of the abscisic acid agonists include pyrabactin, opabactin, and quinabactin. Examples of the inhibitors of abscisic acid degradation include P450 inhibitors.

If the abscisic acid-like substance can form a salt, the abscisic acid-like substance may be used as a free compound, a salt, or a combination of them. That is, the term "abscisic acid-like substance" may refer to an abscisic acid-like substance in the form of free compound, a salt thereof, or a combination of them, unless otherwise stated. The salt is not particularly limited, so long as it does not spoil the effect of the present invention. For example, examples of salts for acidic groups such as carboxyl group include ammonium salts, salts with alkali metals such as sodium and potassium, salts with alkaline earth metals such as calcium and magnesium, aluminum salts, zinc salts, salts with organic amines such as triethylamine, ethanolamine, morpholine, pyrrolidine, piperidine, piperazine, and dicyclohexylamine, and salts with basic amino acids such as arginine and lysine. Also, examples of salts for basic groups such as amino group include salts with inorganic acids such as hydrochloric acid, sulfuric acid, phosphoric acid, nitric acid, and hydrobromic acid, salts with organic carboxylic acids such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, and malic acid, and salts with organic sulfonic acid such as methanesulfonic acid, benzenesulfonic acid, and p-toluenesulfonic acid. As the salt, one kind of salt may be used, or two or more kinds of salts may be used in combination.

Also, if the abscisic acid-like substance can form a hydrate, the abscisic acid-like substance may be used as a non-hydrate, a hydrate, or a combination of them. That is, the term "abscisic acid-like substance" (for example, the term "abscisic acid-like substance in the form of free compound" or "salt of an abscisic acid-like substance") may include both non-hydrate and hydrate, unless otherwise stated.

The abscisic acid-like substance may be in any form such as the form of ion at the time of use.

As the abscisic acid-like substance, one kind of substance may be used, or two or more kinds of substances may be used in combination. If two or more kinds of ingredients are selected as the abscisic acid-like substance, the term "amount" or "concentration" of the abscisic acid-like substance (namely, the term "amount" or "concentration" of the ingredient (A)) may refer to the total amount or total concentration of the selected ingredients, unless otherwise stated.

As the abscisic acid-like substance, a commercial product may be used, or one obtained by an appropriate production method may be used. Methods for producing the abscisic acid-like substance are not particularly limited. The abscisic acid-like substance can be produced by, for example, a known method. Specifically, the abscisic acid-like substance can be produced by, for example, chemical synthesis, enzymatic reaction, fermentation, extraction, or a combination of those. The abscisic acid-like substance may be purified to a desired extent or may not be purified. That is, as the abscisic acid-like substance, a purified product may be used, or a material containing the abscisic acid-like substance may be used. Specific examples of the material containing the abscisic acid-like substance include, for example, fermentation products, such as culture broth, cells, and culture supernatant, obtained by culturing a microorganism having an ability to produce the abscisic acid-like substance; agricultural, fishery, and livestock products containing the abscisic acid-like substance; and processed products of these. Examples of the processed products include those obtained by subjecting such a material as mentioned above, such as the fermentation products, to concentration, dilution, drying, fractionation, extraction, purification, or the like. As the abscisic acid-like substance, for example, a material containing the abscisic acid-like substance in an amount of 1% (w/w) or higher, 5% (w/w) or higher, 10% (w/w) or higher, 30% (w/w) or higher, 50% (w/w) or higher, 70% (w/w) or higher, 90% (w/w) or higher, or 95% (w/w) or higher may be used.

### <2-2> Nitrogen-containing compound; ingredient (B)

The ingredient (B) is a nitrogen-containing compound.

Examples of the nitrogen-containing compound include amino acids, amino acid derivatives, and other nitrogen-containing compounds. Particular examples of the nitrogen-containing compound include amino acids and amino acid derivatives. As the nitrogen-containing compound, one kind of substance may be used, or two or more kinds of substances may be used in combination. As the nitrogen-containing compound, for example, either one or both of an amino acid and an amino acid derivative may be used. If two or more kinds of ingredients are selected as the nitrogen-containing compound, the term "amount" or "concentration" of the nitrogen-containing compound (namely, the term "amount" or "concentration" of the ingredient (B)) may refer to the total amount or total concentration of the selected ingredients, unless otherwise stated.

Examples of the amino acids include basic amino acids such as lysine, ornithine, arginine, histidine, citrulline, diaminobutanoic acid, and diaminopropanoic acid; aliphatic amino acids such as isoleucine, alanine, valine, leucine, and glycine; amino acids that are hydroxymonoaminocarboxylic acids such as threonine and serine; cyclic amino acids such as proline; aromatic amino acids such as phenylalanine, tyrosine, and tryptophan; sulfur-containing amino acids such as cysteine, cystine, and methionine; acidic amino acids such as glutamic acid and aspartic acid; and amino acids having an amide group on a side chain such as glutamine and asparagine. Examples of the amino acids also include norvaline, norleucine, alpha-aminobutyric acid, hydroxyproline, tert-leucine, and sarcosine. Particular examples of the amino acids include lysine, tryptophan, valine, arginine, histidine, glutamine, asparagine, leucine, glycine, and glutamic acid. More particular examples of the amino acids include lysine, tryptophan, and valine. More particular examples of the amino acids include lysine. In one embodiment, the amino acid may be selected from amino acids other than glutamic acid. In such a case, concomitant use of glutamic acid is not excluded. Also, in one embodiment, the amino acid may be selected from amino acids other than leucine, isoleucine, and phenylalanine. In such a case, concomitant use of leucine, isoleucine, and/or phenylalanine is not excluded. Also, in one embodiment, the amino acid may be selected from amino acids other than glutamic acid, leucine, isoleucine, and phenylalanine. In such a case, concomitant use of glutamic acid, leucine, isoleucine, and/or phenylalanine is not excluded.

The amino acid may be a D-isomer, L-isomer, or a combination of them, unless otherwise stated. The ratio of D-isomer and L-isomer in the combination is not particularly limited. The ratio of D-isomer or L-isomer in the combination may be, for example, 20 to 80%, 30 to 70%, 40 to 60%, or 45 to 55% in terms of molar ratio. The amino acid may be, especially, an L-isomer. If a D-isomer or L-isomer of an amino acid is chosen, it is sufficient that the D-isomer or L-isomer of the amino acid is used as the active ingredient, and concomitant use of the L-isomer or D-isomer of the amino acid is not excluded. In such a case, the L-isomer or D-isomer of the amino acid concomitantly used (namely, one isomer not chosen as the active ingredient) is not regarded as the ingredient (B) (namely, it is regarded as an ingredient other than the active ingredients).

The amino acid may be used as a free compound, a salt, or a combination of them. That is, the term "amino acid" may refer to an amino acid in the form of free compound, a salt thereof, or a combination of them, unless otherwise stated. The salt is not particularly limited, so long as it does not spoil the effect of the present invention. For the salt, the aforementioned descriptions concerning the salt of the abscisic acid-like substance can be similarly applied.

Also, if the amino acid can form a hydrate, the amino acid may be used as a non-hydrate, a hydrate, or a combination of them. That is, the term "amino acid" (for example, the term "amino acid in the form of free compound" or "salt of an amino acid") may include both non-hydrate and hydrate, unless otherwise stated.

The amino acid may be in any form such as the form of ion at the time of use.

As the amino acid, one kind of amino acid may be used, or two or more kinds of amino acids may be used in combination. If two or more kinds of ingredients are selected as the amino acid, the term "amount" or "concentration" of the amino acid may refer to the total amount or total concentration of the selected ingredients, unless otherwise stated.

As the amino acid, a commercial product may be used, or one obtained by an appropriate production method may be used. Methods for producing the amino acid are not particularly limited. The amino acid can be produced by, for example, a known method. Specifically, the amino acid can be produced by, for example, chemical synthesis, enzymatic reaction, fermentation, extraction, or a combination of those. The amino acid may be purified to a desired extent or may not be purified. That is, as the amino acid, a purified product may be used, or a material containing the amino acid may be used. Specific examples of the material containing the amino acid include, for example, fermentation products, such as culture broth, cells, and culture supernatant, obtained by culturing a microorganism having an ability to produce the amino acid; agricultural, fishery, and livestock products containing the amino acid; and processed products of these. Examples of the processed products include those obtained by subjecting such a material as mentioned above, such as the fermentation products, to concentration, dilution, drying, fractionation, extraction, purification, or the like. As the amino acid, for example, a material containing the amino acid in an amount of 1% (w/w) or higher, 5% (w/w) or higher, 10% (w/w) or higher, 30% (w/w) or higher, 50% (w/w) or higher, 70% (w/w) or higher, 90% (w/w) or higher, or 95% (w/w) or higher may be used.

Examples of the amino acid derivatives include a compound shown by the following general formula (I). The compound shown by the formula (I) can be a lysine derivative.

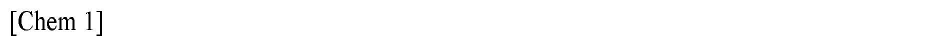

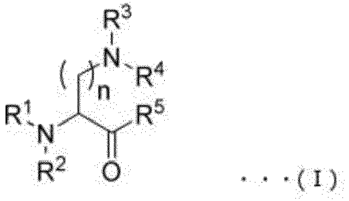

In the formula (I), "n" represents an integer of 1 to 4. In the formula (I), R1 to R4 each independently represent a hydrogen atom, an alkyl group that may be substituted, a cycloalkyl group that may be substituted, an aryl group that may be substituted, a heteroaryl group that may be substituted, an alkenyl group that may be substituted, an alkynyl group that may be substituted, an acyl group, a sulfo group, a sulfonyl group, an acylamino group, an acyloxy group, a carbamoyl group, or an amidino group, or at least some of R1 to R4 together form a substituent. In the formula (I), R5 represents a hydrogen atom, a hydroxyl group, an alkoxy group that may be substituted, an alkoxyaryl group that may be substituted, an amino group, an alkylamino group that may be substituted, or an arylamino group that may be substituted.

In the formula (I), "n" may be 1, 2, 3, or 4.

The terms "R1", "R2", "R3", "R4", and "R5" can be used interchangeably with the terms "R¹", "R²", "R³", "R⁴", and "R⁵", respectively.

In one embodiment, in the formula (I), R1 to R4 each independently may represent a hydrogen atom, an alkyl group, a cycloalkyl group, an aryl group, a heteroaryl group, an alkylaryl group, an arylalkyl group, an alkenyl group, an alkenylaryl group, an alkynyl group, an alkynylaryl group, an acyl group, a sulfo group, an acylamino group, an acyloxy group, a carbamoyl group, or an amidino group, or at least some of R1 to R4 may together form a substituent. In one embodiment, in the formula (I), R5 may represent a hydrogen atom, a hydroxyl group, an alkoxy group, an alkoxyaryl group, an amino group, an alkylamino group, or an arylamino group.

The phrase "at least some of R1 to R4 together form a substituent" may mean that any two Rs selected from R1 to R4 together form a substituent, or that any two Rs selected from R1 to R4 together form a substituent and the remaining two Rs also together form a substituent. Examples of the two Rs selected from R1 to R4 include a combination of R1 and R2 and a combination of R3 and R4. That is, for example, R1 and R2 may together form a substituent, or R3 and R4 may together form a substituent, or R1 and R2 may together form a substituent and R3 and R4 may together form a substituent. Examples of the substituent formed together by at least some of R1 to R4 include cyclic groups. A cyclic group may have a hetero atom. The cyclic group may have 1 to 3 hetero atoms. The term "hetero atom" refers to an atom other than carbon atom. Examples of the hetero atom include nitrogen atom and oxygen atom. If R1 and R2 together form a substituent, for example, a cyclic group containing a nitrogen atom bound to R1 and R2 may be formed. If R3 and R4 together form a substituent, for example, a cyclic group containing a nitrogen atom bound to R3 and R4 may be formed. Examples of the cyclic groups include cyclic imide groups. Examples of the cyclic imide groups include phthalimide group and quinazoline-2,4(1H,3H)-dione group. If two or more substituents are formed together (for example, if R1 and R2 together form a substituent and R3 and R4 together form a substituent), the types of the substituents are each independently chosen.

The term "functional group that may be substituted" collectively refers to a functional group that has been substituted and a functional group that has not been substituted. That is, for example, the term "alkyl group that may be substituted" collectively refers to an alkyl group that has been substituted and an alkyl group that has not been substituted. A functional group that has been substituted is also referred to as "substituted functional group", and a functional group that has not been substituted is also referred to as "unsubstituted functional group". That is, for example, an alkyl group that has been substituted is also referred to as "substituted alkyl group", and an alkyl group that has not been substituted is also referred to as "unsubstituted alkyl group". The term "functional group" without referring to substitution refers to a functional group that has not been substituted, unless otherwise stated. That is, for example, the term "alkyl group" without referring to substitution refers to an alkyl group that has not been substituted, unless otherwise stated. The term "carbon number" in a functional group that may be substituted refers to the carbon number of a functional group in the unsubstituted state regardless of the presence or absence of substitution (namely, the carbon number not including the carbon number of a substituent), unless otherwise stated. The descriptions concerning an unsubstituted functional group can be similarly applied to a moiety other than a substituent of a substituted functional group.

The phrase "a functional group has been substituted" means that one or more of hydrogen atoms constituting a functional group has been substituted with a substituent. The phrase "a functional group has been substituted" is also referred to as "a functional group has a substituent". The number of hydrogen atoms to be substituted with a substituent may be, for example, 1 to 5, 1 to 4, 1 to 3, or 1 to 2. The number of hydrogen atoms to be substituted with a substituent may be, specifically, for example, 1, 2, 3, 4, or 5. The number of hydrogen atoms to be substituted with a substituent may also be read as the number of substituents possessed by a functional group. If two or more hydrogen atoms are substituted with a substituent, the substituent is independently selected for each hydrogen atom. Examples of the hydrogen atoms to be substituted with a substituent include a hydrogen atom bound to a carbon atom, a hydrogen atom bound to a nitrogen atom, and a hydrogen atom bound to an oxygen atom. The hydrogen atom bound to a carbon atom may or may not be a hydrogen atom bound to a terminal carbon atom. The term "terminal carbon atom" in R1 to R4 refers to a carbon atom at a terminus opposite to "N" to which R1 to R4 each are bound. The term "terminal carbon atom" in R5 refers to a carbon atom at a terminus opposite to "C=O" to which R5 is bound. If a carbon chain is branched, the terminus may be the terminus of any branch.

Examples of substituents possessed by a substituted alkyl group, substituted cycloalkyl group, substituted alkenyl group, or substituted alkynyl group as R1 to R4 include halogen atoms, hydroxyl group, amino group, carboxyl group, aryl groups that may be substituted, and heteroaryl groups that may be substituted. Examples of substituents possessed by a substituted aryl group or a substituted heteroaryl group in the substituted alkyl group, substituted cycloalkyl group, substituted alkenyl group, or substituted alkynyl group as R1 to R4 include halogen atoms, hydroxyl group, amino group, carboxyl group, and alkyl groups.

Examples of substituents possessed by a substituted aryl group or substituted heteroaryl group as R1 to R4 include halogen atoms, hydroxyl group, amino group, carboxyl group, and alkyl groups that may be substituted. Examples of substituents possessed by a substituted alkyl group in the substituted aryl group or substituted heteroaryl group as R1 to R4 include halogen atoms, hydroxyl group, amino group, carboxyl group, aryl groups, and heteroaryl groups.

Examples of substituents possessed by a substituted alkoxy group as R5 include halogen atoms, hydroxyl group, amino group, carboxyl group, aryl groups that may be substituted, and heteroaryl groups that may be substituted. Examples of substituents possessed by a substituted aryl group or substituted heteroaryl group in the substituted alkoxy group as R5 include halogen atoms, hydroxyl group, amino group, carboxyl group, and alkyl groups.

Examples of substituents possessed by a substituted alkylamino group as R5 include halogen atoms, hydroxyl group, amino group, carboxyl group, aryl groups that may be substituted, heteroaryl groups that may be substituted, and N-alkyl groups that may be substituted. The term "N-alkyl group" in a substituted alkylamino group refers to an alkyl group substituting a hydrogen atom of an amino group. Examples of substituents possessed by a substituted aryl group or substituted heteroaryl group in the substituted alkylamino group as R5 include halogen atoms, hydroxyl group, amino group, carboxyl group, and alkyl groups. Examples of substituents possessed by a substituted N-alkyl group in the substituted alkylamino group as R5 include halogen atoms, hydroxyl group, amino group, carboxyl group, aryl groups, and heteroaryl groups.

Examples of substituents possessed by a substituted arylamino group as R5 include halogen atoms, hydroxyl group, amino group, carboxyl group, and alkyl groups that may be substituted. Examples of substituents possessed by a substituted alkyl group in the substituted arylamino group as R5 include halogen atoms, hydroxyl group, amino group, carboxyl group, aryl groups, and heteroaryl groups.

Examples of the halogen atoms include fluorine atom, chlorine atom, bromine atom, and iodine atom.

Examples of the alkyl groups include alkyl groups having a carbon number of 1 to 12. Particular examples of the alkyl groups include alkyl groups having a carbon number of 1 to 6. More particular examples of examples of the alkyl groups include alkyl groups having a carbon number of 1 to 4. An alkyl group may be linear or branched. Specific examples of the alkyl groups include methyl group, ethyl group, isopropyl group, butyl group, n-butyl group, isobutyl group, sec-butyl group, t-butyl group, pentyl group, isopentyl group, 2,3-dimethylpropyl group, and hexyl group.

Examples of the cycloalkyl groups include cyclic alkyl groups having a carbon number of 3 to 8. Particular examples of the cycloalkyl groups include cyclic alkyl groups having a carbon number of 4 to 6. Specific examples of the cycloalkyl groups include cyclopropyl group, cyclobutyl group, cyclopentyl group, cyclohexyl group, cycloheptyl group, and cyclooctyl group.

Examples of the alkenyl groups include alkenyl groups having a carbon number of 2 to 6. An alkenyl group may be linear or branched. Specific examples of the alkenyl groups include vinyl group, allyl group, propenyl group, butenyl group, butadienyl group, pentenyl group, pentadienyl group, hexenyl group, and hexadienyl group.

Examples of the alkynyl groups include alkynyl groups having a carbon number of 2 to 6. An alkynyl group may be linear or branched. Specific examples of the alkynyl groups include ethynyl group, 1-propynyl group, 2-propynyl group, 2-butynyl group, 3-butynyl group, and pentynyl group.

Examples of the aryl groups include aryl groups having a carbon number of 6 to 14. Particular examples of the aryl groups include aryl groups having a carbon number of 6 to 10. Specific examples of the aryl groups include phenyl group, naphthyl group, and fluorenyl group.

The term "heteroaryl group" refers to an aryl group having at least one kind of heteroatom selected from nitrogen, oxygen, and sulfur atoms as atom(s) constituting a ring. Examples of the heteroaryl groups include heteroaryl groups having a carbon number of 3 to 14. Particular examples of the heteroaryl groups include heteroaryl groups having a carbon number of 4 to 10. More particular examples of the heteroaryl groups include heteroaryl groups having a carbon number of 4 to 9. Specific examples of the heteroaryl groups include furanyl group, pyrrolyl group, oxazolyl group, imidazolyl group, pyrazolyl group, pyranyl group, indenyl group, thiophenyl group, pyridinyl group, indolyl group, and quinolinyl group.

Examples of the alkoxy groups include alkoxy groups having a carbon number of 1 to 6. Particular examples of the alkoxy groups include alkoxy groups having a carbon number of 1 to 3. An alkoxy group may be linear or branched. Specific examples of the alkoxy groups include methoxy group, ethoxy group, 1-propoxy group, 2-propoxy group, n-butoxy group, i-butoxy group, sec-butoxy group, tert-butoxy group, 1-pentyloxy group, 2-pentyloxy group, 3-pentyloxy group, 2-methyl-1-butyloxy group, 3-methyl-1-butyloxy group, 2-methyl-2-butyloxy group, 3-methyl-2-butyloxy group, 2,2-dimethyl-1-propyloxy group, 1-hexyloxy group, 2-hexyloxy group, and 3-hexyloxy group.

Specific examples of the substituted alkyl group include arylalkyl groups that may be substituted (namely, arylalkyl groups and substituted arylalkyl groups). For aryl groups, alkyl groups, and substituents constituting the arylalkyl groups or substituted arylalkyl groups, the aforementioned descriptions concerning the aryl groups, alkyl groups, and substituents can be similarly applied, respectively. Specific examples of the substituted arylalkyl groups include alkyl groups substituted with an aryl group that may be substituted. Specific examples of the alkyl groups substituted with an aryl group that may be substituted include diphenyltolylmethyl group.

Specific examples of the substituted aryl group include alkylaryl groups that may be substituted (namely, alkylaryl groups and substituted alkylaryl groups). For alkyl groups, aryl groups, and substituents constituting the alkylaryl groups or substituted alkylaryl groups, the aforementioned descriptions concerning the alkyl groups, aryl groups, and substituents can be similarly applied, respectively. Specific examples of the alkylaryl groups that may be substituted include methylphenyl groups (for example, 2-, 3-, or 4-methylphenyl group).

Specific examples of the substituted aryl group include alkenylaryl groups that may be substituted (namely, alkenylaryl groups and substituted alkenylaryl groups). For alkenyl groups, aryl groups, and substituents constituting the alkenylaryl groups or substituted alkenylaryl groups, the aforementioned descriptions concerning the alkenyl groups, aryl groups, and substituents can be similarly applied, respectively.

Specific examples of the substituted aryl group include alkynylaryl groups that may be substituted (namely, alkynylaryl groups and substituted alkynylaryl groups). For alkynyl groups, aryl groups, and substituents constituting the alkynylaryl groups or substituted alkynylaryl groups, the aforementioned descriptions concerning the alkynyl groups, aryl groups, and substituents can be similarly applied, respectively.

Specific examples of the substituted aryl group include alkoxyaryl groups that may be substituted (namely, alkoxyaryl groups and substituted alkoxyaryl groups). For alkoxy groups, aryl groups, and substituents constituting the alkoxyaryl groups or substituted alkoxyaryl groups, the aforementioned descriptions concerning the alkoxy groups, aryl groups, and substituents can be similarly applied, respectively. Specific examples of the alkoxyaryl groups that may be substituted include methoxyphenyl groups (for example, 2-, 3-, or 4-methoxyphenyl group).

Specific examples of the substituted aryl group also include hydroxyphenyl groups (for example, 2-, 3-, or 4-hydroxyphenyl group), chlorophenyl groups (for example, 2-, 3-, or 4-chlorophenyl group), dichlorophenyl groups (for example, 2,5-dichlorophenyl group), fluorophenyl groups (for example, 2-, 3-, or 4-chlorophenyl group), and 2,3-dihydroxyindenyl group.

Specific examples of the substituted alkoxy group include arylalkoxy groups that may be substituted (namely, arylalkoxy groups and substituted arylalkoxy groups). For aryl groups, alkoxy groups, and substituents constituting the arylalkoxy groups or substituted arylalkoxy groups, the aforementioned descriptions concerning the aryl groups, alkoxy groups, and substituents can be similarly applied, respectively. Specific examples of the arylalkoxy groups that may be substituted include phenylmethoxy group.

Specific examples of the substituted alkoxy group also include hydroxyalkyl groups (for example, hydroxyethoxy group) and trifluoromethoxy group.

For alkyl groups and substituents constituting the alkylamino group that may be substituted (namely, an alkylamino group and substituted alkylamino group), the aforementioned descriptions concerning the alkyl groups and substituents can be similarly applied, respectively. For example, the aforementioned carbon number of alkyl groups (for example, 1 to 12, or 1 to 6) may be read as the carbon number (not including the carbon number of substituents) of the alkylamino group that may be substituted. Specific examples of the substituted alkylamino group include carboxyalkylamino groups that may be substituted (namely, carboxyalkylamino groups and substituted carboxyalkylamino groups). The carbon number (not including the carbon number of a substituent) of the carboxyalkylamino groups that may be substituted may be, for example, 2 to 13, or 2 to 7. Specific examples of the carboxyalkylamino groups include carboxymethylamino group and 1-methylcarboxymethylamino group. Specific examples of the substituted carboxyalkylamino groups include carboxyalkylamino groups substituted with hydroxyl group, amino group, carboxyl group, phenyl group, indolyl group, or N-methyl group. More specific examples of the substituted carboxyalkylamino groups include 1-(aminobutyl)carboxymethylamino, 1-methylcarboxymethylamino, 1-(indolylmethyl)carboxymethylamino, 1-(carboxymethyl) carboxymethylamino, 1-(1-hydroxyethyl)carboxymethylamino, 1-(hydroxymethyl)carboxymethylamino, 1-isobutylcarboxymethylamino, 1-benzylcarboxymethylamino, and N-methylcarboxymethylamino.

For aryl groups and substituents constituting the arylamino group that may be substituted (namely, an arylamino group and substituted arylamino group), the aforementioned descriptions concerning the aryl groups and substituents can be similarly applied, respectively.

Examples of the acyl group include alkylcarbonyl groups that may be substituted (namely, alkylcarbonyl groups and substituted alkylcarbonyl groups), cycloalkylcarbonyl groups that may be substituted (namely, cycloalkylcarbonyl groups and substituted cycloalkylcarbonyl groups), alkenylcarbonyl groups that may be substituted (namely, alkenylcarbonyl groups and substituted alkenylcarbonyl groups), arylcarbonyl groups that may be substituted (namely, arylcarbonyl groups and substituted arylcarbonyl groups), and alkoxycarbonyl groups that may be substituted (namely, alkoxycarbonyl groups and substituted alkoxycarbonyl groups). For alkyl groups, cycloalkyl groups, alkenyl groups, aryl groups, alkoxy groups, and substituents constituting the acyl group, the aforementioned descriptions concerning the alkyl groups, cycloalkyl groups, alkenyl groups, aryl groups, alkoxy groups, and substituents can be similarly applied, respectively. The carbon number of the acyl group may be dependent on the carbon numbers of functional group(s) and substituent(s). The carbon number of the acyl group may be, for example, 1 to 20. Specific examples of the acyl group include arylalkylcarbonyl groups that may be substituted (namely, arylalkylcarbonyl groups and substituted arylalkylcarbonyl groups), arylalkoxycarbonyl groups that may be substituted (namely, arylalkoxycarbonyl groups and substituted arylalkoxycarbonyl groups), and aminoalkylcarbonyl groups that may be substituted (namely, aminoalkylcarbonyl groups and substituted aminoalkylcarbonyl groups). More specific examples of the acyl group include acetyl group, propionyl group, butyryl group, isobutyryl group, valeryl group, isovaleryl group, pivaloyl group, pentanoyl group, isopentanoyl group, hexanoyl group, isohexanoyl group, acryloyl group, methacryloyl group, crotonoyl group, isocrotonoyl group, phenylacryloyl group, cyclopropanoyl group, cyclobutanoyl group, cyclopentanoyl group, cyclohexanoyl group, benzoyl group, naphthylacetyl group, phenylpropionyl group, indolylacetylmethoxycarbonyl group, ethoxycarbonyl group, propoxycarbonyl group, isopropoxycarbonyl group, butoxycarbonyl group, isobutoxycarbonyl group, sec-butoxycarbonyl group, tert-butoxycarbonyl group, phenylmethoxycarbonyl group, 9-fluorenylmethyloxycarbonyl group, 3-methylphenyloxyacetyl group, 3-chlorophenylmethoxycarbonyl group, trifluoromethoxycarbonyl group, 2,5-dichlorobenzoyl group, (4-methylphenyl)acetyl group, (4-chlorophenyl)acetyl group, (4-hydroxyphenyl)acetyl group, (2-methoxyphenyl)acetyl group, (4-methoxyphenyl)acetyl group, 2-hydroxy-3-phenylpropionyl group, 2-aminopropionyl group, 2-aminoisohexanoyl group, 2-amino- 3-indolylpropionyl group, 2-amino-3-carboxypropionyl group, 2-amino-5-guanidinopentyl group, 2-amino-3-hydroxybutanoyl group, 2-amino-3-phenylpropionyl group, 2-amino-3-(4-hydroxyphenyl)propionyl group, 2-amino-3-(4-methoxyphenyl)propionyl group, and 2-amino-3-(4-fluorophenyl)propionyl group. Particular examples of the acyl group include tert-butoxycarbonyl group and phenylmethoxycarbonyl group. Examples of the acyl group also include abscisyl group (an acyl group corresponding to abscisic acid).

Examples of the sulfonyl group include alkylsulfonyl groups that may be substituted (namely, alkylsulfonyl groups and substituted alkylsulfonyl groups), cycloalkylsulfonyl groups that may be substituted (namely, cycloalkylsulfonyl groups and substituted cycloalkylsulfonyl groups), alkenylsulfonyl groups that may be substituted (namely, alkenylsulfonyl groups and substituted alkenylsulfonyl groups), arylsulfonyl groups that may be substituted (namely, arylsulfonyl groups and substituted arylsulfonyl groups), and alkoxysulfonyl groups that may be substituted (namely, alkoxysulfonyl groups and substituted alkoxysulfonyl groups). For alkyl groups, cycloalkyl groups, alkenyl groups, aryl groups, alkoxy groups, and substituents constituting the sulfonyl group, the aforementioned descriptions concerning the alkyl groups, cycloalkyl groups, alkenyl groups, aryl groups, alkoxy groups, and substituents can be similarly applied, respectively. Specific examples of the sulfonyl group include (4-methylphenyl) sulfonyl group.

The term "acylamino group" refers to a group corresponding to an acyl group in which an amino group is bound to the carbon atom of the carbonyl group moiety. For an acyl group constituting the acylamino group, the aforementioned descriptions concerning the acyl group can be similarly applied.

The term "acyloxy group" refers to a group corresponding to an acyl group in which an oxygen atom is bound to the carbon atom of the carbonyl group moiety. For an acyl group constituting the acyloxy group, the aforementioned descriptions concerning the acyl group can be similarly applied. Examples of the acyloxy group include acetyloxy group, propionyloxy group, butyryloxy group, benzoyloxy group.

Specific examples of R1 to R5 include R1 to R5 of the compounds shown by the formulas (I-1) to (I-91) described later, respectively. A compound shown by the formula (X) is also referred to as "compound X". That is, for example, the term "compound 1-1" refers to the compound shown by the formula (I-1).

Specific examples of combinations of R1 to R5 include the combinations of R1 to R5 of the compound I-1 to compound I-91. In one embodiment, the combinations of R1 to R5 of the compounds Nos. 7, 11, 25, 28, and 51 of Tables 2 to 7 may be excluded from the combinations of R1 to R5.

The compound shown by the formula (I) may satisfy one or more conditions selected from the following (1) to (7):
(1) the R1 and R3 are hydrogen atoms;
(2) the R1 to R4 are hydrogen atoms;
(3) the R2 and R4 are each independently an acyl group having a carbon number of 1 to 20;
(4) one of the R2 and R4 is a hydrogen atom and the other is an acyl group having a carbon number of 1 to 20;
(5) the R1 is a hydrogen atom and one or each of the R3 and R4 is an alkyl group that may be substituted, the alkyl group having a carbon number of 1 to 6;
(6) the R5 is an alkoxy group that may be substituted, the alkoxy group having a carbon number of 1 to 6;
(7) the R5 is an amino group or an alkylamino group that may be substituted, the alkylamino group having a carbon number of 1 to 6.

The compound shown by the formula (I), for example, may satisfy one or more conditions selected from the aforementioned (1) to (5) for the R1 to R4, and may satisfy the aforementioned condition (6) or (7) for the R5.

The compound shown by the formula (I), for example, may satisfy a combination of the aforementioned conditions (1) and (3) or a combination of the aforementioned conditions (1) and (4) for the R1 to R4.

Specific examples of the compound shown by the formula (I) include the compound I-1 to compound I-91. More specific examples of the compound shown by the formula (I) include the compound I-1 to compound I-52 and the compound I-53 to compound I-91. The compound I-1 to compound I-52 correspond to the compounds Nos. 1 to 6, 8 to 10, 12 to 24, 26, 27, 29 to 50, and 52 to 57 of Tables 2 to 7. The structures of the compound I-1 to compound I-52 are shown in the following formulas (I-1) to (I-52), respectively. The structures of the compound I-53 to compound I-91 are shown in the formulas (I-53) to (I-91) described later, respectively. In one embodiment, the compounds Nos. 7, 11, 25, 28, and 51 of Tables 2 to 7 may be excluded from the compound shown by the formula (I).

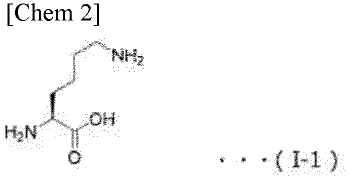

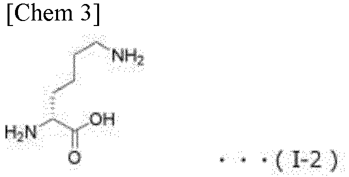

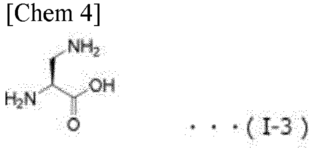

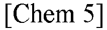

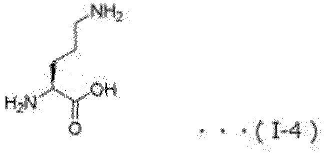

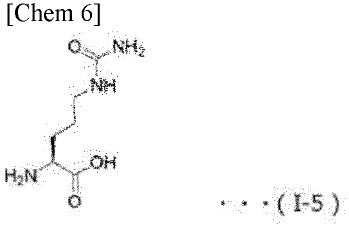

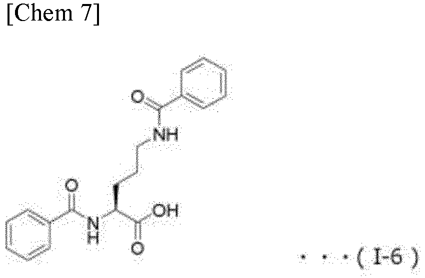

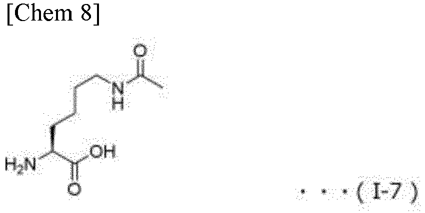

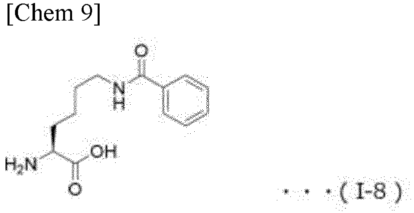

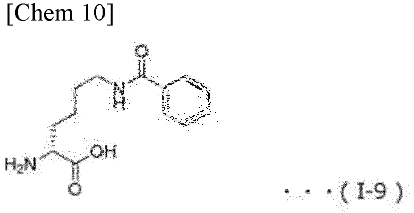

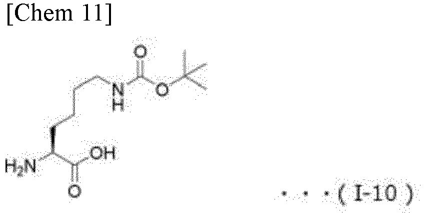

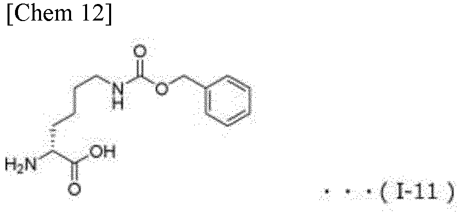

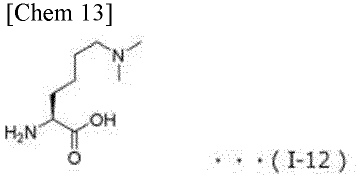

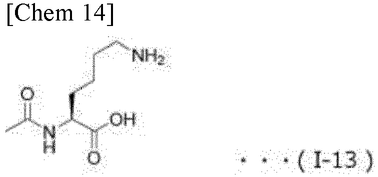

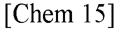

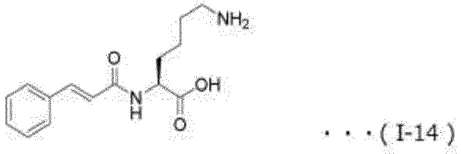

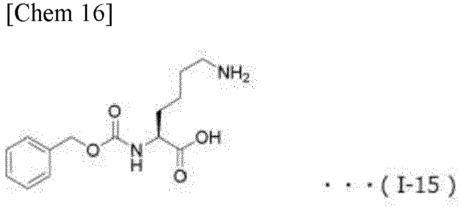

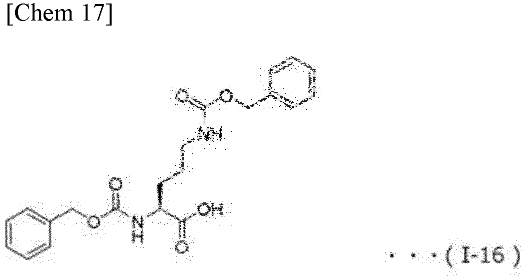

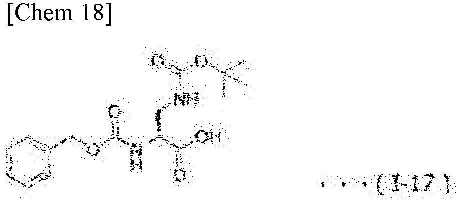

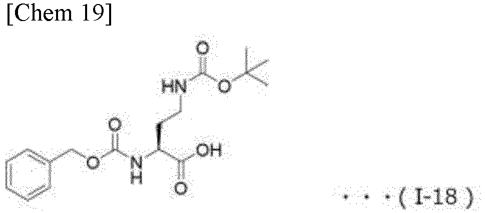

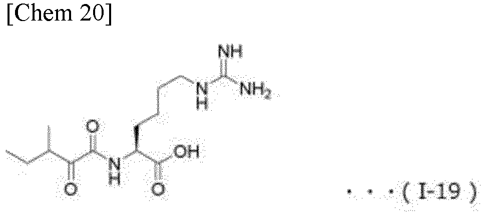

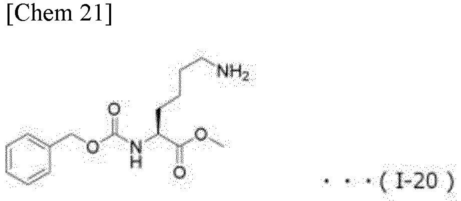

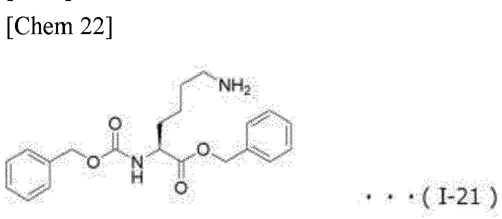

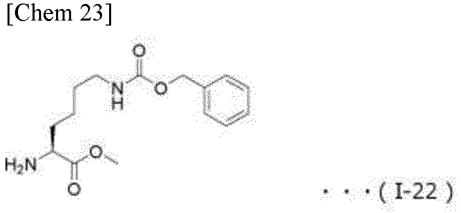

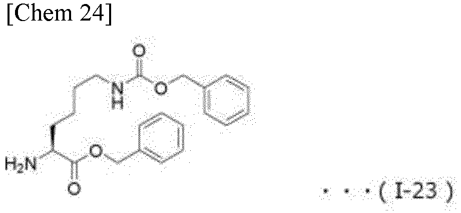

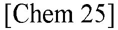

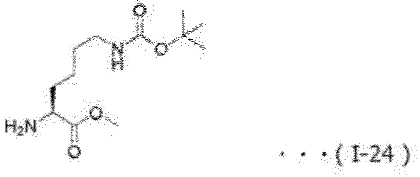

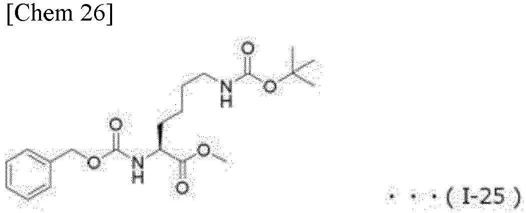

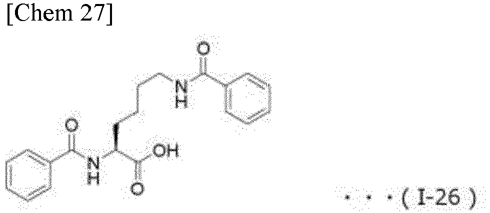

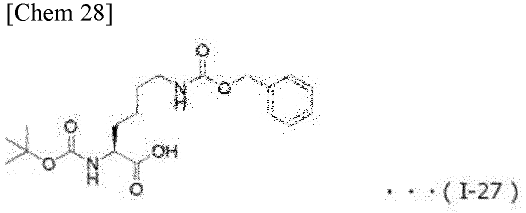

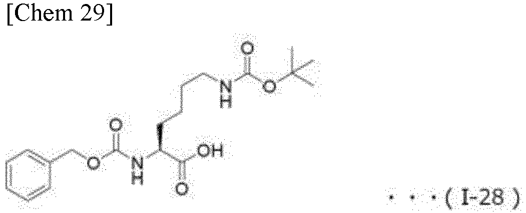

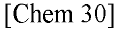

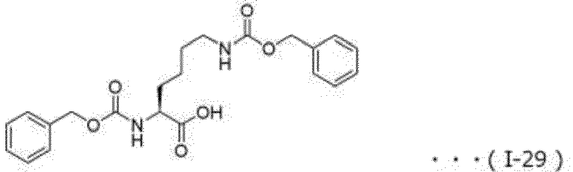

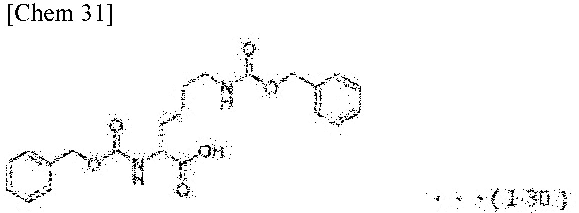

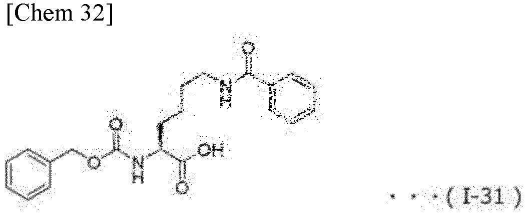

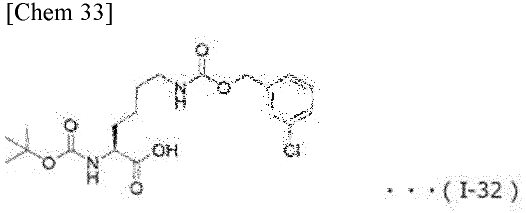

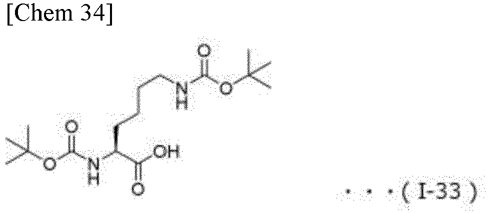

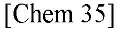

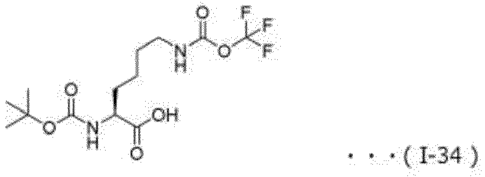

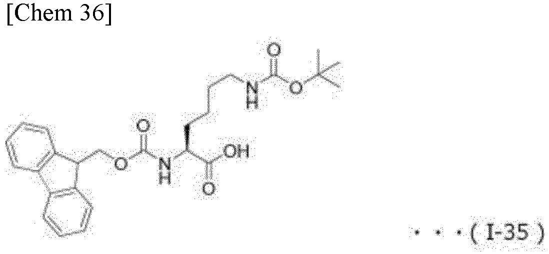

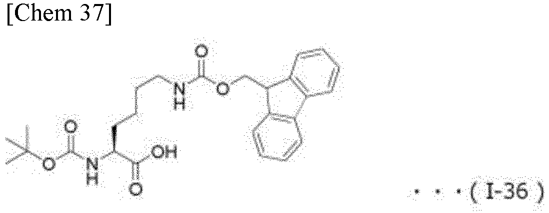

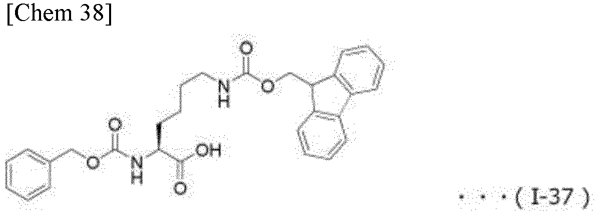

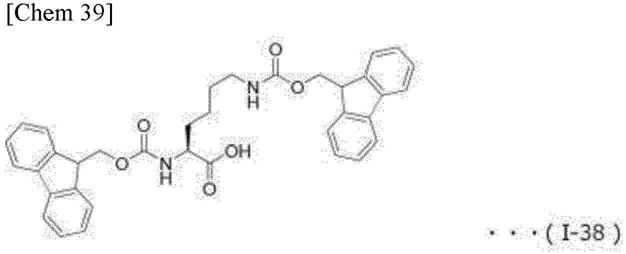

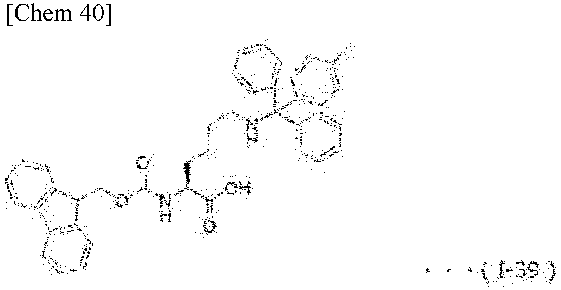

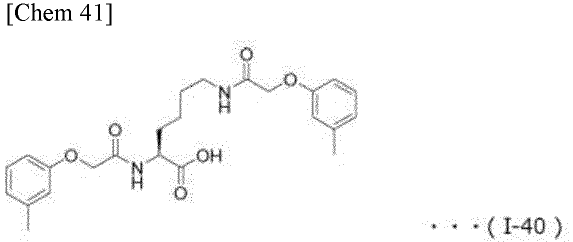

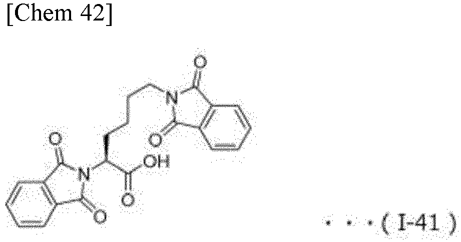

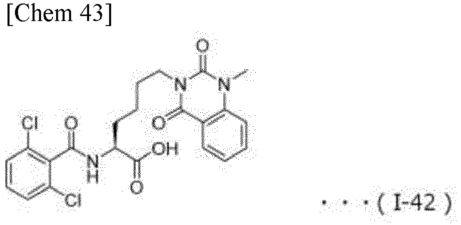

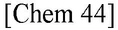

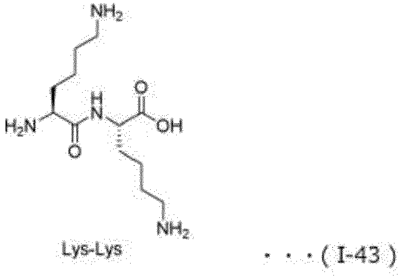

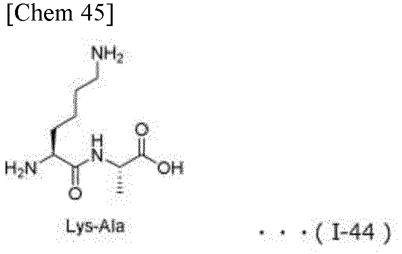

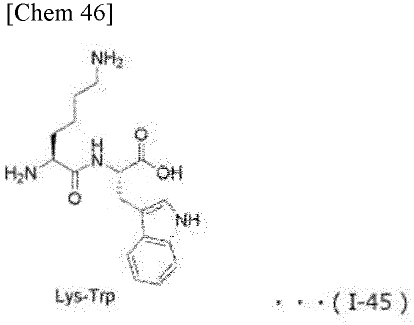

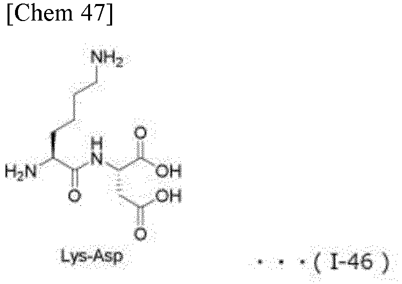

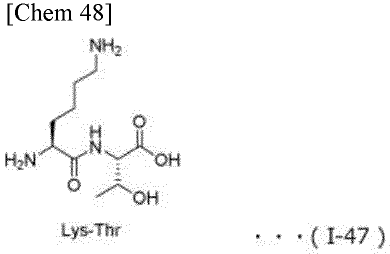

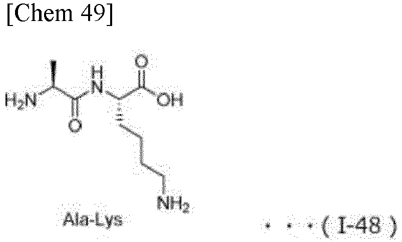

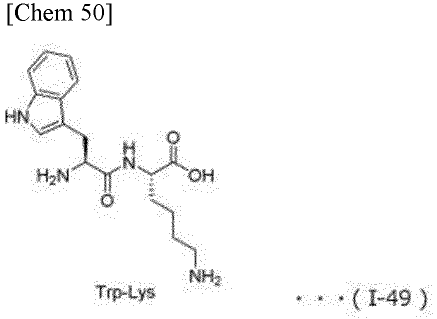

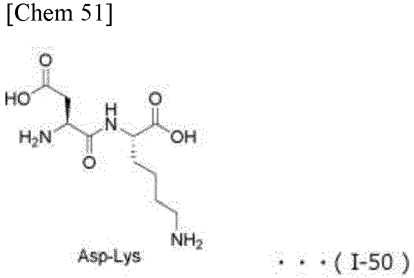

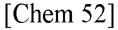

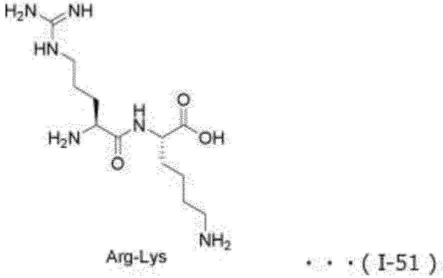

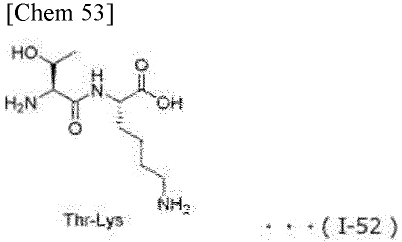

Examples of the amino acid derivatives also include the compound AD-1 to compound AD-4. The structures of the compound AD-1 to compound AD-4 are shown in the formulas (AD-1) to (AD-4) described later, respectively.

Examples of the amino acid derivatives also include peptides. Examples of the peptides include dipeptides and tripeptides. Particular examples of the peptides include dipeptides. For amino acids constituting the peptides, the aforementioned descriptions concerning the amino acid can be similarly applied. A peptide may contain, for example, at least one lysine residue. That is, for example, examples of the dipeptides include a dipeptide of lysine and lysine and a dipeptide of lysine and another amino acid. Specific examples of the dipeptides include the compound I-43 to compound I-52. Particular examples of the dipeptides include Ala-Lys, Arg-Lys, Thr-Lys, Asp-Lys, Trp-Lys, and Lys-Asp. A peptide such as a dipeptide may fall within the compound shown by the formula (I).

If the amino acid derivative can form a salt, the amino acid derivative may be used as a free compound, a salt, or a combination of them. That is, the term "amino acid derivative" may refer to an amino acid derivative in the form of free compound, a salt thereof, or a combination of them, unless otherwise stated. The salt is not particularly limited, so long as it does not spoil the effect of the present invention. For the salt, the aforementioned descriptions concerning the salt of the abscisic acid-like substance can be similarly applied.

Also, if the amino acid derivative can form a hydrate, the amino acid derivative may be used as a non-hydrate, a hydrate, or a combination of them. That is, the term "amino acid derivative" (for example, the term "amino acid derivative in the form of free compound" or "salt of an amino acid derivative") may include both non-hydrate and hydrate, unless otherwise stated.

The amino acid derivative may be in any form such as the form of ion at the time of use.

As the amino acid derivative, one kind of amino acid derivative may be used, or two or more kinds of amino acid derivatives may be used in combination. If two or more kinds of ingredients are selected as the amino acid derivative, the term "amount" or "concentration" of the amino acid derivative may refer to the total amount or total concentration of the selected ingredients, unless otherwise stated.

As the amino acid derivative, a commercial product may be used, or one obtained by an appropriate production method may be used. Methods for producing the amino acid derivative are not particularly limited. The amino acid derivative can be produced by, for example, a known method. Specifically, the amino acid derivative can be produced by, for example, chemical synthesis, enzymatic reaction, fermentation, extraction, or a combination of those. More specifically, the amino acid derivative can be produced by, for example, the methods described in the Synthesis examples described later. The amino acid derivative may be purified to a desired extent or may not be purified. That is, as the amino acid derivative, a purified product may be used, or a material containing the amino acid derivative may be used. Specific examples of the material containing the amino acid derivative include, for example, fermentation products, such as culture broth, cells, and culture supernatant, obtained by culturing a microorganism having an ability to produce the amino acid derivative; agricultural, fishery, and livestock products containing the amino acid derivative; and processed products of these. Examples of the processed products include those obtained by subjecting such a material as mentioned above, such as the fermentation products, to concentration, dilution, drying, fractionation, extraction, purification, or the like. As the amino acid derivative, for example, a material containing the amino acid derivative in an amount of 1% (w/w) or higher, 5% (w/w) or higher, 10% (w/w) or higher, 30% (w/w) or higher, 50% (w/w) or higher, 70% (w/w) or higher, 90% (w/w) or higher, or 95% (w/w) or higher may be used.

Examples of the nitrogen-containing compound also include a compound shown by the following general formula (II).

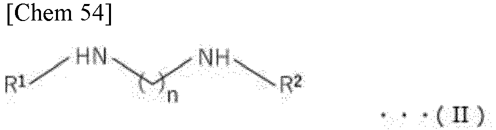

In the formula (II), "n" represents an integer of 2 to 5. In the formula (II), R1 and R2 each independently represent a hydrogen atom or an acyl group.

For the acyl group in the formula (II), the aforementioned descriptions concerning the acyl group in the formula (I) can be similarly applied. The acyl group in the formula (II) may be, for example, an arylcarbonyl group.

Specific examples of the compound shown by the formula (II) include the compound II-1 and compound II-2. The structures of the compound II-1 and compound II-2 are shown in the formulas (II-1) and (II-2) described later, respectively.

If the compound shown by the formula (II) can form a salt, the compound shown by the formula (II) may be used as a free compound, a salt, or a combination of them. That is, the term "compound shown by the formula (II)" may refer to a compound shown by the formula (II) in the form of free compound, a salt thereof, or a combination of them, unless otherwise stated. The salt is not particularly limited, so long as it does not spoil the effect of the present invention. For the salt, the aforementioned descriptions concerning the salt of the abscisic acid-like substance can be similarly applied.

Also, if the compound shown by the formula (II) can form a hydrate, the compound shown by the formula (II) may be used as a non-hydrate, a hydrate, or a combination of them. That is, the term "compound shown by the formula (II)" (for example, the term "compound shown by the formula (II) in the form of free compound" or "salt of a compound shown by the formula (II)") may include both non-hydrate and hydrate, unless otherwise stated.

The compound shown by the formula (II) may be in any form such as the form of ion at the time of use.

As the compound shown by the formula (II), one kind of compound may be used, or two or more kinds of compounds may be used in combination. If two or more kinds of ingredients are selected as the compound shown by the formula (II), the term "amount" or "concentration" of the compound shown by the formula (II) may refer to the total amount or total concentration of the selected ingredients, unless otherwise stated.

As the compound shown by the formula (II), a commercial product may be used, or one obtained by an appropriate production method may be used. Methods for producing the compound shown by the formula (II) are not particularly limited. The compound shown by the formula (II) can be produced by, for example, a known method. Specifically, the compound shown by the formula (II) can be produced by, for example, chemical synthesis, enzymatic reaction, fermentation, extraction, or a combination of those. More specifically, the compound shown by the formula (II) can be produced by, for example, the methods described in the Synthesis examples described later. The compound shown by the formula (II) may be purified to a desired extent or may not be purified. That is, as the compound shown by the formula (II), a purified product may be used, or a material containing the compound shown by the formula (II) may be used. Specific examples of the material containing the compound shown by the formula (II) include, for example, fermentation products, such as culture broth, cells, and culture supernatant, obtained by culturing a microorganism having an ability to produce the compound shown by the formula (II); agricultural, fishery, and livestock products containing the compound shown by the formula (II); and processed products of these. Examples of the processed products include those obtained by subjecting such a material as mentioned above, such as the fermentation products, to concentration, dilution, drying, fractionation, extraction, purification, or the like. As the compound shown by the formula (II), for example, a material containing the compound shown by the formula (II) in an amount of 1% (w/w) or higher, 5% (w/w) or higher, 10% (w/w) or higher, 30% (w/w) or higher, 50% (w/w) or higher, 70% (w/w) or higher, 90% (w/w) or higher, or 95% (w/w) or higher may be used.

### <2-3> Condensate of ingredients (A) and (B)

The ingredients (A) and (B) may form a condensate, namely, a condensate of the ingredients (A) and (B). A condensate of the ingredients (A) and (B) is also referred to as "A-B condensate". The A-B condensate may be deemed to fall within both the ingredients (A) and (B). The term "ingredient (A)" may also include those formed a condensate with the ingredient (B). The term "ingredient (B)" may also include those formed a condensate with the ingredient (A). The A-B condensate may be used alone as the active ingredient, or may be used in combination with the ingredient (A) and/or the ingredient (B). In other words, a part or the whole of the active ingredients may be the A-B condensate. Also, in other words, a part or the whole of the ingredient (A) may form a condensate with a part or the whole of the ingredient (B). Also, in other words, a part or the whole of the ingredient (B) may form a condensate with a part or the whole of the ingredient (A).

Specific examples of the A-B condensate include a condensate of abscisic acid and an amino acid. A condensate of abscisic acid and an amino acid is also referred to as "ABA-AA condensate". For the abscisic acid and amino acid constituting the ABA-AA condensate, the aforementioned descriptions concerning the abscisic acid and amino acid as the active ingredients can be similarly applied. Particular examples of the ABA-AA condensate include a condensate of abscisic acid and lysine. Particular examples of the condensate of abscisic acid and lysine include a condensate of abscisic acid and L-lysine and a condensate of (S)-(+)-abscisic acid and lysine. More particular examples of the condensate of abscisic acid and lysine include a condensate of (S)-(+)-abscisic acid and L-lysine. The term "ABA-AA condensate" may refer to a compound in which a carboxyl group of abscisic acid and an amino group of an amino acid are bound by an amide bond. If the amino acid has two or more amino groups, any amino group may be used for condensation with abscisic acid. For example, an alpha amino group may be used for condensation with abscisic acid, or an epsilon amino group may be used for condensation with abscisic acid.

If the A-B condensate can form a salt, the A-B condensate may be used as a free compound, a salt, or a combination of them. That is, the term "A-B condensate" may refer to an A-B condensate in the form of free compound, a salt thereof, or a combination of them, unless otherwise stated. The salt is not particularly limited, so long as it does not spoil the effect of the present invention. For the salt, the aforementioned descriptions concerning the salt of the abscisic acid-like substance can be similarly applied.

Also, if the A-B condensate can form a hydrate, the A-B condensate may be used as a non-hydrate, a hydrate, or a combination of them. That is, the term "A-B condensate" (for example, "A-B condensate in the form of free compound" or "salt of A-B condensate") may include both non-hydrate and hydrate, unless otherwise stated.

The A-B condensate may be in any form such as the form of ion at the time of use.

As the A-B condensate, one kind of A-B condensate may be used, or two or more kinds of A-B condensates may be used in combination.

Methods for producing the A-B condensate are not particularly limited. The A-B condensate can be produced by, for example, condensation of the ingredients (A) and (B). The A-B condensate may be purified to a desired extent or may not be purified. That is, as the A-B condensate, a purified product may be used, or a material containing the A-B condensate may be used.

The present invention also discloses the A-B condensate as a novel substance. The use purpose of the A-B condensate is not particularly limited. The A-B condensate can be used, for example, as the active ingredients for induction of environmental stress tolerance of a plant.

### <3> Composition of the present invention

The composition of the present invention is a composition containing the active ingredients (namely, the aforementioned ingredients (A) and (B)).

If the composition of the present invention contains an ingredient that falls within both the ingredients (A) and (B) (for example, the A-B condensate), this ingredient serves as both the ingredients (A) and (B) in the composition of the present invention. That is, if the composition of the present invention contains an ingredient that falls within both the ingredients (A) and (B), the composition of the present invention may or may not further contain the ingredient (A) and/or the ingredient (B).

The composition of the present invention can be used by being applied to a plant. Examples of methods for using the composition of the present invention will be explained in detail in the section of "Method of the present invention". By using the composition of the present invention, specifically, by applying the composition of the present invention to a plant, environmental stress tolerance of the plant can be induced. That is, the composition of the present invention may be a composition for inducing environmental stress tolerance of a plant. The composition for inducing environmental stress tolerance of a plant is also referred to as "environmental stress tolerance inducer for a plant".

The constitution of the composition of the present invention is not particularly limited, so long as the composition of the present invention contains the active ingredients, and the desired effect can be obtained. The types and contained amounts of the ingredients contained in the composition of the present invention can be appropriately chosen depending on various conditions such as the type, cultivation method, and growth stage of the target plant, the type and severity of environmental stress symptom of the target environmental stress, and the method for using the composition of the present invention.

The composition of the present invention may consist of the active ingredients, or may contain an ingredient other than the active ingredients. Examples of the ingredient other than the active ingredients include, for example, ingredients usually used for agricultural chemicals, fertilizer, pharmaceuticals, and so forth. Specific examples of such ingredients include additives such as excipient, binder, disintegrating agent, lubricant, stabilizer, diluent, surfactant, spreading agent, pH adjustor, water, alcohol, vitamin, and mineral. Specific examples of the spreading agent include, for example, Applauch BI^{™} (Kao), Mix Power^{™} (Syngenta Japan), Squash^{™} (MARUWA Biochemical), and so forth. As the ingredient other than the active ingredients, one kind of ingredient may be used, or two or more kinds of ingredients may be used. The composition of the present invention may be made into a formulation as required. Dosage form of the composition of the present invention is not particularly limited. The dosage form of the composition of the present invention can be appropriately chosen depending on various conditions such as the method for using the composition of the present invention. Examples of the dosage form include, for example, solution, suspension, powder, tablet, pill, capsule, and paste.

The total contained amount of the active ingredients in the composition of the present invention, for example, may be 0.000006% or higher, 0.00001% or higher, 0.00002% or higher, 0.00005% or higher, 0.0001% or higher, 0.0002% or higher, 0.0005% or higher, 0.001% (w/w) or higher, 0.002% (w/w) or higher, 0.005% (w/w) or higher, 0.01% (w/w) or higher, 0.02% (w/w) or higher, 0.05% (w/w) or higher, 0.1% (w/w) or higher, 0.2% (w/w) or higher, 0.5% (w/w) or higher, 1% (w/w) or higher, 2% (w/w) or higher, 5% (w/w) or higher, or 10% (w/w) or higher, may be 100% (w/w) or lower, 99.9% (w/w) or lower, 70% (w/w) or lower, 50% (w/w) or lower, 30% (w/w) or lower, 20% (w/w) or lower, 15% (w/w) or lower, 10% (w/w) or lower, 5% (w/w) or lower, 2% (w/w) or lower, 1% (w/w) or lower, 0.5% (w/w) or lower, 0.2% (w/w) or lower, 0.1% (w/w) or lower, 0.05% (w/w) or lower, or 0.02% (w/w) or lower, or may be in a range defined by any uncontradictory combination of these ranges.

In the composition of the present invention, the ratio of the contained amount of the ingredient (B) to the contained amount of the ingredient (A) (contained amount of the ingredient (B)/contained amount of the ingredient (A)), for example, may be 1 or higher, 2 or higher, 5 or higher, 10 or higher, 20 or higher, 50 or higher, 100 or higher, 200 or higher, 500 or higher, 1000 or higher, 2000 or higher, 5000 or higher, 10000 or higher, 20000 or higher, 50000 or higher, or 100000 or higher, may be 1000000 or lower, 500000 or lower, 200000 or lower, 100000 or lower, 50000 or lower, 20000 or lower, 10000 or lower, 5000 or lower, 2000 or lower, 1000 or lower, 500 or lower, 200 or lower, or 100 or lower in terms of molar ratio, or may be in a range defined by any uncontradictory combination of these ranges. The ratio of the contained amount of the ingredient (B) to the contained amount of the ingredient (A) (contained amount of the ingredient (B)/contained amount of the ingredient (A)) may be specifically, for example, 1 to 1000000, 10 to 1000000, 100 to 100000, or 500 to 20000 in terms of molar ratio.

The contained amount of each active ingredient in the composition of the present invention can be determined so that, for example, the total contained amount and ratio of the contained amounts of the active ingredients are within the ranges thereof exemplified above.

The contained amount of each active ingredient in the composition of the present invention can also be determined so that, for example, the concentrations of the respective active ingredients should be in predetermined ranges at the time of use of the composition of the present invention. The concentrations of the active ingredients at the time of use of the composition of the present invention are also referred to as "concentrations of the active ingredients for use" or "concentrations of the active ingredients for application". The concentrations of the active ingredients for use may be, especially, concentrations in case that the composition of the present invention is used in the form of a liquid.

The concentration of the ingredient (A) for use, for example, may be 0.004 µM or higher, 0.007 µM or higher, 0.01 µM or higher, 0.02 µM or higher, 0.05 µM or higher, 0.1 µM or higher, 0.15 µM or higher, 0.2 µM or higher, 0.25 µM or higher, 0.3 µM or higher, 0.4 µM or higher, 0.5 µM or higher, 1 µM or higher, 2 µM or higher, 5 µM or higher, 10 µM or higher, 20 µM or higher, 50 µM or higher, or 100 µM or higher, may be 10 mM or lower, 5 mM or lower, 2 mM or lower, 1 mM or lower, 500 µM or lower, 400 µM or lower, 300 µM or lower, 250 µM or lower, 200 µM or lower, 150 µM or lower, 100 µM or lower, 50 µM or lower, 20 µM or lower, 10 µM or lower, 5 µM or lower, 2 µM or lower, 1 µM or lower, or 0.5 µM or lower, or may each be in a range defined by any uncontradictory combination of these ranges. Specifically, the concentration of the ingredient (A) for use may be, for example, 0.004 µM to 10 mM, 0.004 µM to 2 mM, 0.004 µM to 250 µM, 0.05 µM to 5 mM, 0.1 µM to 2 mM, or 0.2 µM to 250 µM. In particular, the concentration of the ingredient (A) for use may be, for example, 0.004 µM to 250 µM.

The concentration of the ingredient (B) for use, for example, may be 0.15 mM or higher, 0.2 mM or higher, 0.25 mM or higher, 0.3 mM or higher, 0.4 mM or higher, 0.5 mM or higher, 0.7 mM or higher, 1 mM or higher, 1.5 mM or higher, 2 mM or higher, 2.5 mM or higher, 3 mM or higher, 3.5 mM or higher, 4 mM or higher, 4.5 mM or higher, or 5 mM or higher, may be 100 mM or lower, 70 mM or lower, 50 mM or lower, 40 mM or lower, 30 mM or lower, 25 mM or lower, 20 mM or lower, 15 mM or lower, 12 mM or lower, 10 mM or lower, 9 mM or lower, 8 mM or lower, 7 mM or lower, 6 mM or lower, 5 mM or lower, 4.5 mM or lower, 4 mM or lower, 3.5 mM or lower, 3 mM or lower, 2.5 mM or lower, 2 mM or lower, 1.5 mM or lower, or 1 mM or lower, or may each be in a range defined by any uncontradictory combination of these ranges. Specifically, the concentration of the ingredient (B) for use may be, for example, 0.25 mM to 100 mM, 0.25 mM to 50 mM, 0.25 mM to 25 mM, 0.5 mM to 70 mM, 1 mM to 50 mM, or 2 mM to 25 mM. In particular, the concentration of the ingredient (B) for use may be, for example, 0.25 mM to 25 mM.

If a material containing the active ingredient is used, the amount of the active ingredient (for example, contained amount (concentration) or amount for use) shall be calculated on the basis of amount of the active ingredient itself contained in the material. If the active ingredient is in the form of a salt or hydrate, the amount (for example, contained amount (concentration) or amount for use) of the active ingredient shall be calculated on the basis of a mass of the equimolar amount of the corresponding free compound converted from the mass of the salt or hydrate.

The active ingredients and the other ingredient(s) may be contained in the composition of the present invention as a mixture, or may be separately contained in the composition of the present invention as respective ingredients or any combination of the ingredients. For example, the composition of the present invention may be provided as a set of the ingredient (A) and ingredient (B) separately packaged. In such a case, the ingredient (A) and ingredient (B) can be appropriately concomitantly applied to a plant at the time of use.

### <4> Method of the present invention

The method of the present invention is a method comprising applying the active ingredients (namely, the ingredients (A) and (B) mentioned above) to a plant.

If an ingredient that falls within both the ingredients (A) and (B) (for example, the A-B condensate) is applied to a plant in the method of the present invention, this ingredient serves as both the ingredients (A) and (B) in the method of the present invention. That is, if an ingredient that falls within both the ingredients (A) and (B) is applied to a plant in the method of the present invention, the ingredient (A) and/or the ingredient (B) may or may not be further applied to the plant.

According to the method of the present invention, specifically, by applying the active ingredients to a plant, environmental stress tolerance of the plant can be induced. That is, the method of the present invention may be a method for inducing environmental stress tolerance of the plant. The induction of environmental stress tolerance of a plant may be due to, for example, an increase in expression of a gene involved in environmental stress tolerance. That is, the method of the present invention may also be a method for increasing expression of a gene involved in environmental stress tolerance in a plant.

The active ingredients can be applied to a plant by, for example, using the composition of the present invention (namely, by applying the composition of the present invention). That is, one embodiment of the method of the present invention may be, for example, a method comprising applying the composition of the present invention to a plant. The phrase "applying the active ingredients to a plant" also encompasses applying the composition of the present invention to a plant. The composition of the present invention can be applied to a plant, for example, as it is, or after it is diluted, dispersed or dissolved with a liquid such as water, physiological saline, buffer, alcohol, and DMSO, as required. That is, for example, the concentration of the composition of the present invention can be adjusted as required so that the concentrations of the active ingredients for use exemplified above can be obtained, and then the composition can be applied to a plant. The composition of the present invention can be applied to a plant in the form of, especially, a liquid. The active ingredients may be applied to a plant as a mixture prepared beforehand, or may each be separately applied to a plant. That is, for example, if the active ingredients are contained in the composition of the present invention as a mixture, the active ingredients can be applied to a plant as a mixture prepared beforehand by applying the composition of the present invention to the plant. Furthermore, for example, if the active ingredients are each separately contained in the composition of the present invention, the active ingredients may be applied to a plant after they are mixed, or may each be separately applied to the plant. If the active ingredients are each separately applied to a plant, the active ingredients may be or may not be simultaneously applied to the plant. If the active ingredients are not simultaneously applied to a plant, the order of the applications of the ingredient (A) and ingredient (B) is not particularly limited. If the active ingredients are not simultaneously applied to a plant, interval of the applications of the ingredient (A) and ingredient (B) is not particularly limited so long as the desired effect can be obtained. The interval of the applications of the ingredient (A) and ingredient (B) may be, for example, 7 days or shorter, 5 days or shorter, 3 days or shorter, or 1 day or shorter. The composition of the present invention may be used together with another ingredient. To the other ingredient, the explanations about the ingredient other than the active ingredients mentioned in the explanations of the composition of the present invention can be applied. That is, the composition of the present invention may be used together with, for example, an additive such as spreading agent.

The method for applying the composition of the present invention is not particularly limited so long as the desired effect can be obtained. The method for applying the composition of the present invention can be appropriately chosen depending on various conditions such as the type, cultivation method, and growth stage of target plant, and the type and severity of environmental stress symptom of the target environmental stress. The composition of the present invention can be applied to a plant by, for example, a usual method for applying agricultural chemicals and fertilizers to a plant. The composition of the present invention, for example, may be applied to a plant body, may be applied to a medium on which cultivation of a plant is carried out, or may be applied to a combination of them. The medium on which cultivation of a plant is carried out can be chosen depending on various conditions such as the type and cultivation method of the target plant. The cultivation method of the plant is not particularly limited. Cultivation of the plant can be carried out, for example, by the same method as usual cultivation methods for plants, except that the composition of the present invention is applied. Examples of the cultivation method of the plant include soil cultivation, nutrient solution cultivation, and soil cultivation with nutrient solution. Examples of the nutrient solution cultivation include hydroponics and solid culture medium cultivation. Examples of the hydroponics include nutrient film technique (NFT) and deep flow technique (DFT). That is, examples of the medium on which cultivation of a plant is carried out include soil, nutrient solution for hydroponics, and solid culture medium. Examples of application to a plant body include spraying or spreading the composition on a plant body, and immersing a plant body into the composition. The composition of the present invention may be applied to the whole plant body, or may be applied to a part of plant body. The composition of the present invention may be applied to, for example, the whole terrestrial part of a plant body. Examples of the part of plant body include leaf, stem, trunk, root, and fruit. If the composition of the present invention is applied to a leaf, it may be applied to only one of the front surface and the back surface of the leaf, or may be applied to both surfaces. Specific examples of application to a plant body include, for example, foliar sprinkling and root immersion. Example of application to the medium on which cultivation of a plant is carried out include sprinkling to the medium on which cultivation of a plant is carried out, irrigation into the medium on which cultivation of a plant is carried out, and mixing with the medium on which cultivation of a plant is carried out. Application to the medium on which cultivation of a plant is carried out can be performed so that the active ingredients can reach the rhizosphere of the plant.

The application time of the composition of the present invention is not particularly limited so long as the desired effect can be obtained. The application time of the composition of the present invention can be appropriately chosen depending on various conditions, such as type, cultivation method, and growth stage of the target plant, and type and severity of environmental stress symptom of the target environmental stress. The composition of the present invention can be applied to a plant, for example, before an environmental stress symptom develops. By applying the composition of the present invention to a plant before an environmental stress symptom develops, for example, the environmental stress symptom that may develop in the future can be decreased. The composition of the present invention can also be applied to a plant, for example, after an environmental stress symptom has developed. By applying the composition of the present invention to a plant after an environmental stress symptom has developed, for example, the already developed environmental stress symptom can be decreased. The composition of the present invention may be applied once, or two or more times. The composition of the present invention may be applied intermittently or continuously.

The application amount of the composition of the present invention is not particularly limited so long as the desired effect can be obtained. The application amount of the composition of the present invention can be appropriately determined depending on various conditions such as type, cultivation method, and growth stage of the target plant, type and severity of environmental stress symptom of the target environmental stress, and application method and application time of the composition of the present invention.

The application amount of the composition of the present invention, as application amount of, for example, the composition of the present invention in the form of a liquid, such as the composition of the present invention in the form of a liquid containing the active ingredients at such concentrations for use as exemplified above, may be 100 L/hectare or larger, 200 L/hectare or larger, 500 L/hectare or larger, 1000 L/hectare or larger, 1500 L/hectare or larger, 2000 L/hectare or larger, 3000 L/hectare or larger, 4000 L/hectare or larger, or 5000 L/hectare or larger, may be 10000 L/hectare or smaller, 9000 L/hectare or smaller, 8000 L/hectare or smaller, 7000 L/hectare or smaller, 6000 L/hectare or smaller, 5000 L/hectare or smaller, 4000 L/hectare or smaller, 3000 L/hectare or smaller, 2000 L/hectare or smaller, or 1500 L/hectare or smaller, or may be in a range defined by any uncontradictory combination of these ranges. The application amount of the composition of the present invention, as application amount of, for example, the composition of the present invention in the form of a liquid, such as the composition of the present invention in the form of a liquid containing the active ingredients at such concentrations for use as exemplified above, may specifically be, for example, 100 to 10000 L/hectare, 200 to 8000 L/hectare, 500 to 5000 L/hectare, or 1000 to 3000 L/hectare. The application amount of the composition of the present invention can be determined by taking into consideration not only application area (two-dimensional factor), but also a three-dimensional factor. That is, the application amount of the composition of the present invention can be determined, for example, depending on height of the plant to which the composition of the present invention is applied (for example, sprinkled). The application amount of the composition of the present invention, as application amount of, for example, the composition of the present invention in the form of a liquid, such as the composition of the present invention in the form of a liquid containing the active ingredients at such concentrations for use as exemplified above, may specifically be, for example, 1000 to 1500 L/hectare for plants of from ground surface height to knee height, 1500 to 3000 L/hectare for plants of from knee height to human height, 3000 to 5000 L/hectare for plants of from human height to a height of 2 m, or 5000 to 7000 L/hectare for plants of a height of 2 m or higher.

The application amount of the composition of the present invention can also be determined so that, for example, the application amount of each active ingredient should be in a predetermined range.

The application amount of the ingredient (A), for example, may be 10 µmol/hectare or larger, 20 µmol/hectare or larger, 50 µmol/hectare or larger, 100 µmol/hectare or larger, 200 µmol/hectare or larger, 500 µmol/hectare or larger, or 1000 µmol/hectare or larger, may be 20 mol/hectare or smaller, 10 mol/hectare or smaller, 5 mol/hectare or smaller, 2 mol/hectare or smaller, 1 mol/hectare or smaller, 500 mmol/hectare or smaller, 200 mmol/hectare or smaller, or 100 mmol/hectare or smaller, or may be in a range defined by any uncontradictory combination of these ranges.

The application amount of the ingredient (B), for example, may be 0.015 mol/hectare or larger, 0.02 mol/hectare or larger, 0.05 mol/hectare or larger, 0.1 mol/hectare or larger, 0.2 mol/hectare or larger, 0.5 mol/hectare or larger, or 1 mol/hectare or larger, may be 200 mol/hectare or smaller, 100 mol/hectare or smaller, 50 mol/hectare or smaller, 20 mol/hectare or smaller, 10 mol/hectare or smaller, 5 mol/hectare or smaller, 2 mol/hectare or smaller, or 1 mol/hectare or smaller, or may be in a range defined by any uncontradictory combination of these ranges.

Such an application amount of the composition of the present invention as exemplified above may be an application amount in the case of, especially, applying the composition of the present invention to a plant by sprinkling it to a plant body such as foliar sprinkling, or sprinkling to the medium on which cultivation of a plant is carried out.

Such descriptions concerning the application method of the composition of the present invention as mentioned above can be applied to any other cases of applying the active ingredients to a plant. That is, the active ingredients may be applied to a plant, for example, at such concentrations for use as exemplified above. The active ingredients may also be applied to a plant, for example, in such application amounts of the active ingredients exemplified above. The active ingredient may be, for example, prepared as a composition, such as a liquid composition, containing the active ingredients, and applied to a plant. The explanations of the composition of the present invention can be applied to the composition containing the active ingredients. The active ingredients can be applied to a plant in the form of, especially, a liquid. That is, specifically, the active ingredients may be prepared as, for example, a liquid composition containing the active ingredients at such concentrations for use as exemplified above, and applied to a plant. The active ingredients may be applied to a plant in the form of a mixture prepared beforehand, or may be separately applied to a plant. That is, for example, a composition such as a liquid composition containing both the ingredient (A) and the ingredient (B) can be prepared, and applied to a plant. Furthermore, for example, a composition such as a liquid composition containing the ingredient (A) and a composition such as a liquid composition containing the ingredient (B) can each be prepared, and applied to a plant. The active ingredients may be used, for example, together with another ingredient such as spreading agent.

By cultivating a plant using the method of the present invention, a plant (specifically, a plant body) can be obtained. Therefore, one embodiment of the method of the present invention may be a method for producing a plant (specifically, a plant body). More specifically, one embodiment of the method of the present invention may be a method for producing a plant (specifically, a plant body), which comprises cultivating a plant with applying the active ingredients (namely, the ingredients (A) and (B) mentioned above) to the plant. The cultivation method of the plant is not particularly limited. Cultivation of the plant can be carried out, for example, by the same method as usual cultivation methods for plants, except that the active ingredients are applied. The cultivation method of the plant is as described above. The plant (specifically, the plant body) can be harvested as required. That is, the method of the present invention may further comprise harvesting a plant (specifically, a plant body). The term "harvesting" may be used interchangeably with the term "collecting". The phrase "harvesting or collecting a plant" may be used interchangeably with the phrase "harvesting or collecting a plant body". The plant (specifically, the plant body) to be harvested may be the whole of plant body, or a part of plant body. Examples of the part of plant body include leaf, stem, trunk, root, and fruit.

In addition, according to the method of the present invention, specifically, by applying the active ingredients to a plant and then harvesting a plant (specifically, a plant body), an effect associated with the induction of stress tolerance may be obtained in the plant (specifically, the plant body) after harvest. Hence, one embodiment of the method of the present invention may be a method for obtaining an effect associated with the induction of stress tolerance in a plant after harvest (specifically, a plant body after harvest). One embodiment of the method of the present invention may be, more specifically, a method for obtaining an effect associated with the induction of stress tolerance in a plant after harvest (specifically, a plant body after harvest), which comprises applying the active ingredients (namely, the ingredients (A) and (B) mentioned above) to the plant and then harvesting the plant (specifically, the plant body). Also, in other words, one embodiment of the method of the present invention may be, more specifically, a method for obtaining an effect associated with the induction of stress tolerance in a plant after harvest (specifically, a plant body after harvest), which comprises applying the active ingredients (namely, the ingredients (A) and (B) mentioned above) to the plant before harvesting the plant (specifically, the plant body). For example, if drought stress tolerance of a plant is induced by the method of the present invention, dehydration of a plant after harvest (specifically, a plant body after harvest) may be suppressed. That is, examples of the effect associated with the induction of stress tolerance include suppression of dehydration. For obtaining the effect associated with the induction of stress tolerance in a plant after harvest (specifically, a plant body after harvest), for example, the active ingredients may be applied later than 10 days, 7 days, 5 days, 3 days, or 1 day before harvest, may be applied by harvest or by 1 day, 3 days, 5 days, or 7 days before harvest, or may be applied during a period defined by any uncontradictory combination of these ranges. For obtaining the effect associated with the induction of stress tolerance in a plant after harvest (specifically, a plant body after harvest), specifically, for example, the active ingredients may be applied during a period from 7 days before harvest to harvest, a period from 3 days before harvest to harvest, or a period from 1 day before harvest to harvest. A plant (specifically, a plant body) can be appropriately harvested. That is, the method of the present invention may further comprise harvesting a plant (specifically, a plant body). Harvesting of a plant (specifically, a plant body) is as described above.

### <5> Search method of a method for modulating the function of ingredient (A)

As described above, the ingredient (B) may have a function as a modulator of the ingredient (A). Hence, a method for modulating a function of the ingredient (A) can be searched for by using the ingredient (B). Specifically, a method for modulating a function of the ingredient (A) can be searched for by identifying action of the ingredient (B) in case that the ingredients (A) and (B) are used in combination.

That is, the search method of the present invention is a search method for a method for modulating a function of the ingredient (A), which comprises:
applying the following ingredients (A) and (B) to a plant; and
identifying action of the ingredient (B):
   (A) an abscisic acid-like substance;
   (B) a nitrogen-containing compound.

Modulation of the function of the ingredient (A) and identification of the action of the ingredient (B) are as described above. In one embodiment, concomitant use of the ingredients (A) and (B) can induce environmental stress tolerance of a plant while suppressing multiple functions of the ingredient (A). That is, examples of the method for modulating a function of the ingredient (A) include a method for inducing environmental stress tolerance of a plant while suppressing multiple functions of the ingredient (A).

### <6> Use of active ingredients

The present invention also discloses use of the active ingredients for the use purposes exemplified above. That is, the present invention discloses, for example, use of the active ingredients for inducing environmental stress tolerance of a plant and use of the active ingredients in manufacture of a composition for inducing environmental stress tolerance of a plant. The present invention discloses, for example, use of the ingredient (B) for searching for a method for modulating a function of the ingredient (A).

The present invention also discloses the active ingredients for use in the use purposes exemplified above. That is, the present invention discloses, for example, the active ingredients for use in inducing environmental stress tolerance of a plant and the active ingredients for use in manufacture of a composition for inducing environmental stress tolerance of a plant. The present invention discloses, for example, the ingredient (B) for use in searching for a method for modulating a function of the ingredient (A).

The present invention also discloses use of each of the active ingredients for concomitant use with another active ingredient. That is, the present invention also discloses, for example, use of the ingredient (A) for concomitant use with the ingredient (B) and use of the ingredient (B) for concomitant use with the ingredient (A). Each active ingredient may be used together with another active ingredient for the use purposes exemplified above.

### Examples

Hereinafter, the present invention will be more specifically explained with reference to non-limitative examples. ABA used in the following examples is (±)-ABA (Sigma-Aldrich), unless otherwise stated. All the amino acids used in the following examples are L-amino acids, unless otherwise stated.

### [Example 1] Effect of amino acids on induction of environmental stress tolerance genes by ABA

In this example, an effect of combinations of ABA and amino acids on expression induction of RD29A, RD29B, MAPKKK18, and ABF3F genes, which have been reported to be induced by ABA and to be involved in conferment of environmental stress tolerance by ABA, was analyzed.

Four to six young Arabidopsis thaliana plants grown on a 50% concentration MS (Murashige-Skoog) agar medium were transferred to a 6-well plate containing a 50% concentration MS (Murashige-Skoog) liquid medium and pre-cultured for 16 hours, then added with a treatment solution containing each amino acid alone or a treatment solution containing a combination of each amino acid and ABA, and left for 6 hours. Then, RNA was then isolated from the plants with a nucleic acid purification kit (Promega, Maxwell (registered trademark) 16 LEV simplyRNA Tissue Kit). Then, cDNA was synthesized with a cDNA synthesis reagent for real-time PCR (Toyobo, ReverTra Ace (registered trademark) qPCR RT Master Mix).

Real-time PCR was performed using the cDNA as template with the primers shown in Table 1. MAPKKK18 is a gene encoding a kinase (MAPKKK18, MITOGEN-ACTIVATED PROTEIN KINASE KINASE KINASE 18) that functions in the ABA signaling pathway of Arabidopsis thaliana (Zelicourt A. et al., Trends in Plant Science 21: (2016)). RD29A and RD29B are genes encoding hydrophilic proteins (RESPONSIVE TO DESICCATION 29A, RESPONSIVE TO DESICCATION 29B) that are responsive for ABA and environmental stress such as drought stress and salinity stress and considered to be involved in stress tolerance and senescence suppression (Yang S.D. et al., Plant Cell 6: 2155-2168 (2011)). ABF3 is a gene encoding a transcription factor (ABA-responsive element-binding protein) that regulates expression of ABA-responsive genes (Yoshida T. et al., Plant, cell and Environment 38: 35-49 (2015)). SLAC1 is a gene encoding an anion channel involved in stomatal closure (Yoshida et al., J Plant Res (2016) 129:39-49). GAPDH is a glyceraldehyde-3-phosphate dehydrogenase gene and was selected as an internal standard.

**Table 1: Primers for Real-time PCR**

| Gene name | Gene ID | Forward primer SEQ ID NO | Reverse primer SEQ ID NO |
|---|---|---|---|
| MAPKKK18 | AT1G05100 | 1 | 2 |
| RD29A | AT5G52310 | 3 | 4 |
| RD29B | AT5G52330 | 5 | 6 |
| ABF3F | AT4G34000 | 7 | 8 |
| SLAC1 | AT1G12480 | 9 | 10 |
| GAPDH | AT1G13440 | 11 | 12 |

The expression levels of the genes were calculated as relative expression levels to the GAPDH gene. Twenty amino acids were divided into 10 each, and the gene expression inducing activity when combined with ABA was evaluated in two tests (n=2). For top 10 amino acids in case that RD29B was used as an indicator, the gene expression inducing activity when combined with ABA was again evaluated in one test (n=2).

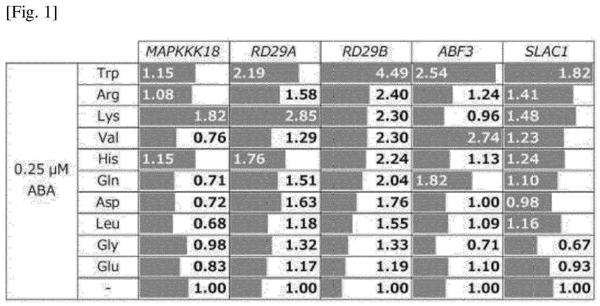

The results are shown in Figure 1. As compared with ABA alone, a particular high gene expression inducing activity was observed for the combination of ABA and Lys when MAPKKK18 and RD29A were used as indicators, the combination of ABA and Trp when RD29B and SLAC1 were used as indicators, and the combination of ABA and Val when ABF3 was used as indicator.

Next, for the three amino acids (Lys, Trp, and Val) for which a high gene expression inducing activity was observed when combined with ABA, a test for comparing the gene expression inducing activity for the case of each amino acid alone with that for the case of a combination of ABA and each amino acid was carried out in the same manner as above (n=3).

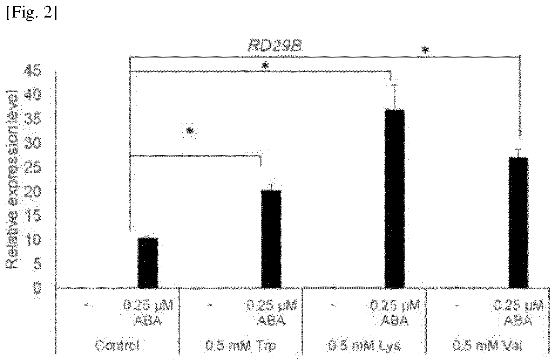

The results are shown in Figure 2. No activity to induce expression of the environmental stress tolerance gene RD29B was observed for the case of Lys, Trp, or Val alone, whereas an activity to induce expression of the environmental stress tolerance gene RD29B was observed for the case of a combination of Lys, Trp, or Val and ABA. That is, it was revealed that Lys, Trp, and Val have an activity of synergistically enhance the effect of ABA. In particular, it was revealed that Lys has a significantly high activity.

Separately, a combination of Lys and a natural-type ABA ((S)-(+)-ABA) was applied to Arabidopsis thaliana and the expression levels of the genes were measured via the same procedures, and thereby it was confirmed that Lys has an activity of synergistically enhance the effect of the natural-type ABA.

### [Example 2] Examination of Lys treatment concentrations

To confirm the concentration dependency of the activity of a combination of Lys and ABA to induce expression of environmental stress tolerance genes, Arabidopsis thaliana was treated with a combination of 0.05 mM, 0.1 mM, 0.25 mM, 0.5 mM, 1 mM, or 2.5 mM of Lys and 0.25 µM of ABA in the same manner as in Example 1, and expression of MAPKKK18, RD29A, and RD29B genes after 6 hours of treatment was analyzed (n=3). The expression levels of the respective genes were calculated as relative expression levels to the GAPDH gene in the same manner as in Example 1.

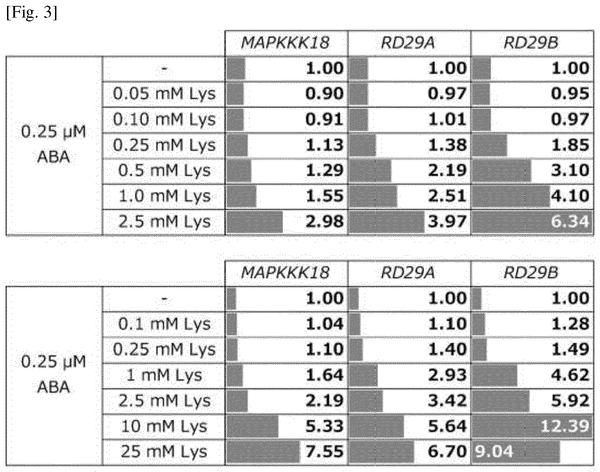

The results are shown in the upper panel of Figure 3. For all the environmental stress tolerance genes, no improvement in expression inducing activity was observed at Lys concentrations of 0.1 mM or lower, whereas Lys concentration-dependent improvement in expression inducing activity was observed at Lys concentrations of 0.25 mM or higher.

Separately, Arabidopsis thaliana was treated with a combination of 0.1 mM, 0.25 mM, 1 mM, 2.5 mM, 10 mM, or 25 mM of Lys and 0.25 µM of ABA in the same manner as in Example 1, and expression of MAPKKK18, RD29A, and RD29B genes after 6 hours of treatment was analyzed (n=3). The expression levels of the respective genes were calculated as relative expression levels to the GAPDH gene in the same manner as in Example 1.

The results are shown in the lower panel of Figure 3. For all the environmental stress tolerance genes, improvement in expression inducing activity was observed at Lys concentrations of 0.1 mM to 25 mM, and Lys concentration-dependent improvement in expression inducing activity was observed at least up to Lys concentrations of 10 mM or 25 mM.

### [Example 3] Comparison of a combination of Lys and ABA with seaweed extract

Since seaweed extracts have been reported to contain plant hormones such as ABA (Gorka et al., Journal of Chromatography B 1057 (2017) 32-39), it is considered that they can confer environmental stress tolerance. Hence, a comparative study of the activity to induce expression of environmental stress tolerance genes was carried out between a combination of Lys and ABA and a seaweed extract. Specifically, Arabidopsis thaliana was treated with a combination of Lys and ABA or the seaweed extract in the same manner as in Example 1, and expression of RD29A and RD29B genes after 6 hours of treatment was analyzed. The expression levels of the respective genes were calculated as relative expression levels to the GAPDH gene in the same manner as in Example 1.

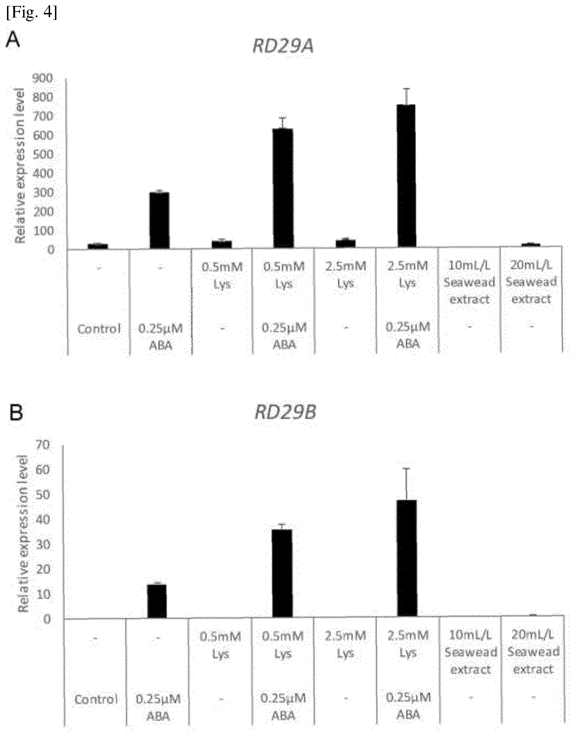

The results are shown in Figure 4. The activity of the seaweed extract to induce expression of environmental stress tolerance genes was very low compared with that of the combination of Lys and ABA.

### [Reference Example 1] Induction of expression of environmental stress tolerance genes by a combination of Lys and ABA in ABA-insensitive mutant

To confirm the relation between the effect of inducing expression of environmental stress tolerance genes by a combination of Lys and ABA and the ABA signaling pathway, the abi1-1 mutant, which is a ABA-insensitive mutant of Arabidopsis thaliana, was treated with a combination of 0.5 mM of Lys and 0.25 µM of ABA in the same manner as in Example 1, and expression of genes after 6 hours of treatment was analyzed (n=3). The expression levels of the respective genes were calculated as relative expression levels to the GAPDH gene in the same manner as in Example 1.

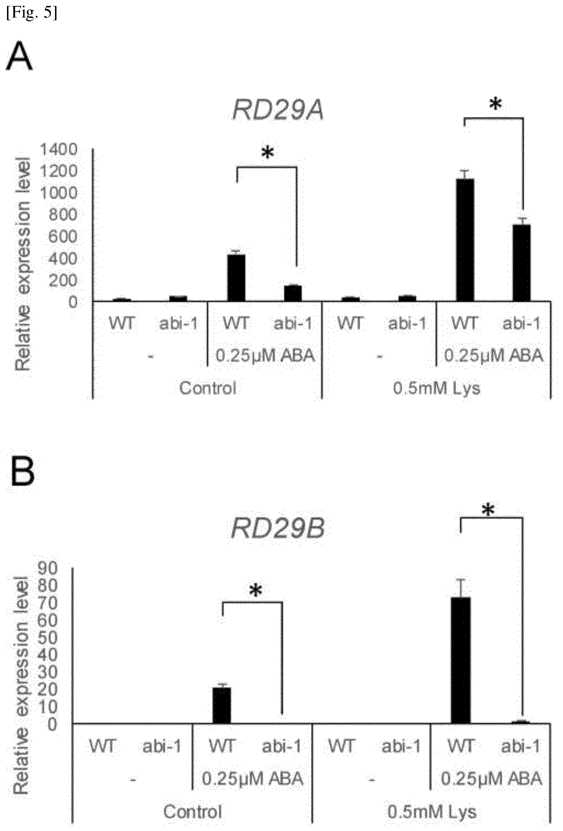

The results are shown in Figure 5. Expression induction of RD29A and RD29B genes by ABA was observed in the wild-type strain (WT), but not in the abi1-1 mutant. Similarly, an effect of enhancing the ABA activity by Lys was observed in the wild-type strain, but not in the abi1-1 mutant. This indicates that the effect of enhancing the ABA activity by Lys is dependent on the ABA signaling pathway via the ABI gene.

On the other hand, for example, although Glu has been reported to exhibit a stomatal closure effect, this stomatal closure effect of Glu is considered to be independent on the ABA signaling pathway because it is maintained in the abi1-1 mutant (Yoshida et al., J Plant Res (2016) 129:39-49). Hence, stomatal closure by Glu is considered to be based on a separate effect from the effect of Lys.

### [Example 4] Effect of conferring drought stress tolerance by a combination of Lys and ABA

A test for verifying an effect of conferring drought stress tolerance by a combination of Lys and ABA was carried out (n=4). For Arabidopsis thaliana grown on rockwool under short-day conditions for 35 days, the weight of the rockwool and the whole plant was measured, to determine the initial weight. Arabidopsis thaliana was spray treated with 2.5 mM of Lys and 5 µM or 50 µM of ABA alone or in combination (first spray treatment). As a control treatment group, Arabidopsis thaliana was spray treated with DMSO (first spray treatment). After the first spray treatment, cultivation was continued for 7 days without water supply. During cultivation, a second spray treatment was carried out 4 days after the first spray treatment. The weight of the rockwool and the whole plant was measured 4 and 7 days after the first spray treatment, to determine the post-cultivation weight. The post-cultivation weight was subtracted from the initial weight, to determine the dehydration amount during cultivation.

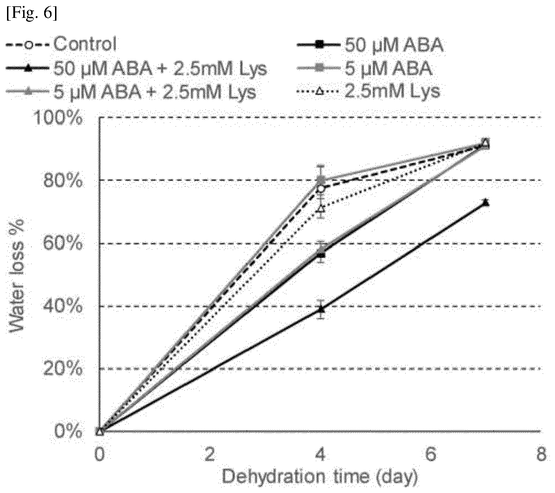

The results are shown in Figure 6. The dehydration amount on the 4th day was approximately 77% in the control treatment group, whereas the dehydration amount on the 4th day was approximately 57% in the treatment group with 50 µM ABA, and that is, a water retention effect by ABA was observed. On the other hand, the dehydration amount on the 4th day was lowered to approximately 39% in the treatment group with 50 µM ABA in combination with 2.5 mM of Lys, and that is, the water retention effect by ABA was observed to be enhanced by Lys. In addition, the dehydration amount on the 4th day was approximately 80.1% in the treatment group with 5 µM ABA, which indicates almost no difference from that in the control treatment group, whereas the dehydration amount on the 4th day was approximately 58% in the treatment group with 5 µM ABA in combination with 2.5 mM of Lys, which indicates a water retention effect equivalent to that in the treatment group with 50 µM ABA. In addition, the dehydration amount on the 7th day was approximately 71% in the treatment group with 50 µM ABA in combination with 2.5 mM of Lys, which indicates that water is still retained, whereas the dehydration amount on the 7th day was 90% or higher in all the other groups, which indicates almost dried conditions. From these results, it was confirmed that the effect of conferring drought stress tolerance (for example, the water retention effect under drought stress) by ABA can be enhanced by Lys.

### [Example 5] Effect of Lys derivatives on induction of environmental stress tolerance genes by ABA

For Lys, one of the three amino acids for which a particularly high gene expression inducing activity was observed when combined with ABA, a test for comparing the gene expression inducing activity for the cases of combinations of Lys derivatives and ABA in the same manner as in Example 1 (n=2). Lys or each Lys derivative is used for treatment at 1 mM and ABA at 0.25 µM. Lys and the Lys derivatives used are listed in Tables 2 to 7. The compound No. 1 is Lys.

The results are shown in Tables 2 to 7. In the tables, "activity level" represents the total of the induction activities of RD29B and MAPKKK18 observed when Lys or each Lys derivative was used in combination with ABA, as a relative value to the same total observed when ABA was applied alone, which is taken as 1. That is, compounds with an "activity level" of >1 enhanced the gene expression inducing activity of ABA, compounds with an "activity level" of 1 had no effect on the gene expression inducing activity of ABA, and compounds with an "activity level" of <1 suppressed the gene expression inducing activity of ABA. Specifically, compounds Nos. 7, 11, 25, 28, and 51 in Tables 2 to 7 had no effect on the gene expression inducing activity of ABA, and the other compounds enhanced or suppressed the gene expression inducing activity of ABA.

**Table 2**

| No. | Structure | Activity level |
|---|---|---|
| 1 | 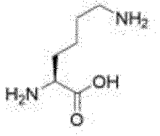 | >1 |
| 2 | 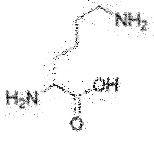 | >1 |
| 3 | 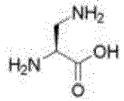 | >1 |
| 4 | 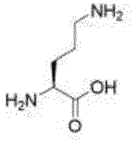 | >1 |
| 5 | 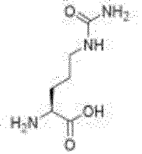 | >1 |
| 6 | 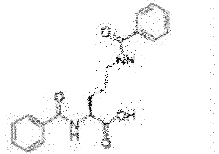 | >1 |
| 7 | 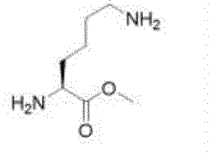 | 1 |
| 8 | 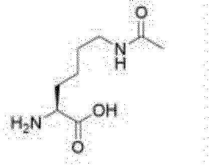 | <1 |
| 9 | 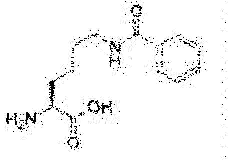 | <1 |
| 10 | 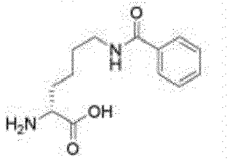 | <1 |

**Table 3**

| No. | Structure | Activity level |
|---|---|---|
| 11 | 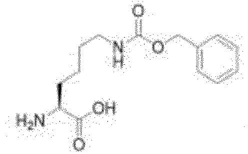 | |
| 12 | 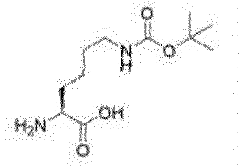 | >1 |
| 13 | 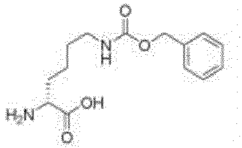 | <1 |
| 14 | 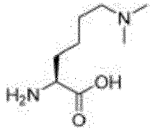 | >1 |
| 15 | 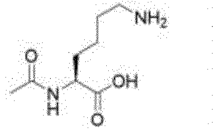 | <1 |
| 16 | 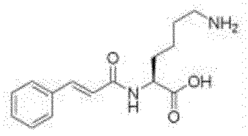 | <1 |
| 17 | 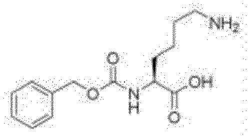 | >1 |
| 18 | 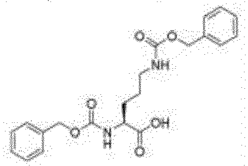 | >1 |
| 19 | 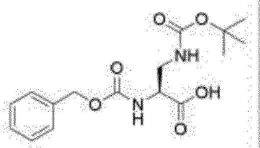 | >1 |
| 20 | 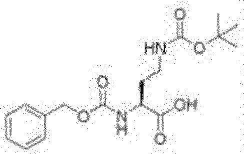 | >1 |

**Table 4**

| No. | Structure | Activity level |
|---|---|---|
| 21 | 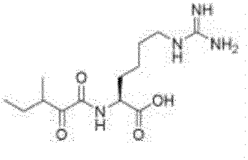 | <1 |
| 22 | 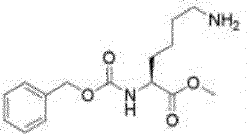 | >1 |
| 23 | 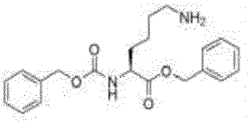 | <1 |
| 24 | 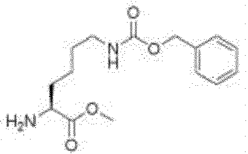 | >1 |
| 25 | 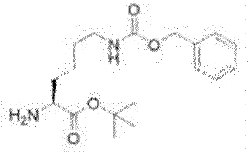 | 1 |
| 26 | 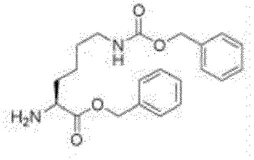 | <1 |
| 27 | 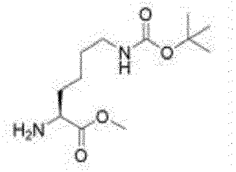 | >1 |
| 28 | 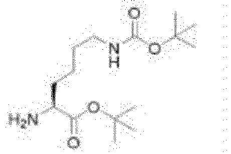 | 1 |
| 29 | 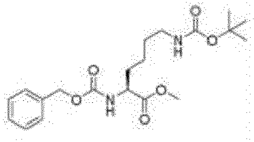 | >1 |
| 30 | 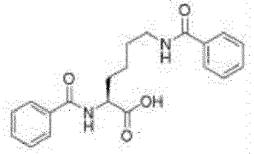 | <1 |

**Table 5**

| No. | Structure | Activity level |
|---|---|---|
| 31 | 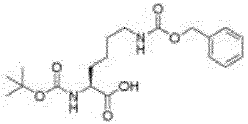 | >1 |
| 32 | 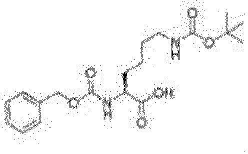 | >1 |
| 33 | 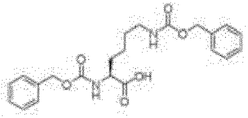 | >1 |
| 34 | 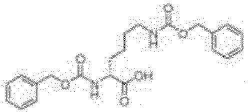 | >1 |
| 35 | 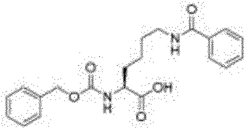 | >1 |
| 36 | 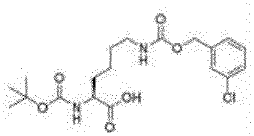 | >1 |
| 37 | 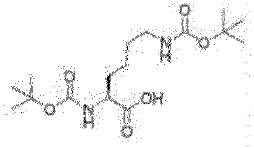 | >1 |
| 38 | 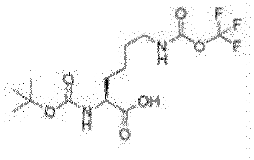 | >1 |
| 39 | 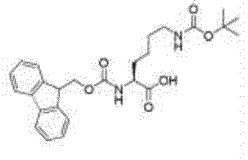 | <1 |
| 40 | 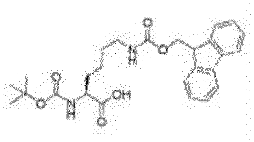 | >1 |

**Table 6**

| No. | Structure | Activity level |
|---|---|---|
| 41 | 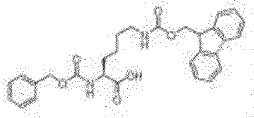 | <1 |
| 42 | 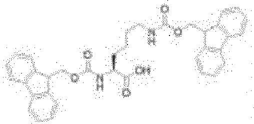 | >1 |
| 43 | 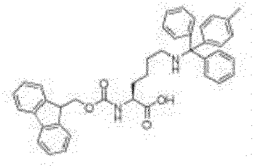 | >1 |
| 44 | 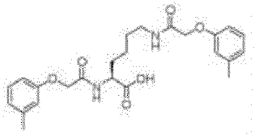 | >1 |
| 45 | 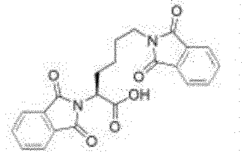 | >1 |
| 46 | 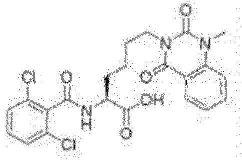 | >1 |
| 47 | Lys-Lys | <1 |
| 48 | Lys-Ala | <1 |
| 49 | Lys-Trp | <1 |
| 50 | Lys-Asp | >1 |

**Table 7**

| No. | Structure | Activity level |
|---|---|---|
| 51 | Lys-Arg | 1 |
| 52 | Lys-Thr | < 1 |
| 53 | Ala-Lys | >1 |
| 54 | Trp-Lys | >1 |
| 55 | Asp-Lys | >1 |
| 56 | Arg-Lys | >1 |
| 57 | Thr-Lys | >1 |
| | ABA | 1 |

### <Control>

### [Example 6] Effect of conferring drought stress tolerance by a combination of Lys and ABA

A test for verifying an effect of conferring drought stress tolerance by a combination of Lys and ABA was carried out. Arabidopsis thaliana grown on rockwool under short-day conditions for 35 days was spray treated with 50 µM of ABA alone or with 2.5 mM of Lys and 50 µM of ABA in combination. As a control treatment group (Mock), Arabidopsis thaliana was spray treated with DMSO. After the spray treatment, cultivation was continued without water supply, to subject Arabidopsis thaliana to drought stress. Water was again supplied to Arabidopsis thaliana 9 days after the spray treatment, and the survival rate was measured 12 days after the spray treatment (n=94-96).

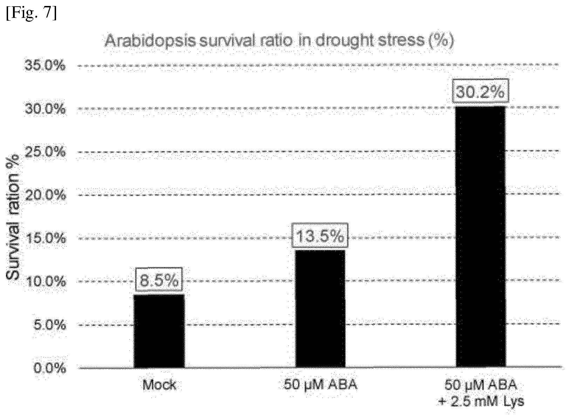

The results are shown in Figure 7. The survival rate was 8.5% (8/94 individuals) in the control treatment group (Mock) and 13.5% (13/96 individuals) in the treatment group with 50 µM ABA, whereas the survival rate was 30.2% (29/96 individuals) in the treatment group with 50 µM ABA in combination with 2.5 mM of Lys. From these results, it was confirmed that the effect of conferring drought stress tolerance (for example, the survival rate improving effect under drought stress) by ABA can be enhanced by Lys.

### [Example 7] Induction of expression of environmental stress tolerance genes by combinations of ABA agonists and Lys

To confirm the activity of combinations of Lys and ABA agonists to induce expression of environmental stress tolerance genes, Arabidopsis thaliana was treated with a combination of 1 mM of Lys and 0.25 µM of ABA or a combination of 1 mM of Lys and quinabactin (QB) or opabactin (OP), which is an ABA agonist, in the same manner as in Example 1, and expression of MAPKKK18 and RD29B genes after 6 hours of treatment was analyzed (n=3). The expression levels of the respective genes were calculated as relative expression levels to the GAPDH gene in the same manner as in Example 1.

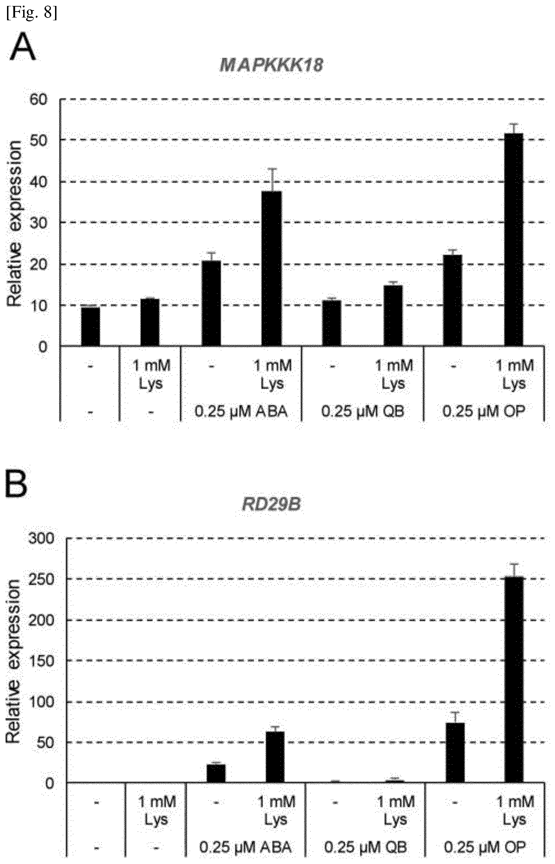

The results are shown in Figure 8. Lys enhanced the effect of inducing expression of environmental stress tolerance genes by each ABA agonist also when Lys was used in combination with quinabactin (QB) or opabactin (OP), which is an ABA agonist, as with case that Lys was used in combination with ABA. These results indicate the universality of Lys for ABA-like substances.

### [Example 8] Effect of conferring drought stress tolerance of tomato by a combination of Lys and ABA

A test for verifying an effect of conferring drought stress tolerance to tomato by a combination of Lys and ABA was carried out (n=4). Tomato grown for 35 days using a pot having an outer diameter of 60 mm was spray treated with 1, 2.5, 10, or 25 mM of Lys and 50 µM of ABA alone or in combination (first spray treatment). As a control treatment group, DMSO was used for spray treatment (first spray treatment). The surface of the pot was covered with aluminum foil to prevent evaporation from the soil. After the first spray treatment, cultivation was continued for 7 days without water supply. During cultivation, a second spray treatment was carried out 2 days after the first spray treatment, and a third spray treatment was carried out 4 days after the first spray treatment. Water was again supplied to the tomato 7 days after the first spray treatment, and photographs were taken 4 days later.

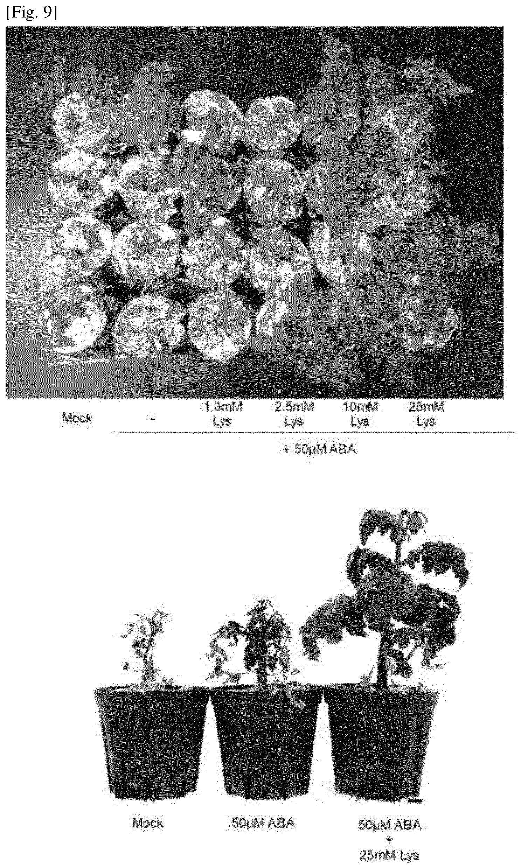

The results are shown in Figure 9. A concentration-dependent recovery of growth of tomato was observed in the group of the combination of ABA and Lys as compared with the control treatment group and the treatment group with ABA alone. From these results, it was confirmed that the effect of conferring drought stress tolerance (for example, the growth improving effect under drought stress) by ABA can be enhanced by Lys also in tomato.

### [Example 9] Effect of conferring drought stress tolerance of wheat by a combination of Lys and ABA

A test for verifying an effect of conferring drought stress tolerance by a combination of Lys and ABA in wheat was carried out. Wheat (Norin 61) grown on rockwool under long-day conditions for 13 days was spray treated with 10 µM of ABA alone or with 2.5 mM or 10 mM of Lys and 10 µM of ABA in combination. As a control treatment group (Mock), the wheat was spray treated with DMSO. After the spray treatment, cultivation was continued without water supply, to subject wheat to drought stress. During cultivation, the water loss from the rockwool was measured. Water was again supplied to the wheat 21 days after the spray treatment, and the survival rate was measured 23 days after the spray treatment (n=24).

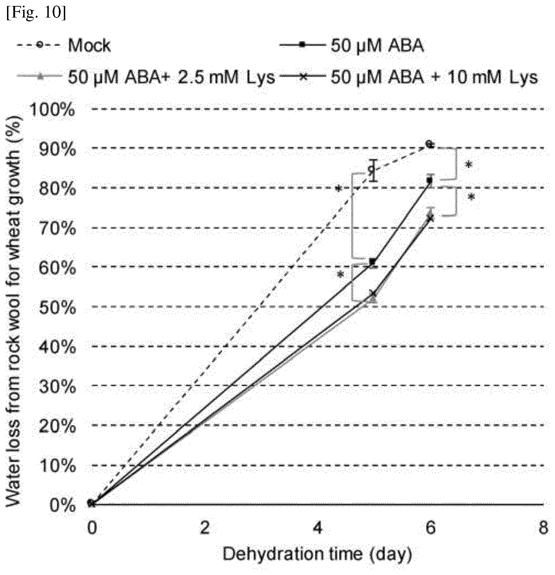

The results of measuring the water loss are shown in Figure 10. The dehydration amount on the 5th day was approximately 84% in the control treatment group, whereas the dehydration amount on the 5th day was approximately 61% in the treatment group with 10 µM ABA, and that is, a water retention effect by ABA was observed. On the other hand, the dehydration amount on the 5th day was lowered to approximately 52% in the treatment group with 10 µM ABA in combination with 2.5 mM of Lys and approximately 54% in the treatment group with 10 µM ABA in combination with 10 mM of Lys, and that is, the water retention effect by ABA was observed to be enhanced by Lys. Similarly, the dehydration amount on the 6th day was approximately 91% in the control treatment group, approximately 82% in the treatment group with 10 µM ABA, approximately 74% in the treatment group with 10 µM ABA in combination with 2.5 mM of Lys, and approximately 72% in the treatment group with 10 µM ABA in combination with 10 mM of Lys, and that is, a water retention effect by ABA and enhancement thereof by Lys were observed.

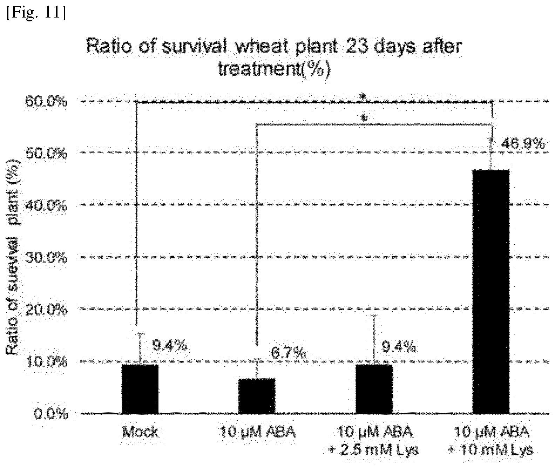

The results regarding the survival rate are shown in Figure 11. The survival rate was 9.4% (3/32 individuals) in the control treatment group (Mock) and 6.7% (2/30 individuals) in the treatment group with 10 µM ABA, whereas the survival rate was 9.4% (3/32 individuals) in the treatment group with 10 µM ABA added with 2.5 mM of Lys and 46.9% (15/32 individuals) in the treatment group with 10 µM ABA added with 10 mM of Lys.

From these results, it was confirmed that the effect of conferring drought stress tolerance (for example, the water retention effect under drought stress and the survival rate improving effect under drought stress) of wheat by ABA can be enhanced by Lys.

### [Example 10] Effect of enhancing yield of tomato under drought stress by a combination of Lys and ABA

A pot test of tomato was carried out in a greenhouse in Valencia, Spain. The test was carried out using 20 pots (= 20 replications) of tomatoes grown on pots of 0.3 m² size. The variety of tomato used was Caramba. The treatment groups are shown in Table 8. Abscisic acid used was (S)-(+)-abscisic acid and Lys used was L-Lys hydrochloride. Foliar spray treatments were carried out four times. The first treatment was carried out at time 61 on the BBCH scale (BBCH61: when the first flower of the first inflorescence bloomed), the second treatment was carried out 21 days after the first treatment, the third treatment was carried out 14 days after the second treatment, and the fourth treatment was carried out 14 days after the third treatment. A harvest survey was carried out at time 82 on the BBCH scale (BBCH82: when 20% of the fruit were fully ripe and colored).

The results are shown in Table 8. The yield per plot was 1452.9 g in the Control (without drought stress) group, which was under normal conditions, whereas it decreased to 924.2 g in the Control (with drought stress) group, which was under conditions of reducing water content to 50%. On the other hand, it was 1008.1 g and 1081.6 g in the treatment groups with 10 µM ABA and 100 µM ABA under conditions of reducing water content to 50%, respectively. On the other hand, it was 1092.3 g and 1142.6 g in the treatment groups with a combination of 10 µM ABA and 2.5 mM of Lys and a combination of 100 µM ABA and 25 mM of Lys, respectively. From these results, it was confirmed that the effect of conferring drought stress tolerance (for example, the yield increasing effect under drought stress) of tomato by ABA can be enhanced by Lys.

**Table 8**

| | **Drought stress** | **Treatment** | **Yield (g/plot accumulation)** | **% to T2** |
|---|---|---|---|---|
| T1 | No stress | Control (without drought stress) | 1452.9 | 157.2% |
| T2 | | Control (with drought stress) | 924.2 | 100.0% |
| T3 | With drought stress: | 10 µM ABA | 1008.1 | 109.1% |
| T4 | 50% water compared to Control without drought stress | 100 µM ABA | 1081.6 | 117.0% |
| T5 | | 10 µM ABA + 2.5 mM Lys | 1092.3 | 118.2% |
| T6 | | 100 µM ABA + 25 mM Lys | 1142.6 | 123.6% |
| T7 | | 2.5 mM Lys | 1089.3 | 117.9% |
| T8 | | 25 mM Lys | 1114.6 | 120.6% |

### [Synthesis example 1]

The compound I-53 was obtained by the following method.

### (Step 1) Synthesis of the compound I-53 intermediate 1

An acetonitrile solution (5 mL) of Boc-Ala-OH (90 mg, 0.48 mmol) was added with HOAt (71 mg, 0.52 mmol) and WSC•HCl (102 mg, 0.53 mmol), and stirred at room temperature for 1 hour. The reaction mixture was added with H-Dap(Boc)-OMe•HCl (130 mg, 0.51 mmol) and triethylamine (0.1 mL, 0.72 mmol), and stirred at room temperature for 3 hours. The reaction mixture was added with ethyl acetate, and washed with 10% citric acid aqueous solution and saturated sodium bicarbonate aqueous solution in sequence by partitioning. The organic layer was dried by dehydration with anhydrous sodium sulfate, and then concentrated to dryness under reduced pressure, to obtain the compound I-53 intermediate 1.
Yield 84%; ESI MS m/z 412.1 (M+Na)⁺; ¹H NMR (400 MHz, CD₃OD) δ 4.50 (1H, t, J=6.0 Hz), 4.10 (1H, q, J=7.2 Hz), 3.74 (3H, s), 3.55-3.42 (2H, m), 1.47 (9H, s), 1.45 (9H, s), 1.33 (3H, d, J=7.2 Hz).

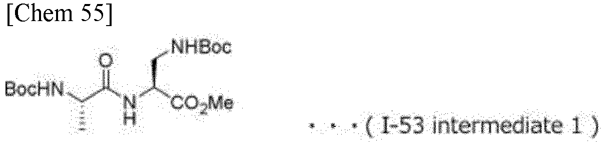

### (Step 2) Synthesis of the compound I-53 intermediate 2

The compound I-53 intermediate 1 (177 mg, 0.45 mmol) was dissolved in ethanol (2 mL), added with 1N NaOH aqueous solution (1 mL), and stirred at room temperature for 2 hours. The reaction mixture was added with 1N HCl to adjust pH to acidic, and then subject to partitioning extraction with ethyl acetate. The organic layer was dried by dehydration with anhydrous sodium sulfate, and then concentrated to dryness under reduced pressure, to obtain the compound I-53 intermediate 2.
Yield 87%; ESI MS m/z 376.1 (M+H)⁺; ¹H NMR (400 MHz, CD₃OD) δ 4.51 (1H, m), 4.10 (1H, m), 3.57 (1H, dd, J=4.8, 14.0 Hz), 3.42 (1H, dd, J=7.2, 14.0 Hz), 1.47 (12H, s), 1.45 (6H, s), 1.34 (3H, d, J=6.8 Hz).

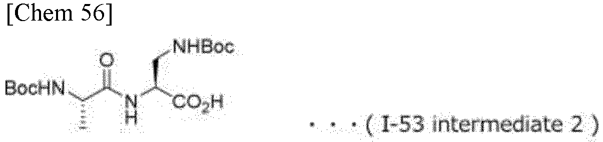

### (Step 3) Synthesis of the compound I-53

The compound I-53 intermediate 2 (22 mg, 0.059 mmol) was dissolved in 4N hydrogen chloride dioxane solution (2 mL), and stirred at room temperature for 3 hours. The reaction mixture was concentrated to dryness under reduced pressure, to obtain the compound I-53 (2HCl salt).
Yield 99%; ESI MS m/z 176.0 (M+H)⁺; ¹H NMR (400 MHz, D₂O) δ 4.76 (1H, dd, J=5.6, 8.0 Hz), 4.11 (1H, q, J=7.2 Hz), 3.51 (1H, dd, J=5.6, 13.2 Hz), 3.26 (1H, dd, J=8.0, 13.2 Hz), 1.50 (3H, d, J=7.2 Hz).

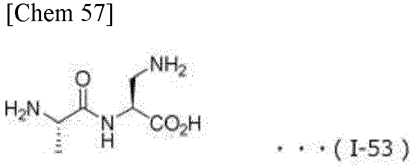

### [Synthesis example 2]

The compound I-54 was obtained by the following method.

### (Step 1) Synthesis of the compound I-54 intermediate 1

The compound I-54 intermediate 1 was obtained from Boc-Phe-OH and H-Dap(Boc)-OMe•HCl as raw materials by the same reaction as Step 1 of Synthesis example 1.
Yield 87%; ESI MS m/z 466.2 (M+H)⁺; ¹H NMR (400 MHz, CD₃OD) δ 7.30-7.22 (5H, m), 4.51 (1H, dd, J=4.8, 6.0 Hz), 4.34 (1H, dd, J=5.6, 8.8 Hz), 3.72 (3H, s), 3.53-3.44 (2H, m), 3.14 (1H, dd, J=5.6, 14.0 Hz), 2.85 (1H, dd, J=8.8, 14.0 Hz), 1.44 (9H, s), 1.39 (9H, s).

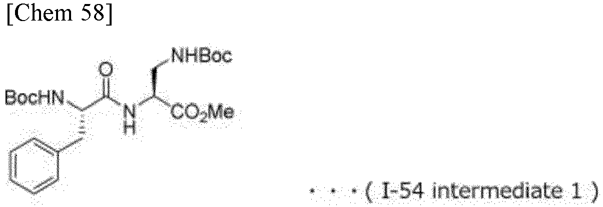

### (Step 2) Synthesis of the compound I-54 intermediate 2

The compound I-54 intermediate 2 was obtained from the compound I-54 intermediate 1 as a raw material by the same reaction as Step 2 of Synthesis example 1. Yield 95%; ESI MS m/z 452.2 (M+H)⁺; ¹H NMR (400 MHz, CD₃OD) δ 7.31-7.21 (5H, m), 4.52 (1H, m), 4.34 (1H, dd, J=4.8, 9.6 Hz), 3.57 (1H, dd, J=4.4, 14.0 Hz), 3.43 (1H, dd, J=7.2, 14.0 Hz), 3.17 (1H, dd, J=4.8, 13.6 Hz), 2.85 (1H, dd, J=9.6, 13.6 Hz), 1.45 (9H, s), 1.38 (9H, s).

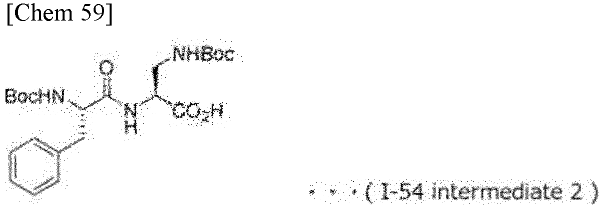

### (Step 3) Synthesis of the compound I-54

The compound I-54 (2HCl salt) was obtained from the compound I-54 intermediate 2 as a raw material by the same reaction as Step 3 of Synthesis example 1. Yield 99%; ESI MS m/z 252.0 (M+H)⁺; ¹H NMR (400 MHz, D₂O) δ 7.37-7.30 (3H, m), 7.25-7.23 (2H, m), 4.68 (1H, dd, J=6.0, 7.6 Hz), 4.27 (1H, t, J=7.2 Hz), 3.44 (1H, dd, J=6.0, 13.2 Hz), 3.24-3.12 (3H, m).

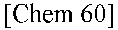

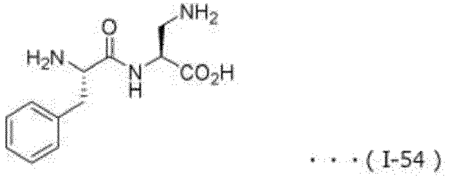

### [Synthesis example 3]

The compound I-55 was obtained by the following method.

### (Step 1) Synthesis of the compound I-55 intermediate

The compound I-55 intermediate was obtained from the compound I-53 intermediate 2 and H-Gly-OEt•HCl as raw materials by the same reaction as Step 1 of Synthesis example 1.
Yield 90%; ESI MS m/z 461.2 (M+H)⁺; ¹H NMR (400 MHz, CD₃OD) δ 4.38 (1H, dd, J=4.4, 8.0 Hz), 4.08 (2H, q, J=7.2 Hz), 3.92 (1H, q, J=7.2 Hz), 3.83 (1H, m), 3.42 (1H, dd, J=4.4, 14.0 Hz), 3.27 (1H, dd, J=7.6, 14.0 Hz), 1.35 (18H, s), 1.23 (3H, d, J=7.2 Hz), 1.17 (3H, t, J=7.2 Hz).

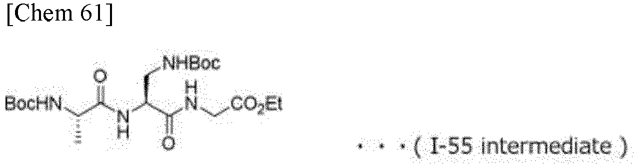

### (Step 2) Synthesis of the compound I-55

The compound I-55 (2HCl salt) was obtained from the compound I-55 intermediate as a raw material by the same reaction as Steps 2 and 3 of Synthesis example 1.
Yield 96%; ESI MS m/z 233.0 (M+H)⁺; ¹H NMR (400 MHz, D₂O) δ 4.80 (1H, dd, J=5.6, 8.0 Hz), 4.09 (1H, q, J=7.2 Hz), 3.96 (2H, s), 3.45 (1H, dd, J=5.2, 13.6 Hz), 3.24 (1H, dd, J=8.0, 13.6 Hz), 1.49 (3H, d, J=7.2 Hz).

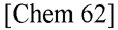

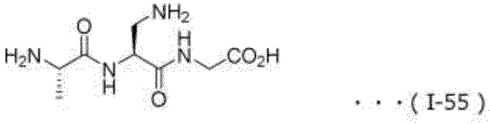

### [Synthesis example 4]

The compound I-56 was obtained by the following method.

### (Step 1) Synthesis of the compound I-56 intermediate

The compound I-56 intermediate was obtained from the compound I-53 intermediate 2 and H-Ser-OMe•HCl as raw materials by the same reaction as Step 1 of Synthesis example 1.
Yield 79%; ESI MS m/z 477.2 (M+H)⁺; ¹H NMR (400 MHz, CD₃OD) δ 4.43-4.39 (2H, m), 3.96 (1H, q, J=7.2 Hz), 3.80 (1H, dd, J=4.8, 11.6 Hz), 3.71 (1H, dd, J=4.0, 11.6 Hz), 3.65 (3H, s), 3.42 (1H, dd, J=4.8, 14.0 Hz), 3.25 (1H, dd, J=7.6, 14.0 Hz), 1.35 (9H, s), 1.34 (9H, s), 1.22 (3H, d, J=7.2 Hz).

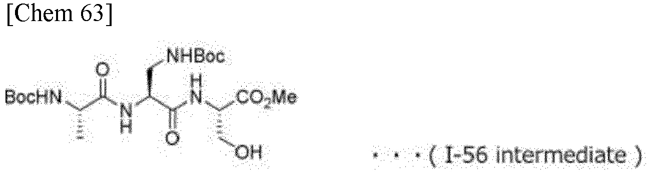

### (Step 2) Synthesis of the compound I-56

The compound I-56 (2HCl salt) was obtained from the compound I-56 intermediate as a raw material by the same reaction as Steps 2 and 3 of Synthesis example 1.
Yield 92%; ESI MS m/z 263.0 (M+H)⁺; ¹H NMR (400 MHz, D₂O) δ 4.81 (1H, dd, J=5.2, 8.0 Hz), 4.46 (1H, m), 4.09 (1H, q, J=7.2 Hz), 3.94-3.80 (2H, m), 3.46 (1H, dd, J=5.2, 13.2 Hz), 3.26 (1H, dd, J=8.0, 13.2 Hz), 1.49 (3H, d, J=7.2 Hz).

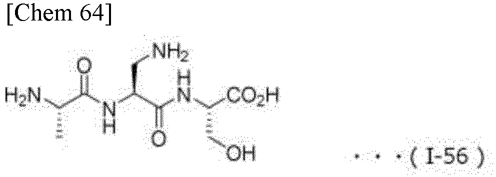

### [Synthesis example 5]

The compound I-57 was obtained by the following method.

### (Step 1) Synthesis of the compound I-57 intermediate

The compound I-57 intermediate was obtained from the compound I-53 intermediate 2 and H-Leu-OMe•HCl as raw materials by the same reaction as Step 1 of Synthesis example 1.
Yield 87%; ESI MS m/z 503.3 (M+H)⁺; ¹H NMR (400 MHz, CD₃OD) δ 4.37-4.32 (2H, m), 3.93 (1H, m), 3.98 (1H, dd, J=4.8, 14.0 Hz), 3.61 (3H, s), 3.24 (1H, m), 1.59-1.51 (3H, m), 1.35 (12H, s), 1.34 (6H, s), 1.21 (3H, d, J=7.2 Hz), 0.85 (3H, d, J=6.4 Hz), 0.81 (3H, d, J=6.4 Hz)

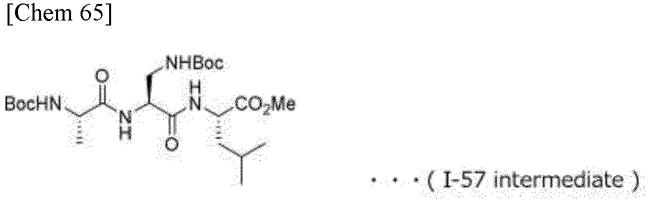

### (Step 2) Synthesis of the compound I-57

The compound I-57 (2HCl salt) was obtained from the compound I-57 intermediate as a raw material by the same reaction as Steps 2 and 3 of Synthesis example 1.
Yield 96%; ESI MS m/z 289.1 (M+H)⁺; ¹H NMR (400 MHz, D₂O) δ 4.80 (1H, dd, J=5.2, 8.0 Hz), 4.33 (1H, m), 4.09 (1H, q, J=7.2 Hz), 3.41 (1H, dd, J=5.2, 13.2 Hz), 3.22 (1H, dd, J=8.4, 13.2 Hz), 1.64-1.56 (3H, m), 1.47 (3H, d, J=7.2 Hz), 0.85 (3H, d, J=6.4 Hz), 0.81 (3H, d, J=6.4 Hz).

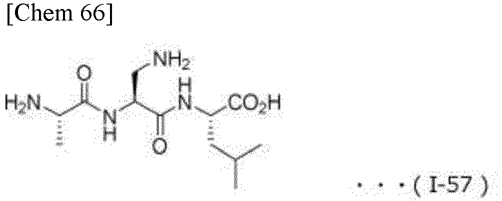

### [Synthesis example 6]

The compound I-58 was obtained by the following method.

### (Step 1) Synthesis of the compound I-58 intermediate

The compound I-58 intermediate was obtained from the compound I-53 intermediate 2 and H-Phe-OMe•HCl as raw materials by the same reaction as Step 1 of Synthesis example 1.
Yield 90%; ESI MS m/z 537.3 (M+H⁺; ¹H NMR (400 MHz, CD₃OD) δ 7.20-7.15 (2H, m), 7.13-7.08 (3H, m), 4.55 (1H, dd, J=6.0, 8.0 Hz), 4.34 (1H, dd, J=4.4, 8.0 Hz), 3.94 (1H, m), 3.58 (3H, s), 3.33 (1H, dd, J=4.4, 14.0 Hz), 3.17 (1H, dd, J=7.6, 14.0 Hz), 3.04 (1H, dd, J=6.0, 14.0 Hz), 2.91 (1H, dd, J=8.0, 14.0 Hz), 1.35 (6H, s), 1.33 (12H, s), 1.18 (3H, d, J=7.2 Hz).

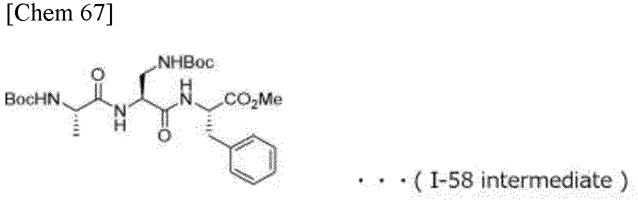

### (Step 2) Synthesis of the compound I-58

The compound I-58 (2HCl salt) was obtained from the compound I-58 intermediate as a raw material by the same reaction as Steps 2 and 3 of Synthesis example 1.
Yield 93%; ESI MS m/z 323.1 (M+H)⁺; ¹H NMR (400 MHz, D₂O) δ 7.32-7.19 (5H, m), 4.66 (1H, dd, J=5.2, 13.6 Hz), 3.98 (1H, q, J=7.2 Hz), 3.32 (1H, dd, J=5.2, 13.6 Hz), 3.23 (1H, dd, J=5.2, 14.0 Hz), 3.13 (1H, dd, J=8.8, 13.6 Hz), 2.95 (1H, dd, J=9.2, 14.0 Hz), 1.34 (3H, d, J=7.2 Hz).

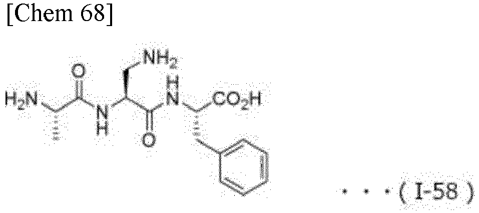

### [Synthesis example 7]

The compound I-59 was obtained by the following method.

### (Step 1) Synthesis of the compound I-59 intermediate 1

H-Dap(Boc)-OMe•HCl (251 mg, 0.99 mmol) was dissolved in methanol (3 mL), then added with 4N hydrogen chloride dioxane solution (1 mL), and stirred at room temperature for 2 hours. The reaction mixture was concentrated to dryness under reduced pressure, to obtain the compound I-59 intermediate 1 (2HCl salt).
Yield 99%; ¹H NMR (400 MHz, D₂O) δ 4.44 (1H, dd, J=5.6, 8.0 Hz), 3.84 (3H, s), 3.55 (1H, dd, J=8.0, 13.6), 3.46 (1H, dd, J=5.6, 13.6 Hz).

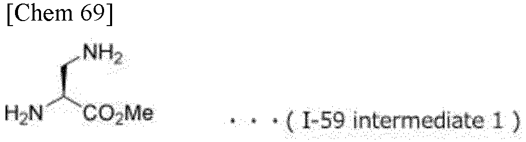

### (Step 2) Synthesis of the compound I-59 intermediate 2

The compound I-59 intermediate 2 was obtained from Boc-Tyr-OH and the compound I-59 intermediate 1 as raw materials by the same reaction as Step 1 of Synthesis example 1.
Yield 45%; ESI MS m/z 645.3 (M+H)⁺; ¹H NMR (400 MHz, CD₃OD) δ 7.07 (2H, d, J=8.4 Hz), 7.05 (2H, d, J=8.4 Hz), 4.55 (1H, t, J=6.0 Hz), 4.26 (1H, m), 4.19 (1H, dd, J=5.6, 9.2 Hz), 3.72 (3H, s), 3.58-3.56 (2H, m), 3.06-2.97 (2H, m), 2.79-2.68 (2H, m), 1.38 (9H, s), 1.37 (9H, s).

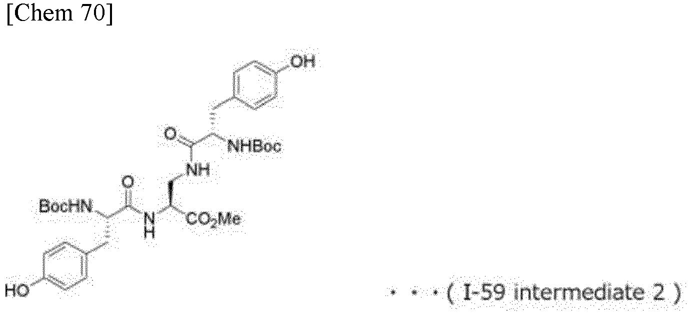

### (Step 3) Synthesis of the compound I-59

The compound I-59 (2HCl salt) was obtained from the compound I-59 intermediate 2 as a raw material by the same reaction as Steps 2 and 3 of Synthesis example 1.
Yield 99%; ESI MS m/z 431.2 (M+H)⁺; ¹H NMR (400 MHz, D₂O) δ 7.08-7.06 (4H, m), 6.81-6.78 (4H, m), 4.07-4.02 (3H, m), 3.43 (2H, d, J=5.6 Hz), 3.11-2.93 (4H, m).

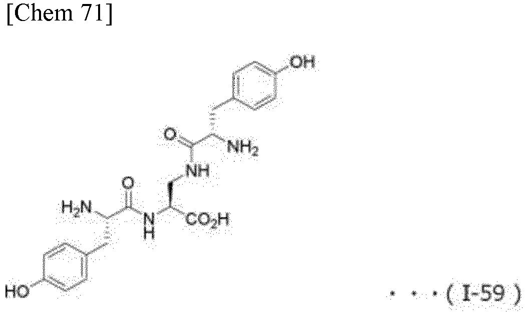

### [Synthesis example 8]

The compound I-60 was obtained by the following method.

### (Step 1) Synthesis of the compound I-60 intermediate

The compound I-59 intermediate 2 (40 mg, 0.062 mmol) was dissolved in ethanol (2 mL), and then added with a hexane solution of TMS diazomethane and stirred for 10 minutes under ice-cold conditions. The reaction mixture was added with diisopropylethylamine (0.05 mL), and further stirred for 18 hours. The reaction mixture was concentrated to dryness under reduced pressure, to obtain the compound I-60 intermediate.
Yield 99%; ESI MS m/z 673.4 (M+H)⁺; ¹H NMR (400 MHz, CD₃OD) δ 7.07-7.01 (4H, m), 6.65-6.71 (4H, m), 4.43 (1H, dd, J=5.6, 6.4 Hz), 4.17 (1H, dd, J=5.6, 9.2 Hz), 4.09 (1H, dd, J=5.6, 9.2 Hz), 3.653 (3H, s), 3.648 (3H, s), 3.47-3.41 (2H, m), 2.98-2.89 (2H, m), 2.71-2.59 (2H, m), 1.26 (9H, s), 1.25 (9H, s).

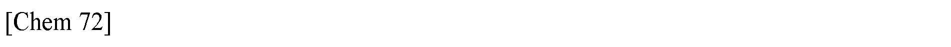

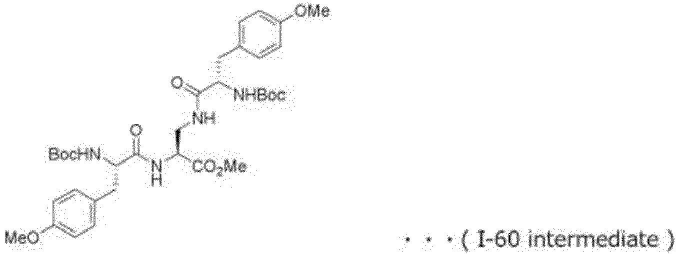

### (Step 2) Synthesis of the compound I-60

The compound I-60 (2HCl salt) was obtained from the compound I-60 intermediate as a raw material by the same reaction as Steps 2 and 3 of Synthesis example 1. The HCl salt was further purified by reversed-phase HPLC (water-acetonitrile containing 0.1% formic acid), to obtain the corresponding formate salt. Yield 91%; ESI MS m/z 459.2 (M+H)⁺; ¹H NMR (400 MHz, D₂O) δ 8.26 (1H, brs), 7.17-7.09 (4H, m), 6.93-6.89 (4H, m), 4.14-4.06 (2H, m), 4.01 (1H, t, J=7.2 Hz), 3.73 (6H, s), 3.23 (1H, dd, J=5.6, 14.0 Hz), 3.15 (1H, dd, J=6.4, 14.0 Hz), 3.04 (2H, d, J=7.6 Hz), 2.99 (2H, d, J=7.2 Hz).

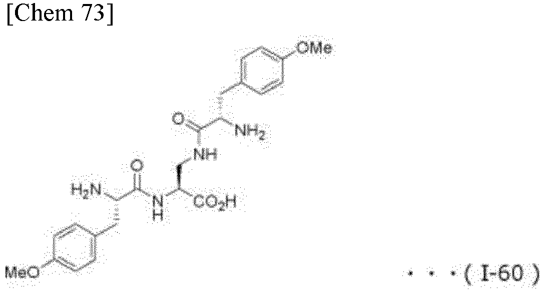

### [Synthesis example 9]

The compound I-61 was obtained by the following method.

### (Step 1) Synthesis of the compound I-61 intermediate

The compound I-61 intermediate was obtained from benzoic acid and the compound I-59 intermediate 1 as raw materials by the same reaction as Step 1 of Synthesis example 1.
Yield 41%; ESI MS m/z 327.0 (M+H)⁺; ¹H NMR (400 MHz, CD₃OD) δ 7.76-7.68 (4H, m), 7.45-7.32 (6H, m), 4.75 (1H, dd, J=5.2, 6.8 Hz), 3.84 (1H, dd, J=5.2, 14.0 Hz), 3.79 (1H, dd, J=6.8, 14.0 Hz), 3.67 (3H, s).

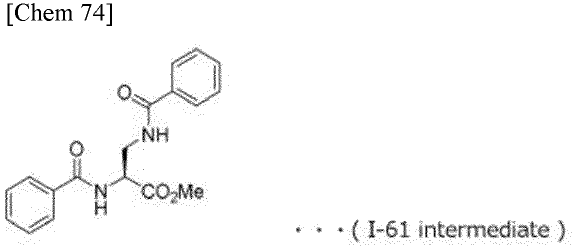

### (Step 2) Synthesis of the compound I-61

The compound I-61 was obtained from the compound I-61 intermediate as a raw material by the same reaction as Step 2 of Synthesis example 1.
Yield 85%; ESI MS m/z 313.0 (M+H)⁺; ¹H NMR (400 MHz, CD₃OD) δ 7.76-7.68 (4H, m), 7.46-7.32 (6H, m), 3.88-3.78 (2H, m).

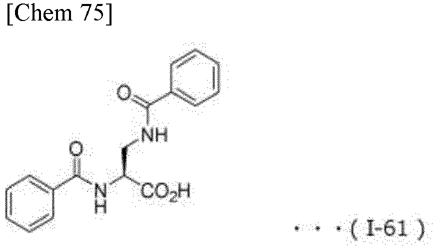

### [Synthesis example 10]

The compound I-62 was obtained by the following method.

### (Step 1) Synthesis of the compound I-62 intermediate

The compound I-62 intermediate was obtained from 1-naphthalene acetic acid and the compound I-59 intermediate 1 as raw materials by the same reaction as Step 1 of Synthesis example 1.
Yield 43%; ESI MS m/z 455.2 (M+H)⁺; ¹H NMR (400 MHz, CD₃OD) δ 7.87-7.67 (6H, m), 7.41-7.17 (8H, m), 4.39 (1H, dd, J=5.2, 7.2 Hz), 3.77 (3H, s), 3.50-3.37 (4H, m).

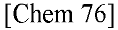

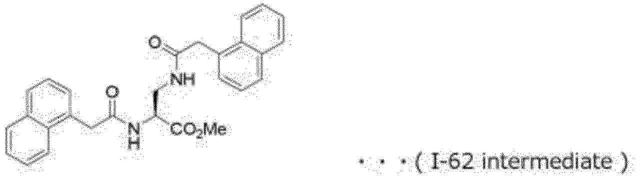

### (Step 2) Synthesis of the compound I-62

The compound I-62 was obtained from the compound I-62 intermediate as a raw material by the same reaction as Step 2 of Synthesis example 1.
Yield 88%; ESI MS m/z 441.1 (M+H)⁺; ¹H NMR (400 MHz, D₂O) δ 7.88-7.66 (6H, m), 7.39-7.12 (8H, m), 4.42 (1H, dd, J=4.8, 8.0 Hz), 3.75 (2H, s), 3.74 (2H, s), 3.52 (1H, dd, J=4.8, 14.0 Hz), 3.41 (1H, dd, J=8.0, 14.0 Hz).

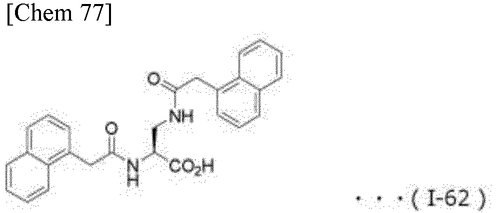

### [Synthesis example 11]

The compound I-63 was obtained by the following method.

### (Step 1) Synthesis of the compound I-63 intermediate

The compound I-63 intermediate was obtained from 4-tolyl acetic acid and the compound I-59 intermediate 1 as raw materials by the same reaction as Step 1 of Synthesis example 1.
Yield 33%; ESI MS m/z 383.1 (M+H)⁺; ¹H NMR (400 MHz, CD₃OD) δ 7.05-6.99 (8H, m), 4.41 (1H, dd, J=5.2, 7.2 Hz), 3.53 (3H, s), 3.49 (1H, dd, J=5.2, 13.6 Hz), 3.40 (1H, dd, J=7.2, 13.6 Hz), 3.34 (2H, d, J=1.2 Hz), 3.29 (2H, s), 2.20 (6H, s).

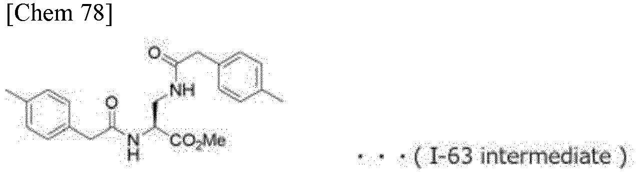

### (Step 2) Synthesis of the compound I-63

The compound I-63 was obtained from the compound I-63 intermediate as a raw material by the same reaction as Step 2 of Synthesis example 1.
Yield 79%; ESI MS m/z 369.1 (M+H)⁺; ¹H NMR (400 MHz, CD₃OD) δ 7.05-6.99 (8H, m), 4.43 (1H, dd, J=4.8, 8.0 Hz), 3.52 (1H, dd, J=4.8, 13.6 Hz), 3.41 (1H, dd, J=8.0, 13.6 Hz), 3.33 (2H, s), 3.29 (2H, s), 2.20 (6H, s).

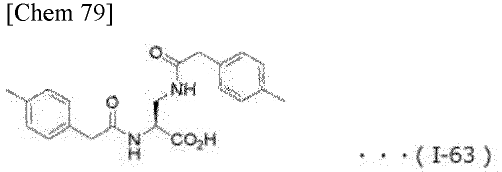

### [Synthesis example 12]

The compound I-64 was obtained by the following method.

### (Step 1) Synthesis of the compound I-64 intermediate

The compound I-64 intermediate was obtained from 4-chlorophenyl acetic acid and the compound I-59 intermediate 1 as raw materials by the same reaction as Step 1 of Synthesis example 1.
Yield 41%; ESI MS m/z 423.0 (M+H)⁺; ¹H NMR (400 MHz, CD₃OD) δ 7.20-7.11 (8H, m), 4.43 (1H, dd, J=5.6, 7.2 Hz), 3.55 (3H, s), 3.52 (1H, dd, J=5.6, 14.0 Hz), 3.42 (1H, dd, J=7.2, 14.0 Hz), 3.39 (2H, d, J=4.0 Hz), 3.34 (2H, s).

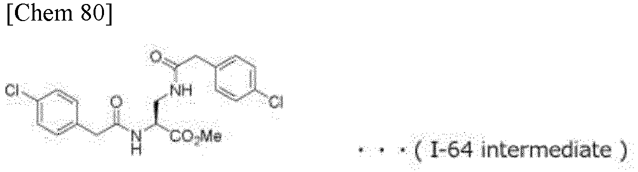

### (Step 2) Synthesis of the compound I-64

The compound I-64 was obtained from the compound I-64 intermediate as a raw material by the same reaction as Step 2 of Synthesis example 1.
Yield 95%; ESI MS m/z 409.0 (M+H)⁺; ¹H NMR (400 MHz, CD₃OD) δ 7.20-7.10 (8H, m), 4.45 (1H, dd, J=4.8, 8.0 Hz), 3.56 (1H, dd, J=4.8, 14.0 Hz), 3.42 (1H, dd, J=8.0, 14.0 Hz), 3.39 (2H, d, J=4.0 Hz), 3.33 (2H, s).

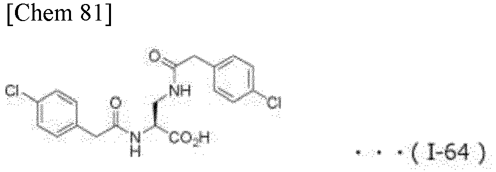

### [Synthesis example 13]

The compound I-65 was obtained by the following method.

A THF solution (2 mL) of Cbz-Dap-OH•HCl (210 mg, 0.76 mmol) was added with 1N NaOH aqueous solution (2.5 mL), and then Cbz-Cl (0.070 mL, 0.49 mmol) under ice-cold condition, and stirred at the same temperature for 10 minutes. The reaction mixture was added with water, then added with 1N HCl to adjust pH to acidic, and then subject to partitioning extraction with ethyl acetate. The organic layer was dried by dehydration with anhydrous sodium sulfate, and then concentrated to dryness under reduced pressure, to obtain the compound I-65.
Yield 42%; ESI MS m/z 371.1 (M-H)⁻; ¹H NMR (400 MHz, CD₃OD) δ 7.42-7.14 (10H, m), 5.10 (2H, s), 5.08 (2H, s), 4.37 (1H, dd, J=4.8, 7.6 Hz), 3.63 (1H, dd, J=4.8, 14.0 Hz), 3.46 (1H, dd, J=7.6, 14.0 Hz).

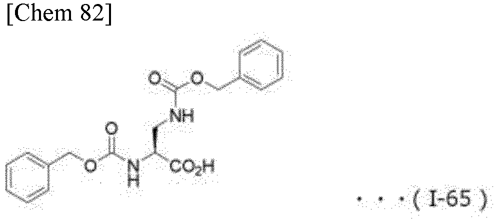

### [Synthesis example 14]

The compound I-66 was obtained by the following method.

An ethanol solution (1 mL) of the compound I-65 (30 mg, 0.081 mmol) was added with 10% TMS diazomethane hexane solution dropwise until the reaction solution turns yellow, and stirred at the same temperature for 5 minutes. The reaction mixture was concentrated to dryness under reduced pressure, to obtain the compound I-66.
Yield 99%; ESI MS m/z 400.0 (M+Na)⁺; ¹H NMR (400 MHz, CD₃OD) δ 7.26-7.17 (10H, m), 4.98 (2H, s), 4.96 (2H, s), 4.25 (1H, dd, J=5.2, 6.8 Hz), 3.59 (3H, s), 3.45 (1H, dd, J=5.2, 14.0 Hz), 3.36 (1H, dd, J=6.8, 14.0 Hz).

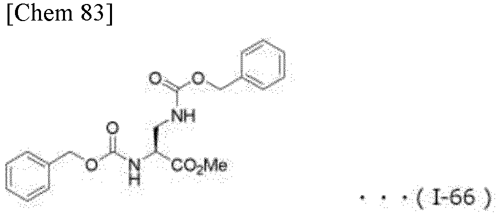

### [Synthesis example 15]

The compound I-67 was obtained by the following method.

### (Step 1) Synthesis of the compound I-67 intermediate

The compound I-67 intermediate was obtained from the compound I-65 and H-Gly-OEt•HCl as raw materials by the same reaction as Step 1 of Synthesis example 1. Yield 43%; ESI MS m/z 458.2 (M+H)⁺; ¹H NMR (400 MHz, CD₃OD) δ 7.26-7.17 (10H, m), 4.99-4.95 (4H, m), 4.24 (1H, m), 4.06 (1H, dd, J=6.8, 14.0 Hz), 4.07 (2H, q, J=7.2 Hz), 3.82 (2H, brs), 3.46 (1H, dd, J=5.2, 14.0 Hz), 3.29 (1H, dd, J=7.6, 14.0 Hz), 1.15 (3H, t, J=7.2 Hz).

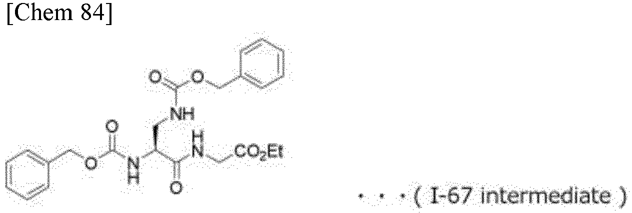

### (Step 2) Synthesis of the compound I-67

The compound I-67 was obtained from the compound I-67 intermediate as a raw material by the same reaction as Step 2 of Synthesis example 1.
Yield 80%; ESI MS m/z 430.1 (M+H)⁺; ¹H NMR (400 MHz, CD₃OD) δ 7.25-7.18 (10H, m), 5.00-4.95 (4H, m), 4.25 (1H, m), 3.81 (2H, brs), 3.51-3.28 (2H, m).

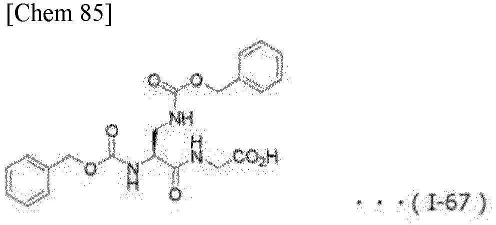

### [Synthesis example 16]

The compound I-68 was obtained by the following method.

The compound I-68 was obtained from the compound I-29 and H-Sar-OH as raw materials by the same reaction as Step 1 of Synthesis example 1. Yield 92%; ESI MS m/z 486.2 (M+H)⁺; ¹H NMR (400 MHz, CD₃OD) δ 7.37-7.29 (10H, m), 5.13-5.07 (4H, m), 4.65 (0.7H, dd, J=4.8, 8.8 Hz), 4.55 (0.3H, d, J=18.4 Hz), 4.33 (0.7H, d, J=17.6 Hz), 4.13 (0.3H, d, J=18.4 Hz), 3.99 (0.7H, d, J=17.6 Hz), 3.19 (1.4H, s), 3.15-3.09 (2H, m), 2.98 (0.6H, s), 1.76 (1H, m), 1.63 (1H, m), 1.59-1.39 (4H, m).

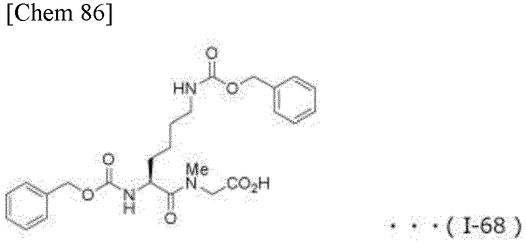

### [Synthesis example 17]

The compound I-69 was obtained by the following method.

The compound I-69 was obtained from the compound I-29 and ethylene glycol as raw materials by the same reaction as Step 1 of Synthesis example 1.
Yield 99%; ESI MS m/z 459.2 (M+H)⁺; ¹H NMR (400 MHz, CD₃OD) δ 7.36-7.29 (10H, m), 5.10 (2H, s), 5.07 (2H, s), 4.25-4.18 (3H, m), 3.75-3.72 (2H, m), 3.12 (2H, t, J=6.8 Hz), 1.86 (1H, m), 1.71 (1H, m), 1.55-1.40 (4H, m).

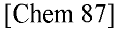

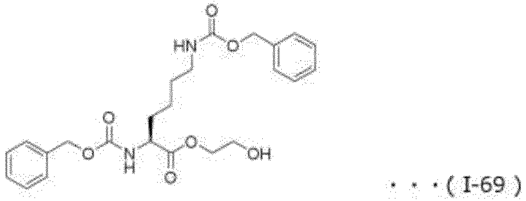

### [Synthesis example 18]

The compound I-70 was obtained by the following method.

### (Step 1) Synthesis of the compound I-70 intermediate 1

The compound I-70 intermediate 1 was obtained from 3-phenylpropionic acid and Boc-Dap-OMe•HCl as raw materials by the same reaction as Step 1 of Synthesis example 1.
Yield 45%; ESI MS m/z 395.2 (M+HCO₂⁻)^{- 1}H NMR (400 MHz, CD₃OD) δ 7.30-7.16 (5H, m), 4.25 (1H, dd, J=5.2, 6.8 Hz), 3.73 (3H, s), 3.56 (1H, dd, J=5.2, 14.0 Hz), 3.46 (1H, dd, J=6.8, 14.0 Hz), 2.93-2.90 (2H, m), 2.51-2.47 (2H, m), 1.46 (9H, s).

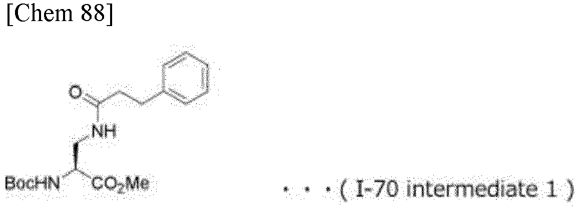

### (Step 2) Synthesis of the compound I-70 intermediate 2

The compound I-70 intermediate 2 (HCl salt) was obtained from the compound I-70 intermediate 1 as a raw material by the same reaction as Step 3 of Synthesis example 1.
Yield 99%; ESI MS m/z 251.0 (M+H)⁺; ¹H NMR (400 MHz, CD₃OD) δ 7.30-7.18 (5H, m), 4.21 (1H, t, J=4.8 Hz), 3.85 (3H, s), 3.77 (1H, dd, J=4.8, 14.8 Hz), 3.65 (1H, m), 2.95-2.91 (2H, m), 2.59-2.55 (2H, m).

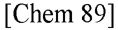

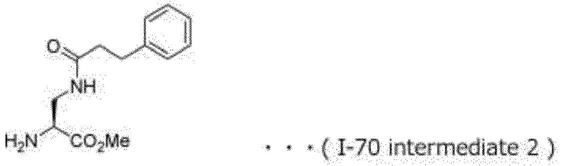

### (Step 3) Synthesis of the compound I-70 intermediate 3

The compound I-70 intermediate 3 was obtained from Boc-Leu-OH•H₂O and the compound I-70 intermediate 2 as raw materials by the same reaction as Step 1 of Synthesis example 1.
Yield 85%; ESI MS m/z 464.2 (M+H)⁺; ¹H NMR (400 MHz, CD₃OD) δ 7.30-7.26 (2H, m), 7.23-7.17 (3H, m), 4.55 (1H, dd, J=4.8, 7.2 Hz), 4.10 (1H, m), 3.73 (3H, s), 3.67 (1H, dd, J=4.8, 14.0 Hz), 3.49 (1H, dd, J=7.2, 14.0 Hz), 2.93-2.89 (2H, m), 2.51-2.47 (2H, m), 1.73 (1H, m), 1.56-1.47 (2H, m), 1.44 (9H, s), 0.98 (3H, d, J=6.8 Hz), 0.96 (3H, d, J=6.4 Hz).

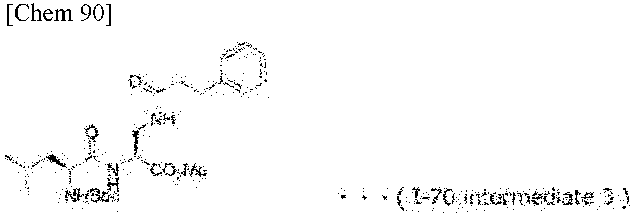

### (Step 4) Synthesis of the compound I-70 intermediate 4

The compound I-70 intermediate 4 was obtained from the compound I-70 intermediate 3 as a raw material by the same reaction as Step 2 of Synthesis example 1. Yield 95%; ESI MS m/z 450.2 (M+H)⁺; ¹H NMR (400 MHz, CD₃OD) δ 7.30-7.16 (5H, m), 4.56 (1H, m), 4.09 (1H, m), 3.73 (1H, dd, J=4.8, 13.6 Hz), 3.47 (1H, dd, J=8.0, 13.6 Hz), 2.93-2.89 (2H, m), 2.52-2.48 (2H, m), 1.73 (1H, m), 1.62-1.50 (2H, m), 1.43 (9H, s), 0.98 (3H, d, J=6.8 Hz), 0.95 (3H, d, J=6.8 Hz).

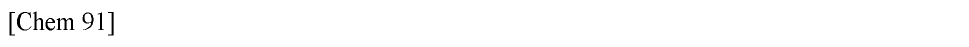

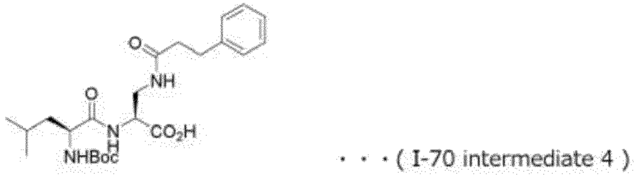

### (Step 5) Synthesis of the compound I-70

The compound I-70 (HCl salt) was obtained from the compound I-70 intermediate 4 as a raw material by the same reaction as Step 3 of Synthesis example 1. Yield 99%; ESI MS m/z 350.1 (M+H)⁺; ¹H NMR (400 MHz, D₂O) δ 7.31-7.27 (2H, m), 7.22-7.18 (3H, m), 4.39 (1H, t, J=5.6 Hz), 3.88 (1H, m), 3.55 (1H, dd, J=4.8, 14.0 Hz), 3.46 (1H, dd, J=6.4, 14.0 Hz), 2.84 (2H, t, J=7.6 Hz), 2.54 (2H, t, J=7.6 Hz), 1.67-1.63 (3H, m), 0.88 (3H, d, J=6.4 Hz), 0.87 (3H, d, J=6.0 Hz).

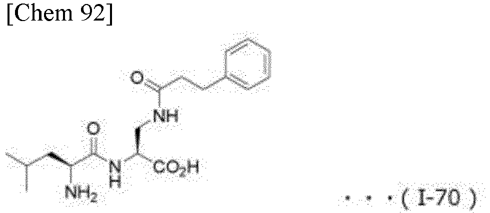

### [Synthesis example 19]

The compound I-71 was obtained by the following method.

### (Step 1) Synthesis of the compound I-71 intermediate 1

The compound I-71 intermediate 1 was obtained from 3-phenylpropionic acid and HCl salt of H-Dap(Boc)-OMe as raw materials by the same reaction as Step 1 of Synthesis example 1.
Yield 45%; ESI MS m/z 395.2 (M+HCO₂⁻)^{- 1}H NMR (400 MHz, CD₃OD) δ 7.31-7.17 (5H, m), 4.47 (1H, t, J=5.6 Hz), 3.72 (3H, s), 3.44-3.39 (2H, m), 2.95-2.91 (2H, m), 2.57-2.54 (2H, m), 1.44 (9H, s).

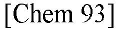

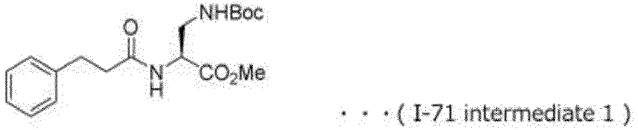

### (Step 2) Synthesis of the compound I-71 intermediate 2

The compound I-71 intermediate 2 (HCl salt) was obtained from the compound I-71 intermediate 1 as a raw material by the same reaction as Step 3 of Synthesis example 1.
Yield 99%; ESI MS m/z 251.0 (M+H)⁺; ¹H NMR (400 MHz, CD₃OD) δ 7.30-7.18 (5H, m), 4.69 (1H, m), 3.76 (3H, s), 3.43 (1H, m), 3.21 (1H, dd, J=4.8, 8.0 Hz), 2.97-2.93 (2H, m), 2.65-2.61 (2H, m).

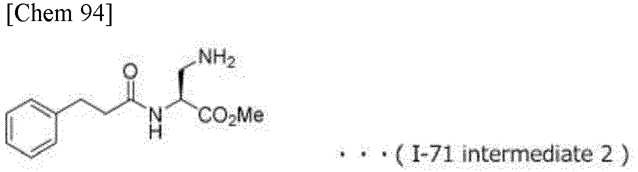

### (Step 3) Synthesis of the compound I-71 intermediate 3

The compound I-71 intermediate 3 was obtained from Boc-Leu-OH•H₂O and the compound I-71 intermediate 2 as raw materials by the same reaction as Step 1 of Synthesis example 1.
Yield 73%; ESI MS m/z 251.0 (M+H)⁺; ¹H NMR (400 MHz, CD₃OD) δ 7.30-7.19 (5H, m), 4.56 (1H, dd, J=5.6, 6.0 Hz), 4.03 (1H, m), 3.72 (3H, s), 3.56-3.50 (2H, m), 2.95-2.91 (2H, m), 2.58-2.54 (2H, m), 1.68 (1H, m), 1.52-1.48 (2H, m), 1.45 (9H, s), 0.96 (3H, d, J=6.4 Hz), 0.94 (3H, d, J=6.4 Hz).

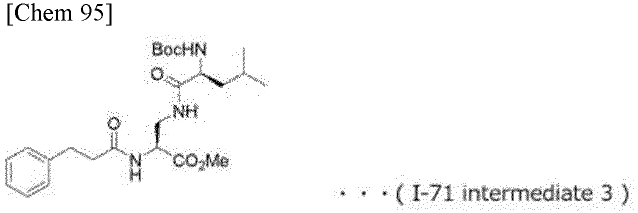

### (Step 4) Synthesis of the compound I-71 intermediate 4

The compound I-71 intermediate 4 (HCl salt) was obtained from the compound I-71 intermediate 3 as a raw material by the same reaction as Step 2 of Synthesis example 1.
Yield 86%; ESI MS m/z 450.2 (M+H)⁺; ¹H NMR (400 MHz, CD₃OD) δ 7.30-7.18 (5H, m), 4.57 (1H, dd, J=4.8, 7.2 Hz), 4.04 (1H, m), 3.68 (1H, dd, J=4.8, 14.0 Hz), 3.51 (1H, m), 2.96-2.92 (2H, m), 2.58-2.54 (2H, m), 1.69 (1H, m), 1.54-1.49 (2H, m), 1.45 (9H, s), 0.96 (3H, d, J=6.4 Hz), 0.94 (3H, d, J=6.4 Hz).

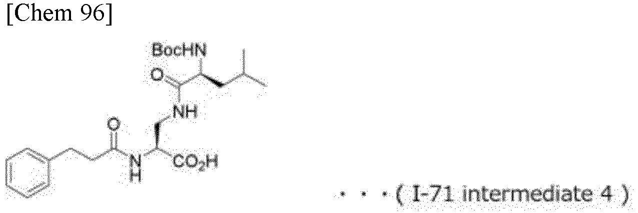

### (Step 5) Synthesis of the compound I-71

The compound I-71 (HCl salt) was obtained from the compound I-71 intermediate 4 as a raw material by the same reaction as Step 3 of Synthesis example 1. Yield 99%; ESI MS m/z 350.1 (M+H)⁺; ¹H NMR (400 MHz, D₂O) δ 7.30-7.27 (2H, m), 7.22-7.19 (3H, m), 4.48 (1H, dd, J=5.6, 7.6 Hz), 3.86 (1H, t, J=7.6 Hz), 3.72 (1H, dd, J=5.6, 14.0 Hz), 3.27 (1H, dd, J=7.6, 14.0 Hz), 2.86 (1H, t, J=7.6 Hz), 2.57-2.52 (2H, m), 1.61-1.54 (3H, m), 0.87 (3H, d, J=6.0 Hz), 0.86 (3H, d, J=6.0 Hz).

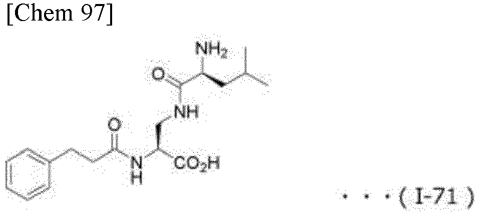

### [Synthesis example 20]

The compound I-72 was obtained by the following method.

### (Step 1) Synthesis of the compound I-72 intermediate

The compound I-72 intermediate was obtained from the compound I-71 intermediate 4 and H-Asp (Ot-Bu)-Ot-Bu•HCl as raw materials by the same reaction as Step 1 of Synthesis example 1.
Yield 84%; ESI MS m/z 677.5 (M+H)⁺; ¹H NMR (400 MHz, CD₃OD) δ 7.19-7.05 (5H, m), 4.55 (1H, dd, J=5.6, 8.0 Hz), 4.39 (1H, dd, J=6.4, 6.8 Hz), 3.95 (1H, m), 3.47 (1H, dd, J=6.8, 14.0 Hz), 3.30 (1H, dd, J=6.4, 14.0 Hz), 2.82-2.78 (2H, m), 2.66-2.63 (2H, m), 2.45-2.41 (2H, m), 1.57 (1H, m), 1.44-1.41 (2H, m), 1.37 (9H, s), 1.36 (9H, s), 1.34 (9H, s), 0.85 (3H, d, J=6.8 Hz), 0.83 (3H, d, J=6.8 Hz).

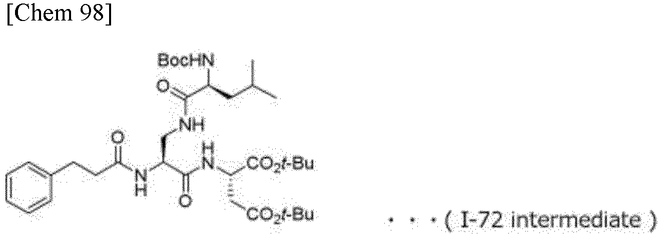

(Step 2) Synthesis of the compound I-72
the compound I-72 (HCl salt) was obtained from the compound I-72 intermediate as a raw material by the same reaction as Synthesis example 1. ESI MS m/z 465.2 (M+H)⁺; ¹H NMR (400 MHz, CD₃OD) δ 7.30-7.27 (2H, m), 7.22-7.18 (3H, m), 4.49- 4.45 (2H, m), 3.86 (1H, t, J=7.2 Hz), 3.50 (1H, m), 3.29 (1H, dd, J=7.6, 14.0 Hz), 2.85 (2H, t, J=7.2 Hz), 2.76-2.72 (2H, m), 2.56-2.52 (2H, m), 1.61-1.49 (3H, m), 0.86 (6H, d, J=6.4 Hz).

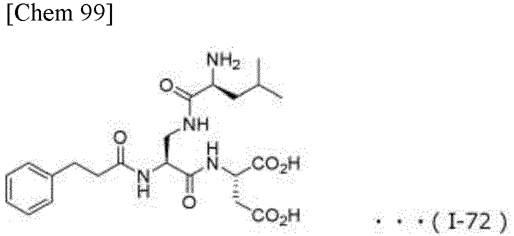

### [Synthesis example 21]

The compound I-73 was obtained by the following method.

### (Step 1) Synthesis of the compound I-73 intermediate

The compound I-73 intermediate was obtained from Cbz-Lys-OMe•HCl and Boc-Leu-OH•H₂O as raw materials by the same reaction as Step 1 of Synthesis example 1.
Yield 91%; ESI MS m/z 508.3 (M+H)⁺; 7.38-7.31 (5H, m), 5.11 (2H, s), 4.18 (1H, dd, J=4.8, 8.8 Hz), 4.05 (1H, dd, J=6.4, 8.4 Hz), 3.72 (3H, s), 3.22-3.16 (2H, m), 1.83 (1H, m), 1.74-1.62 (2H, m), 1.57-1.25 (15H, m), 0.96 (3H, d, J=6.4 Hz), 0.94 (3H, d, J=6.4 Hz).

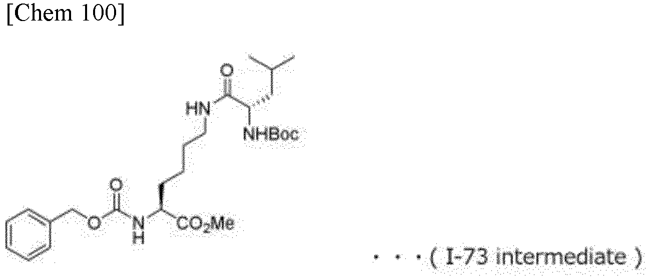

### (Step 2) Synthesis of the compound I-73

The compound I-73 (HCl salt) was obtained from the compound I-73 intermediate as a raw material by the same reaction as Steps 2 and 3 of Synthesis example 1.
Yield 94%; ESI MS m/z 394.1 (M+H)⁺; ¹H NMR (400 MHz, CD₃OD) δ NMR (not measured)

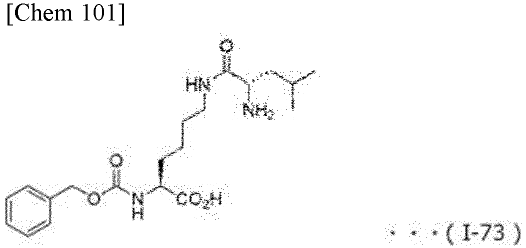

### [Synthesis example 22]

The compound I-74 was obtained by the following method.

### (Step 1) Synthesis of the compound I-74 intermediate

The compound I-74 intermediate was obtained from H-Lys (Cbz)-OMe•HCl and Boc-Leu-OH•H₂O as raw materials by the same reaction as Step 1 of Synthesis example 1.
Yield 86%; ESI MS m/z 508.3 (M+H)⁺; ¹H NMR (400 MHz, CD₃OD) δ 7.37-7.29 (5H, m), 5.08 (2H, s), 4.42 (1H, dd, J=4.8, 8.8 Hz), 4.13 (1H, m), 3.71 (3H, s), 3.13 (2H, t, J=6.8 Hz), 1.86 (1H, m), 1.77-1.69 (2H, m), 1.58- 1.30 (15H, s), 0.98 (3H, d, J=6.4 Hz), 0.95 (3H, d, J=6.4 Hz).

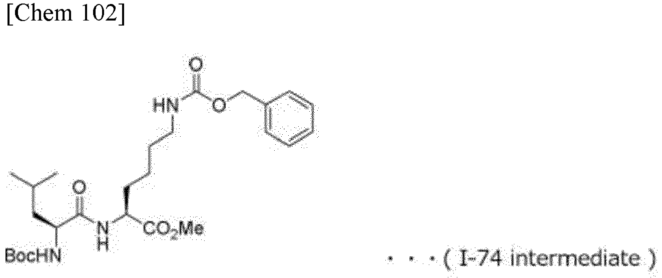

### (Step 2) Synthesis of the compound I-74

The compound I-74 (HCl salt) was obtained from the compound I-74 intermediate as a raw material by the same reaction as Steps 2 and 3 of Synthesis example 1.
Yield 97%; ESI MS m/z 394.1 (M+H)⁺; ¹H NMR (400 MHz, CD₃OD) δ 7.36-7.30 (5H, m), 5.07 (2H, s), 7.29 (1H, dd, J=4.8, 8.0 Hz), 3.91 (1H, dd, J=6.0, 8.8 Hz), 3.13 (2H, t, J=7.2 Hz), 1.89 (1H, m), 1.84-1.72 (2H, m), 1.70-1.64 (2H, m), 1.58-1.50 (2H, m), 1.46-1.39 (2H, m), 1.03 (3H, d, J=6.4 Hz), 1.01 (3H, d, J=6.4 Hz).

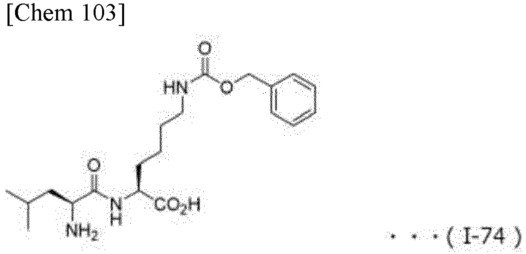

### [Synthesis example 23]

The compound I-75 was obtained by the following method.

### (Step 1) Synthesis of the compound I-75 intermediate 1

The compound I-75 intermediate 1 was obtained from Boc-D-Ala-OH and H-Dap(Boc)-OMe•HCl as raw materials by the same reaction as Step 1 of Synthesis example 1.
Yield 80%; ESI MS m/z 412.1 (M+Na)⁺; ¹H NMR (400 MHz, CD₃OD) δ 4.50 (1H, t, J=6.0 Hz), 4.10 (1H, q, J=7.2 Hz), 3.74 (3H, s), 3.54-3.42 (2H, m), 1.47 (9H, s), 1.45 (9H, s), 1.33 (3H, d, J=7.2 Hz).

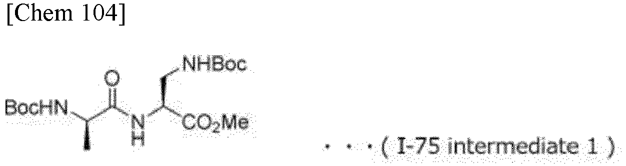

### (Step 2) Synthesis of the compound I-75 intermediate 2

The compound I-75 intermediate 2 was obtained from the compound I-75 intermediate 1 as a raw material by the same reaction as Step 2 of Synthesis example 1. Yield 85%; ESI MS m/z 376.2 (M+H)⁺; ¹H NMR (400 MHz, CD₃OD) δ 4.37 (1H, dd, J=4.8, 6.4 Hz), 4.00 (1H, q, J=7.2 Hz), 3.47 (1H, brd, J=14.0 Hz), 3.31 (1H, dd, J=6.8, 14.0 Hz), 1.36 (9H, s), 1.34 (9H, s), 1.22 (3H, d, J=7.2 Hz).

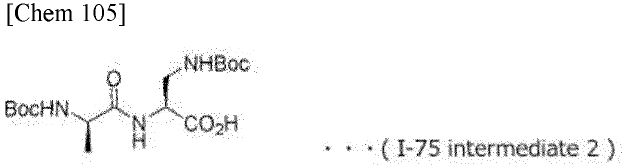

### (Step 3) Synthesis of the compound I-75

The compound I-75 (2HCl salt) was obtained from the compound I-75 intermediate 2 as a raw material by the same reaction as Step 3 of Synthesis example 1. Yield 99%; ESI MS m/z 176.0 (M+H)⁺; ¹H NMR (400 MHz, CD₃OD) δ 4.48 (1H, t, J=6.8 Hz), 4.10 (1H, q, J=7.2 Hz), 3.40 (1H, dd, J=6.8, 13.2 Hz), 3.24 (1H, dd, J=7.2, 13.2 Hz), 1.49 (3H, d, J=7.2 Hz).

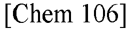

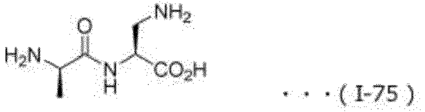

### [Synthesis example 24]

The compound I-76 was obtained by the following method.

### (Step 1) Synthesis of the compound I-76 intermediate 1

The compound I-76 intermediate 1 was obtained from Boc-Leu-OH•H₂O and H-Dap(Boc)-OMe•HCl as raw materials by the same reaction as Step 1 of Synthesis example 1.
Yield 90%; ESI MS m/z 454.2 (M+H)⁺; ¹H NMR (400 MHz, CD₃OD) δ 4.51 (1H, dd, J=4.8, 6.4 Hz), 4.11 (1H, q, J=7.2 Hz), 3.73 (3H, s), 3.51 (1H, dd, J=4.8, 14.4 Hz), 3.44 (1H, dd, J=6.4, 14.4 Hz), 1.74 (1H, m), 1.58-1.50 (2H, m), 1.47 (9H, s), 1.45 (9H, s), 0.98 (3H, d, J=6.8 Hz), 0.96 (3H, d, J=6.4 Hz).

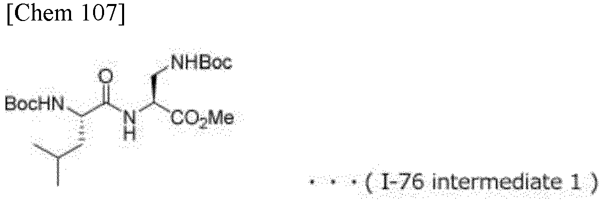

### (Step 2) Synthesis of the compound I-76 intermediate 2

The compound I-76 intermediate 2 was obtained from the compound I-76 intermediate 1 as a raw material by the same reaction as Step 2 of Synthesis example 1. Yield 96%; ESI MS m/z 418.2 (M+H)⁺; ¹H NMR (400 MHz, CD₃OD) δ 4.52 (1H, dd, J=4.4, 7.2 Hz), 4.11 (1H, m), 3.55 (1H, dd, J=4.4, 14.0 Hz), 3.42 (1H, dd, J=7.2, 14.0 Hz), 1.74 (1H, m), 1.63-1.54 (2H, m), 1.48 (9H, s), 1.45 (9H, s), 0.88 (3H, d, J=6.8 Hz), 0.86 (3H, d, J=7.2 Hz).

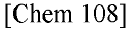

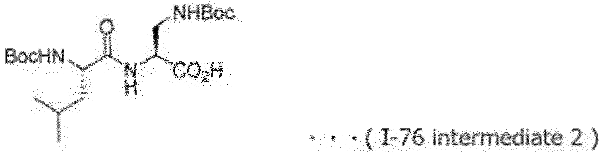

### (Step 3) Synthesis of the compound I-76 intermediate 3

The compound I-76 intermediate 3 was obtained from the compound I-76 intermediate 2 and H-Phe-Ot-Bu•HCl as raw materials by the same reaction as Step 1 of Synthesis example 1.
Yield 89%; ESI MS m/z 643.4 (M+Na)⁺; ¹H NMR (400 MHz, CD₃OD) δ 7.20-7.15 (2H, m), 7.12-7.10 (3H, m), 3.95 (1H, m), 3.36 (1H, dd, J=4.4, 14.0 Hz), 3.17 (1H, dd, J=8.0, 14.0 Hz), 2.97 (1H, dd, J=6.8, 14.0 Hz), 2.90 (1H, dd, J=7.6, 14.0 Hz), 1.58 (1H, m), 1.44-1.39 (2H, m), 1.35 (9H, s), 1.33 (9H, s), 1.29 (9H, s).

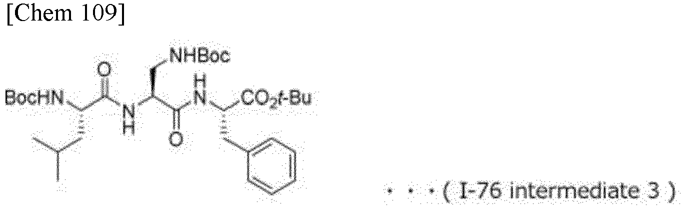

### (Step 2) Synthesis of the compound 1-114

Crude compound I-76 (2HCl salt) was obtained from the compound I-76 intermediate 3 as a raw material by the same reaction as Steps 2 and 3 of Synthesis example 1. A part thereof was purified by reversed-phase HPLC (water-acetonitrile containing 0.1% formic acid), to obtain the I-76 (formate salt).
ESIMS m/z 365.1 (M+H)⁺; ¹H NMR (400 MHz, D₂O) δ 8.30 (1H, s), 7.32-7.18 (5H, m), 4.62 (1H, t, J=6.8 Hz), 4.42 (1H, dd, J=4.8, 8.8 Hz), 3.98 (1H, t, J=7.2 Hz), 3.18-3.13 (2H, m), 3.03 (1H, dd, J=7.2, 13.6 Hz), 2.88 (1H, dd, J=8.8, 14.0 Hz), 1.69-1.57 (3H, m), 0.88 (3H, d, J=6.4 Hz), 0.87 (3H, d, J=6.4 Hz).

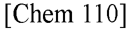

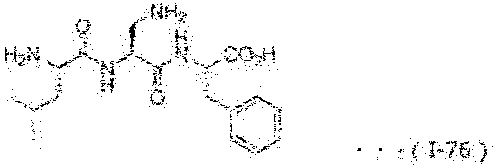

### [Synthesis example 25]

The compound 1-77 was obtained by the following method.

### (Step 1) Synthesis of the compound I-77 intermediate

The compound I-77 intermediate was obtained from the compound I-54 intermediate 2 and H-Leu-Ot-Bu•HCl as raw materials by the same reaction as Step 1 of Synthesis example 1.
Yield 97%; ESI MS m/z 643.4 (M+Na)⁺; ¹H NMR (400 MHz, CD₃OD) δ 7.19-7.08 (5H, m), 4.39 (1H, dd, J=4.4, 7.6 Hz), 4.23-4.19 (2H, m), 3.40 (1H, m), 3.23 (1H, m), 3.04 (1H, dd, J=4.8, 14.0 Hz), 2.73 (1H, m), 1.61 (1H, m), 1.51-1.45 (2H, m), 1.37 (9H, s), 1.34 (9H, s), 1.27 (9H, s), 0.86 (3H, d, J=6.8 Hz), 0.82 (3H, d, J=6.4 Hz).

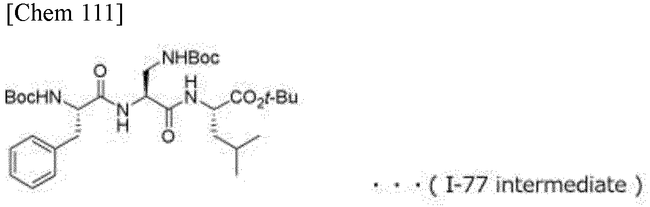

### (Step 2) Synthesis of the compound I-77

The compound I-77 (formate salt) was obtained from the compound I-77 intermediate as a raw material by the same reaction as Step 2 of Comparative example 3.
ESI MS m/z 365.1 (M+H)⁺; ¹H NMR (400 MHz, D₂O) δ 8.29 (1H, s), 7.39-7.33 (3H, m), 7.25 (2H, d, J=7.6 Hz), 4.22 (1H, t, J=8.0 Hz), 4.12 (1H, m), 3.26-3.17 (2H, m), 3.13 (1H, dd, J=4.4, 13.2 Hz), 2.76 (1H, dd, J=6.0, 13.2 Hz), 1.52-1.50 (3H, m), 0.82 (3H, d, J=5.2 Hz), 0.79 (3H, d, J=5.2 Hz).

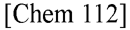

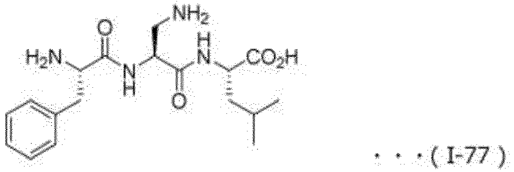

### [Synthesis example 26]

The compound I-78 was obtained by the following method.

### (Step 1) Synthesis of the compound I-78 intermediate

The compound I-78 intermediate was obtained from Boc-Phe-OH and the compound I-59 intermediate 1 as raw materials by the same reaction as Step 1 of Synthesis example 1.
Yield 44%; ESI MS m/z 613.4 (M+H)⁺; ¹H NMR (400 MHz, CD₃OD) δ 7.29-7.22 (10H, m), 4.56 (1H, t, J=6.0 Hz), 4.35 (1H, dd, J=5.2, 9.6 Hz), 4.27 (1H, dd, J=5.6, 10.0 Hz), 3.73 (3H, s), 3.64-3.53 (2H, m), 3.18-3.08 (2H, m), 2.88-2.77 (2H, m), 1.36 (9H, s), 1.35 (9H, s).

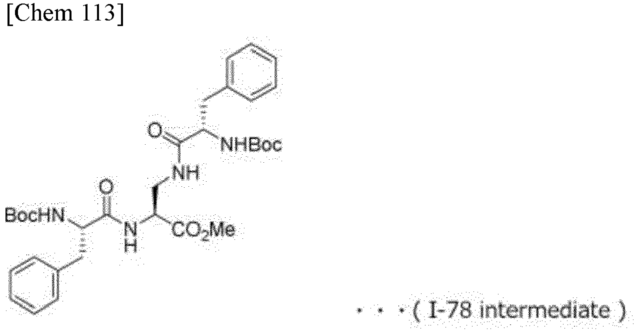

### (Step 2) Synthesis of the compound I-78

The compound I-78 (2HCl salt) was obtained from the compound I-78 intermediate as a raw material by the same reaction as Steps 2 and 3 of Synthesis example 1.
Yield 39%; ESI MS m/z 399.1 (M+H)⁺; ¹H NMR (400 MHz, D₂O) δ 7.36-7.29 (6H, m), 7.23-7.19 (4H, m), 4.37 (1H, t, J=6.0 Hz), 4.21-4.12 (2H, m), 3.55 (1H, dd, J=6.0, 14.0 Hz), 3.43 (1H, dd, J=6.0, 14.0 Hz), 3.15-3.05 (4H, m).

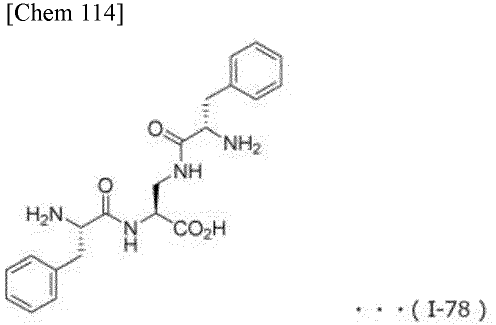

### [Synthesis example 27]

The compound I-79 was obtained by the following method.

### (Step 1) Synthesis of the compound I-79 intermediate

The compound I-79 intermediate was obtained from Boc-D-Phe-OH and the compound I-59 intermediate 1 as raw materials by the same reaction as Step 1 of Synthesis example 1.
Yield 41%; ESI MS m/z 613.4 (M+H)⁺; ¹H NMR (400 MHz, CD₃OD) δ 7.19-7.10 (10H, m), 4.34 (1H, m), 4.23 (1H, dd, J=5.2, 9.2 Hz), 4.14 (1H, t, J=6.0 Hz), 3.62 (3H, s), 3.46 (1H, dd, J=5.6, 14.0 Hz), 3.33 (1H, dd, J=6.4, 14.0 Hz), 3.04 (1H, dd, J=5.2, 14.0 Hz), 2.98 (1H, dd, J=5.6, 14.0 Hz), 2.75-2.67 (2H, m), 1.25 (18H, s).

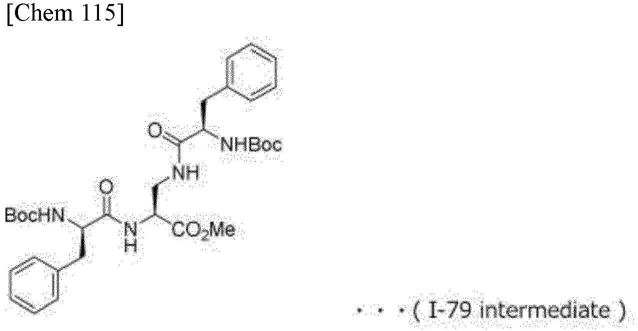

### (Step 2) Synthesis of the compound I-79

The compound I-79 (2HCl salt) was obtained from the compound I-79 intermediate as a raw material by the same reaction as Steps 2 and 3 of Synthesis example 1.
Yield 99%; ¹H NMR (400 MHz, D₂O) δ 7.26-7.18 (10H, m), 4.22-4.17 (2H, m), 4.09 (1H, t, J=7.6 Hz), 3.33-3.22 (2H, m), 3.17-3.05 (4H, m).

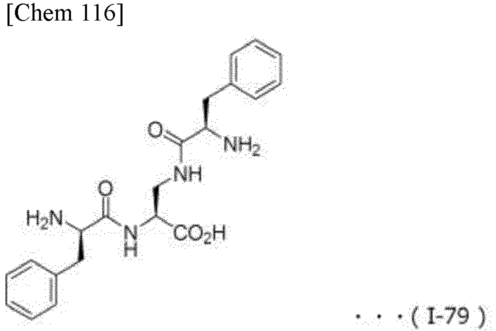

### [Synthesis example 28]

The compound I-80 was obtained by the following method.

### (Step 1) Synthesis of the compound I-80 intermediate

The compound I-80 intermediate was obtained from Boc-4-F-Phe-OH and the compound I-59 intermediate 1 as raw materials by the same reaction as Step 1 of Synthesis example 1.
Yield 44%; ESI MS m/z 649.3 (M+H)⁺; ¹H NMR (400 MHz, CD₃OD) δ 7.18-7.12 (4H, m), 6.92-6.87 (4H, m), 4.46 (1H, dd, J=5.2, 6.8 Hz), 4.20 (1H, dd, J=5.2, 6.8 Hz), 4.13 (1H, dd, J=5.2, 6.8 Hz), 3.61 (3H, s), 3.51 (1H, dd, J=5.2, 14.0 Hz), 3.43 (1H, dd, J=6.8, 14.0 Hz), 3.03-2.95 (2H, m), 2.74-2.63 (2H, m), 1.25 (9H, s), 1.24 (9H, s).

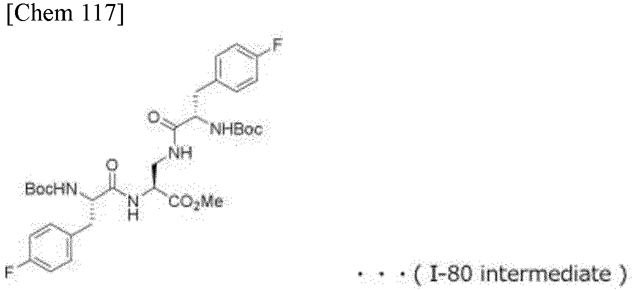

### (Step 2) Synthesis of the compound I-80

The compound I-80 (2HCl salt) was obtained from the compound I-80 intermediate as a raw material by the same reaction as Steps 2 and 3 of Synthesis example 1.
Yield 99%; ESI MS m/z 435.2 (M+H)⁺; ¹H NMR (400 MHz, D₂O) δ 7.22-7.18 (4H, m), 7.08-7.02 (4H, m), 4.37 (1H, t, J=6.0 Hz), 4.18-4.09 (2H, m), 3.75-3.66 (2H, m), 3.60-3.39 (2H, m), 3.13-3.04 (2H, m).

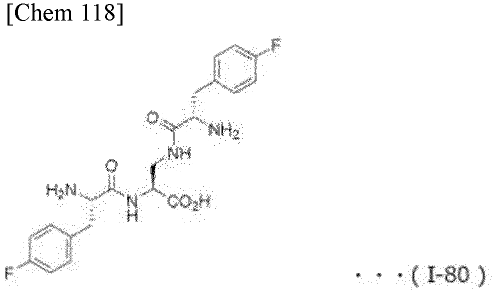

### [Synthesis example 29]

The compound I-81 was obtained by the following method.

### (Step 1) Synthesis of the compound I-81 intermediate 1

The compound I-81 intermediate 1 was obtained from Cbz-D-Phe-OH and H-Dap(Boc)-OMe·HCl as raw materials by the same reaction as Step 1 of Synthesis example 1.
Yield 87%; ESI MS m/z 522.2 (M+Na)⁺; ¹H NMR (400 MHz, CD₃OD) δ 7.34-7.22 (10H, m), 5.07 (1H, d, J=12.4 Hz), 4.99 (1H, d, J=12.4 Hz), 4.49-4.43 (2H, m), 3.73 (3H, s), 3.42-3.38 (2H, m), 3.18 (1H, dd, J=5.6, 10.0 Hz), 2.88 (1H, dd, J=5.2, 10.0 Hz), 1.43 (9H, s).

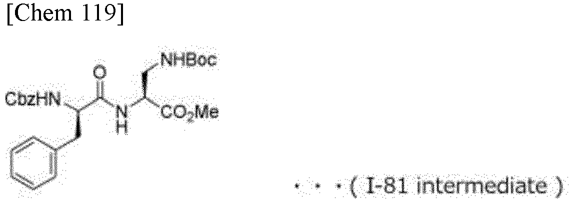

### (Step 2) Synthesis of the compound I-81 intermediate 2

The compound I-81 intermediate 2 (HCl salt) was obtained from the compound I-81 intermediate 1 as a raw material by the same reaction as Step 3 of Synthesis example 1.
Yield 99%; ESI MS m/z 400.1 (M+H)⁺; ¹H NMR (400 MHz, CD₃OD) δ 7.36-7.23 (10H, m), 5.08 (1H, d, J=12.4 Hz), 5.02 (1H, d, J=12.4 Hz), 4.63 (1H, dd, J=5.6, 8.0 Hz), 4.39 (1H, dd, J=5.6, 9.6 Hz), 3.76 (1H, m), 3.68 (3H, s), 3.60 (1H, m), 3.21 (1H, dd, J=5.6, 10.0 Hz), 2.90 (1H, dd, J=9.6, 10.0 Hz).

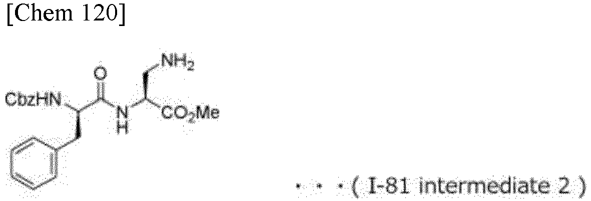

### (Step 3) Synthesis of the compound I-81 intermediate 3

The compound I-81 intermediate 3 was obtained from Cbz-Phe-OH and the compound I-81 intermediate 2 as raw materials by the same reaction as Step 1 of Synthesis example 1.
Yield 95%; ESI MS m/z 681 (M+H)⁺; ¹H NMR (400 MHz, CDCl₃) δ 7.26-7.07 (20H, m), 6.92 (1H, brd, J=7.6 Hz), 6.17 (1H, brs), 5.56 (1H, brs), 5.28 (1H, d, J=8.0 Hz), 5.04-4.95 (4H, m), 4.45-4.37 (2H, m), 4.17 (1H, m), 3.61 (3H, s), 3.57 (1H, m), 3.26 (1H, m), 3.01-2.96 (3H, m), 2.84 (1H, dd, J=7.2, 14.0 Hz).

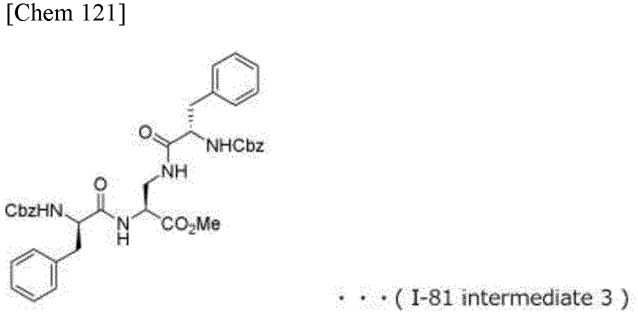

### (Step 4) Synthesis of the compound I-81

The compound I-81 (acetate salt) was obtained from the compound I-81 intermediate 3 as a raw material by the same reaction as Comparative example 10. Yield 39%; ESI MS m/z 399.2 (M+H)⁺; ¹H NMR (400 MHz, D₂O) δ 7.37-7.18 (10H, m), 4.20-4.06 (3H, m), 3.33 (1H, dd, J=6.0, 14.0 Hz), 3.17-2.99 (5H, m), 1.99 (3H, s).

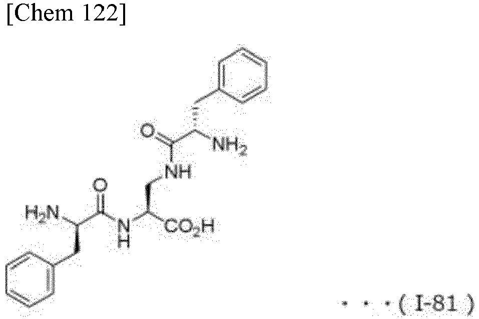

### [Synthesis example 30]

The compound I-82 was obtained by the following method.

### (Step 1) Synthesis of the compound I-82 intermediate

The compound I-82 intermediate was obtained from Boc-Trp-OH and the compound I-59 intermediate 1 as raw materials by the same reaction as Step 1 of Synthesis example 1.
Yield 45%; ESI MS m/z 691.3 (M+H)⁺; ¹H NMR (400 MHz, CD₃OD) δ 7.49 (2H, d, J=7.6 Hz), 7.23 (1H, t, J=0.8 Hz), 7.20 (1H, t, J=0.8 Hz), 7.00-6.88 (6H, m), 3.58 (3H, s), 3.55 (3H, s), 3.41-3.30 (5H, m), 3.18-3.07 (2H, m), 2.99-2.87 (2H, m), 1.24 (9H, s), 1.23 (9H, s).

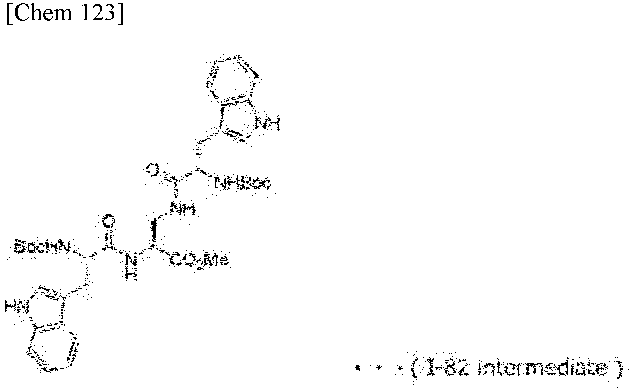

### (Step 2) Synthesis of the compound I-82

An ethanol solution ((1 mL) of the compound I-82 intermediate (56 mg, 0.081 mmol) was added with 1N NaOH aqueous solution (1 mL), and stirred at room temperature for 1 hour. The reaction mixture was diluted with water, then subject to pH-adjusting with 1N HCl to acidic, and then subject to partitioning extraction with ethyl acetate. The organic layer was dried by dehydration with anhydrous sodium sulfate, and then concentrated to dryness under reduced pressure. The residue was dissolved in 50% acetic acid aqueous solution (2 mL), then stirred at 80°C for 7 hours, and then concentrated to dryness under reduced pressure. The residue was purified by reversed-phase HPLC (water-acetonitrile containing 0.1% formic acid), to obtain the compound I-82 (formate salt).
Yield 73%; ESI MS m/z 477.2 (M+H)⁺; ¹H NMR (400 MHz, D₂O) δ 8.27 (1H, brs), 7.54 (1H, d, J=8.0 Hz), 7.47-7.40 (3H, m), 7.22-7.05 (6H, m), 4.10 (1H, t, J=7.2 Hz), 3.86 (1H, t, J=5.2 Hz), 3.75 (1H, dd, J=6.4, 7.6 Hz), 3.42 (1H, dd, J=5.2, 14.0 Hz), 3.33 (1H, dd, J=5.2, 14.0 Hz), 3.27-3.19 (4H, m).

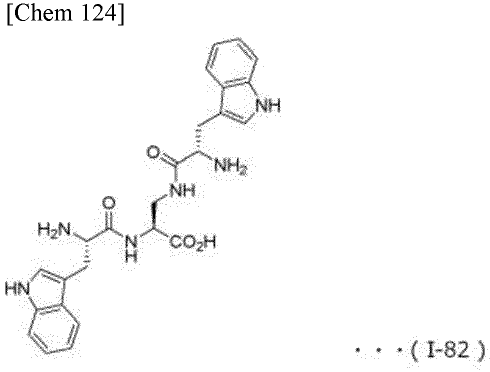

### [Synthesis example 31]

The compound I-83 was obtained by the following method.

### (Step 1) Synthesis of the compound I-83 intermediate

The compound I-83 intermediate was obtained from L-phenyl lactic acid and the compound I-59 intermediate 1 as raw materials by the same reaction as Step 1 of Synthesis example 1.
Yield 32%; ESI MS m/z 415.1 (M+H)⁺; ¹H NMR (400 MHz, CD₃OD) δ 7.18-7.05 (10H, m), 4.37 (1H, t, J=6.0 Hz), 4.16 (1H, dd, J=3.6, 8.4 Hz), 4.10 (1H, dd, J=3.6, 8.4 Hz), 3.60 (3H, s), 3.41-3.39 (2H, m), 3.02-2.95 (2H, m), 2.76-2.63 (2H, m).

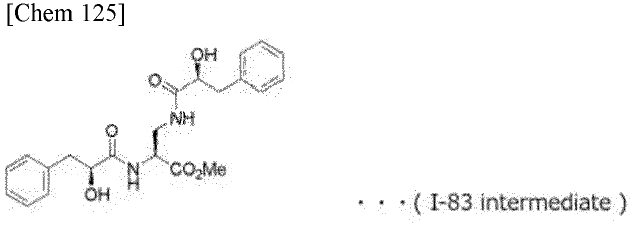

### (Step 2) Synthesis of the compound I-83

The compound I-83 was obtained from the compound I-83 intermediate as a raw material by the same reaction as Step 2 of Synthesis example 1.
Yield 88%; ESI MS m/z 401.1 (M+H)⁺.

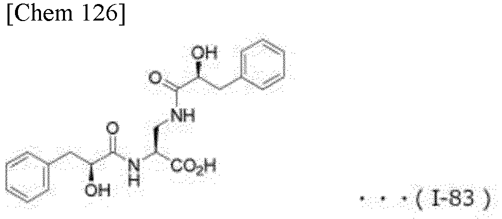

### [Synthesis example 32]

The compound I-84 was obtained by the following method.

### (Step 1) Synthesis of the compound I-84 intermediate

A THF suspension (2 mL) of the compound I-59 intermediate 1 (35 mg, 0.18 mmol) was added with triethylamine () and toluenesulfonyl chloride (60 mg, 0.31 mmol) under ice-cold conditions, and stirred at room temperature for 4 hours. The reaction mixture was added with ethyl acetate, and then washed with 1N HCl by partitioning. The organic layer was dried by dehydration with anhydrous sodium sulfate, and then concentrated to dryness under reduced pressure, to obtain the compound I-84 intermediate.
Yield 26%; ESI MS m/z 427.0 (M+H)⁺; ¹H NMR (400 MHz, CD₃OD) δ 7.85 (2H, d, J=8.4 Hz), 7.58 81H, d, J=8.4 Hz), 7.56 (1H, d, J=8.0 Hz), 7.43 (2H, d, J=8.0 Hz), 7.27 (1H, d, J=7.6 Hz), 7.25 (1H, d, J=7.6 Hz), 3.88 (1H, t, J=6.0 Hz), 3.21 (3H, s), 2,97 81H, dd, J=6.4, 13.6 Hz), 2.92 (1H, dd, J=5.6, 13.6 Hz), 2.40 (3H, s), 2.33 (3H, d, J=2.4 Hz).

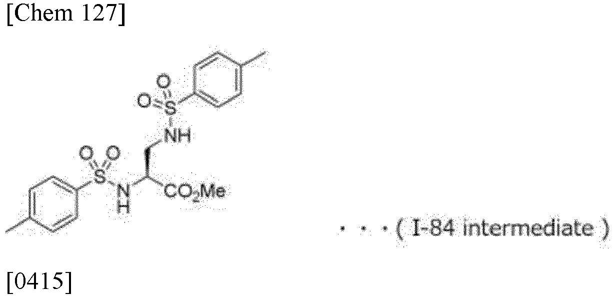

### (Step 2) Synthesis of the compound I-84

The compound I-84 was obtained from the compound I-84 intermediate as a raw material by the same reaction as Step 2 of Synthesis example 1.
Yield 53%; ESI MS m/z 413.0 (M+H)⁺; ¹H NMR (400 MHz, CD₃OD) δ 7.60 (2H, d, J=8.4 Hz), 7.57 (2H, d, J=8.4 Hz), 7.27-7.22 (4H, m), 3.80 (1H, t, J=6.0 Hz), 3.00-2.91 (2H, m), 2.33 (3H, s), 2.32 (3H, s).

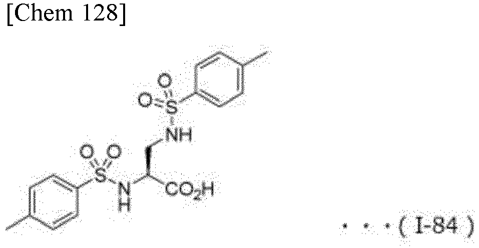

### [Synthesis example 33]

The compound I-85 was obtained by the following method.

### (Step 1) Synthesis of the compound I-85 intermediate

The compound I-85 intermediate was obtained from 3-indoleacetic acid and the compound I-59 intermediate 1 as raw materials by the same reaction as Step 1 of Synthesis example 1.
Yield 33%; ESI MS m/z 433.1 (M+H)⁺; ¹H NMR (400 MHz, CD₃OD) δ 7.39 (1H, d, J=8.0 Hz), 7.32 (1H, dd, J=0.8, 7.6 Hz), 7.25 (1H, d, J=0.8 Hz), 7.23 (1H, d, J=1.2 Hz), 7.02-6.89 (6H, m), 4.36 (1H, dd, J=4.8, 7.2 Hz), 3.43 (3H, s), 3.45 (2H, d, J=0.8 Hz), 3.44 (2H, d, J=0.8 Hz), 3.41-3.30 (2H, m).

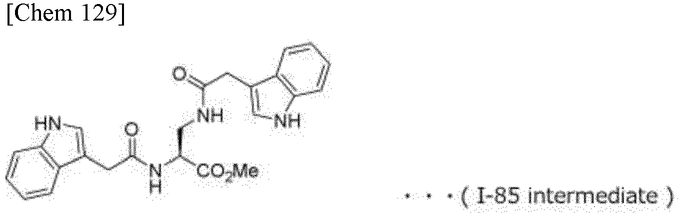

### (Step 2) Synthesis of the compound I-85

The compound I-85 was obtained from the compound I-85 intermediate as a raw material by the same reaction as Step 2 of Synthesis example 1.
Yield 89%; ESI MS m/z 419.1 (M+H)⁺; ¹H NMR (400 MHz, CD₃OD) δ 7.39 (1H, dd, J=0.8, 8.0 Hz), 7.33 (1H, dd, J=0.8, 8.0 Hz), 7.26 (1H, d, J=0.8 Hz), 7.25 (1H, d, J=0.8 Hz), 7.02-6.89 (6H, m), 4.38 (1H, dd, J=4.8, 8.0 Hz), 3.49 (1H, dd, J=4.8, 14.0 Hz), 3.45 (2H, d, J=0.8 Hz), 3.43 (2H, t, J=0.8 Hz), 3.35 (1H, m).

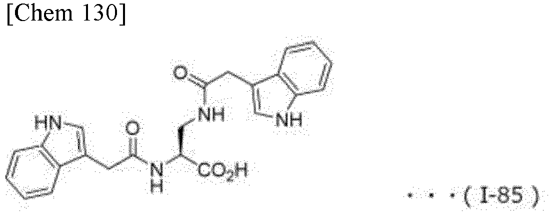

### [Synthesis example 34]

The compound I-86 was obtained by the following method.

### (Step 1) Synthesis of the compound I-86 intermediate

The compound I-86 intermediate was obtained from 3-phenylpropionic acid and the compound I-59 intermediate 1 as raw materials by the same reaction as Step 1 of Synthesis example 1.
Yield 34%; ESI MS m/z 383.1 (M+H)⁺; ¹H NMR (400 MHz, CD₃OD) δ 7.30-7.16 (10H, m), 4.49 (1H, dd, J=5.2, 6.8 Hz), 3.71 (3H, s), 3.56 (1H, dd, J=5.2, 13.6 Hz), 3.45 (1H, dd, J=6.8, 13.6 Hz), 2.94-2.88 (4H, m), 2.55-2.45 (4H, m).

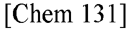

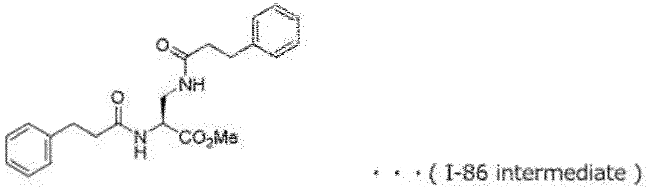

### (Step 2) Synthesis of the compound I-86

The compound I-86 was obtained from the compound I-86 intermediate as a raw material by the same reaction as Step 2 of Synthesis example 1.
Yield 91%; ESI MS m/z 369.1 (M+H)⁺; ¹H NMR (400 MHz, CD₃OD) δ 7.17-7.03 (10H, m), 4.39 (1H, dd, J=4.8, 7.6 Hz), 3.50 (1H, dd, J=4.8, 14.0 Hz), 3.35 (1H, dd, J=7.6, 14.0 Hz), 2.82-2.76 (4H, m), 2.43-2.33 (4H, m).

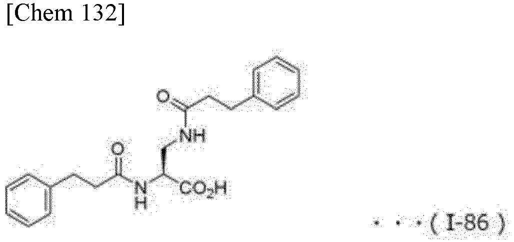

### [Synthesis example 35]

The compound I-87 was obtained by the following method.

### (Step 1) Synthesis of the compound I-87 intermediate

The compound I-87 intermediate was obtained from 4-hydroxyphenylacetic acid and the compound I-59 intermediate 1 as raw materials by the same reaction as Step 1 of Synthesis example 1.
Yield 26%; ESI MS m/z 387.1 (M+H)⁺; ¹H NMR (400 MHz, CD₃OD) δ 6.99-6.94 (4H, m), 6.64-6.62 (4H, m), 4.40 (1H, dd, J=5.6, 7.2 Hz), 3.53 (3H, s), 3.48 (1H, dd, J=5.6, 13.6 Hz), 3.40 (1H, dd, J=7.2, 13.6 Hz), 3.29 (2H, s), 3.24 (2H, s).

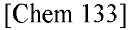

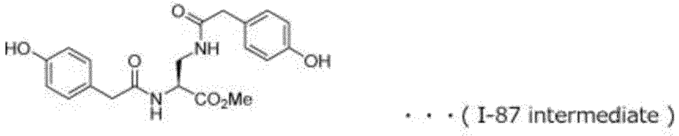

### (Step 2) Synthesis of the compound I-87

The compound I-87 was obtained from the compound I-87 intermediate as a raw material by the same reaction as Step 2 of Synthesis example 1.
Yield 62%; ESI MS m/z 373.1 (M+H)⁺; ¹H NMR (400 MHz, D₂O) δ 6.98 (2H, d, J=8.4 Hz), 6.95 (2H, d, J=8.4 Hz), 6.633 (2H, d, J=8.4 Hz), 6.631 (2H, d, J=8.4 Hz), 6.629 (2H, d, J=8.4 Hz), 4.42 (1H, dd, J=4.8, 8.0 Hz), 3.52 (1H, dd, J=4.8, 14.0 Hz), 3.41 (1H, dd, J=8.0, 14.0 Hz), 3.29 (2H, s), 3.24 (2H, s).

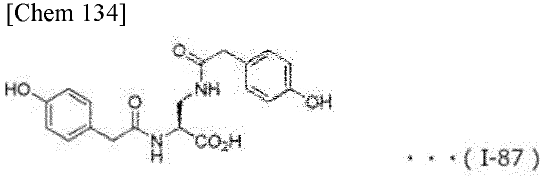

### [Synthesis example 36]

The compound I-88 was obtained by the following method.

### (Step 1) Synthesis of the compound I-88 intermediate

The compound I-88 intermediate was obtained from the compound I-87 intermediate as a raw material by the same reaction as Step 1 of Synthesis example 19. ESI MS m/z 415.1 (M+H)⁺; ¹H NMR (400 MHz, CD₃OD) δ 7.14-7.09 (4H, m), 6.83-6.79 (4H, m), 4.47 (1H, dd, J=5.2, 7.2 Hz), 3.72 (6H, s), 3.62 (3H, s), 3.55 (1H, dd, J=5.2, 13.6 Hz), 3.52 (3H, s), 3.46 (1H, dd, J=7.2, 13.6 Hz), 3.39 (2H, brs), 3.34 (2H, brs).

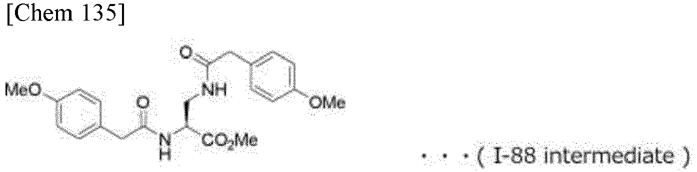

### (Step 2) Synthesis of the compound I-88

The compound I-88 was obtained from the compound I-88 intermediate as a raw material by the same reaction as Step 2 of Synthesis example 1.
Yield 41% (2 steps); ESI MS m/z 401.1 (M+H)⁺; ¹H NMR (400 MHz, CD₃OD) δ 7.19 (2H, dd, J=8.8 Hz), 7.16 (2H, d, J=8.8 Hz), 6.87 (4H, d, J=8.8 Hz), 4.54 (1H, dd, J=4.8, 8.0 Hz), 3.784 (3H, s), 3.783 (3H, s), 3.65 (1H, dd, J=4.8, 14.0 Hz), 3.52 (1H, dd, J=8.0, 14.0 Hz), 3.44 (2H, s), 3.39 (2H, s).

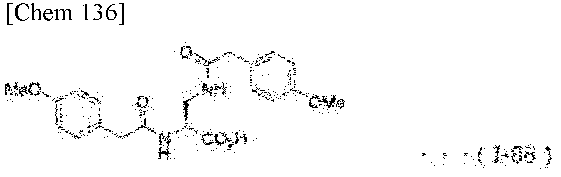

### [Synthesis example 37]

The compound I-89 was obtained by the following method.

### (Step 1) Synthesis of the compound I-89 intermediate 1

The compound I-89 intermediate 1 was obtained from 2-hydroxyphenylacetic acid and the compound I-59 intermediate 1 as raw materials by the same reaction as Step 1 of Synthesis example 1.
Yield 32%; ESI MS m/z 387.1 (M+H)⁺; ¹H NMR (400 MHz, CD₃OD) δ 7.14-7.10 (4H, m), 6.84-6.79 (4H, m), 4.53 (1H, dd, J=5.6, 6.8 Hz), 3.65 (3H, s), 3.61 (1H, dd, J=5.6, 13.6 Hz), 3.54 (2H, s), 3.53 (1H, dd, J=6.8, 13.6 Hz), 3.49 (2H, s).

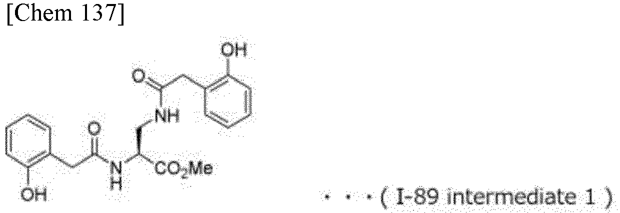

### (Step 2) Synthesis of the compound I-89 intermediate 2

The compound I-89 intermediate 2 was obtained from the compound I-89 intermediate 1 as a raw material by the same reaction as Step 1 of Synthesis example 8. ESI MS m/z 415.1 (M+H)⁺; ¹H NMR (400 MHz, CD₃OD) δ 7.16-7.12 (2H, m), 7.08-7.04 (2H, m), 6.87-6.76 (4H, m), 4.38 (1H, dd, J=5.2, 6.8 Hz), 3.713 (1.5H, s), 3.710 (1.5H, s), 3.70 (3H, s), 3.56 (3H, s), 3.54 (2H, s), 3.51 (2H, s), 3.50-3.40 (2H, m).

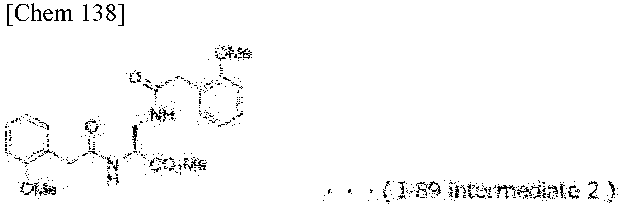

### (Step 3) Synthesis of the compound I-89

The compound I-89 was obtained from the compound I-89 intermediate 2 as a raw material by the same reaction as Step 2 of Synthesis example 1.
Yield 52% (2 steps); ESI MS m/z 401.1 (M+H)⁺; ¹H NMR (400 MHz, CD₃OD) δ 7.30-7.25 (2H, m), 7.21-7.17 (2H, m), 6.98-6.89 (4H, m), 4.51 (1H, dd, J=5.2, 7.2 Hz), 3.831 (3H, s), 3.827 (3H, s), 3.64 (1H, dd, J=5.2, 14.0 Hz), 3.54 (1H, dd, J=7.2, 14.0 Hz), 3.52 (2H, d, J=1.6 Hz), 3.49 (2H, s).

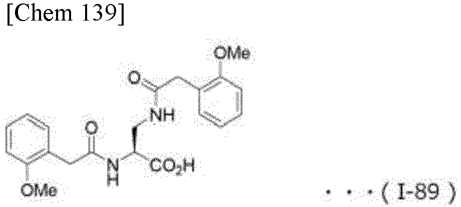

### [Synthesis example 38]

The compound I-90 was obtained by the following method.

### (Step 1) Synthesis of the compound I-90 intermediate

The compound I-90 intermediate was obtained from abscisic acid and H-Lys (Boc)-OMe as raw materials by the same reaction as Step 1 of Synthesis example 1. Yield 82%; ESI MS m/z 529.3 (M+Na)⁺; ¹H NMR (400 MHz, CD₃OD) δ ¹H NMR (400 MHz, CD₃OD) δ 7.63 (1H, d, J=16.0 Hz), 6.06 (1H, dd, J=0.8, 16.0 Hz), 5.81 (1H, t, J=1.2 Hz), 5.76 (1H, d, J=1.2 Hz), 4.29 (1H, dd, J=5.2, 8.8 Hz), 3.61 (3H, s), 2.96-2.91 (2H, m), 2.45 (1H, d, J=16.8 Hz), 2.07 (1H, dd, J=0.8, 16.8 Hz), 1.91 (3H, s), 1.83 (3H, d, J=1.6 Hz), 1.73 (1H, m), 1.59 (1H, m), 1.64-1.54 (2H, m), 1.48-1.33 (13H, m), 0.96 (3H, s), 0.92 (3H, s).

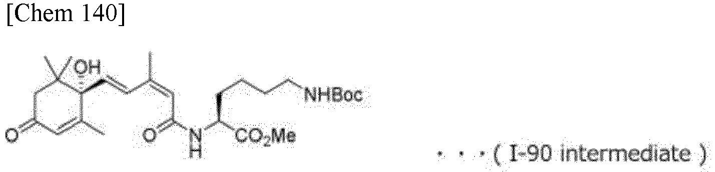

### (Step 2) Synthesis of the compound I-90

Crude compound I-90 was obtained from the compound I-90 intermediate as a raw material by the same reaction as Steps 2 and 3 of Synthesis example 1. A part the reaction product was purified by reversed-phase HPLC (water-acetonitrile containing 0.1% formic acid), to obtain the compound I-90.
ESI MS m/z 393.2 (M+H)⁺; ¹H NMR (400 MHz, CD₃OD) δ 7.75 (1H, d, J=16.0 Hz), 6.15 (1H, d, J=16.0 Hz), 5.94 (1H, d, J=1.6 Hz), 5.79 (1H, d, J=1.6 Hz), 3.62 (1H, dd, J=5.2, 6.8 Hz), 3.23 (2H, t, J=6.8 Hz), 3.55 (1H, d, J=16.8 Hz), 2.20 (1H, dd, J=1.2, 16.8 Hz), 2.01 (3H, d, J=1.6 Hz), 1.96 (3H, d, J=1.6 Hz), 1.86 (1H, m), 1.67-1.54 (3H, m), 1.52-1.44 (2H, m), 1.08 (3H, s), 1.05 (3H, s).

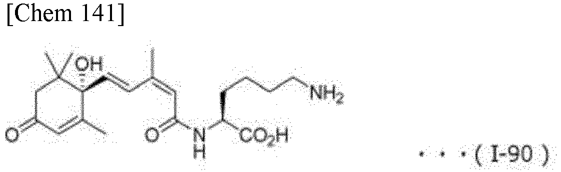

### [Synthesis example 39]

The compound I-91 was obtained by the following method.

### (Step 1) Synthesis of the compound I-91 intermediate

The compound I-91 intermediate was obtained from abscisic acid and Boc-Lys-OMe as raw materials by the same reaction as Step 1 of Synthesis example 1.
Yield 87%; ESI MS m/z 529.3 (M+Na)⁺; ¹H NMR (400 MHz, CD₃OD) δ 7.64 (1H, d, J=16.4 Hz), 6.04 (1H, d, J=16.4 Hz), 5.83 (1H, t, J=1.6 Hz), 5.68 (1H, d, J=1.6 Hz), 4.00 (1H, m), 3.62 (3H, s), 3.12-3.09 (2H, m), 2.45 (1H, d, J=16.8 Hz), 2.09 (1H, dd, J=1.2, 17.2 Hz), 1.90 (3H, d, J=1.2 Hz), 1.85 (3H, d, J=1.2 Hz), 1.71 (1H, m), 1.61-1.38 (3H, m), 1.35 (11H, brs), 0.98 (3H, s), 0.94 (3H, s).

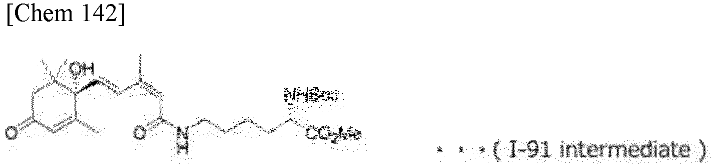

### (Step 2) Synthesis of the compound I-91

The compound I-91 was obtained from the compound I-91 intermediate as a raw material by the same reaction as Step 2 of Synthesis example 38.
ESI MS m/z 393.2 (M+H)⁺; ¹H NMR (400 MHz, CD₃OD) δ 7.75 (1H, dd, J=0.8, 16.4 Hz), 7.17 (1H, dd, J=16.4 Hz), 5.93 (1H, t, J=1.2 Hz), 5.89 (1H, d, J=0.8 Hz), 4.39 (1H, dd, J=5.2, 8.0 Hz), 2.95 (2H, t, J=7.2 Hz), 2.56 (1H, d, J=16.8 Hz), 2.20 (1H, d, J=16.8 Hz), 2.02 (3H, d, J=1.2 Hz), 1.95 (3H, d, J=1.2 Hz), 1.91 (1H, m), 1.80-1.65 (3H, m), 1.53-1.45 (2H, m), 1.08 (3H, s), 1.04 (3H, s).

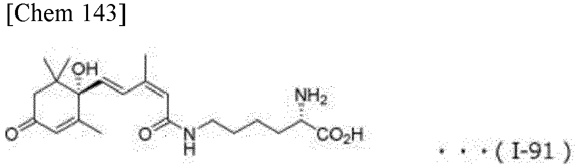

### [Preparation of compounds]

Commercial products of the compounds AD-1, AD-2, and II-1 were provided.

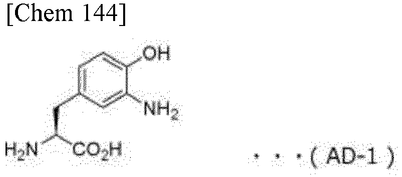

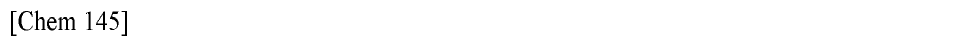

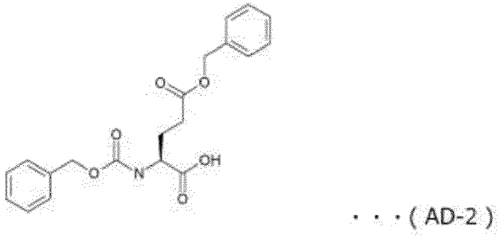

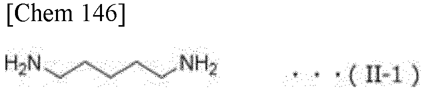

### [Synthesis example 40]

The compound AD-3 was obtained by the following method.

D-Cycloserine (145 mg, 1.42 mmol) was dissolved in 2N HCl (1 mL), and then heated at 80°C for 18 hours. The reaction mixture was concentrated to dryness under reduced pressure, to obtain the compound AD-3 (2HCl salt).
¹H NMR (400 MHz, D₂O) δ 3.75 (1H,dd,J=3.2,12.0 Hz),3.86 (1H,dd,J=4.8,11.2 Hz),4.14 (1H,m).

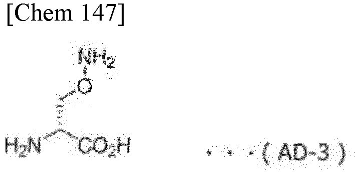

### [Synthesis example 41]

The compound AD-4 was obtained by the following method.

Boc-4-NH₂-Phe-OH (100 mg) was dissolved in 4N HCl (2 mL), and then heated at room temperature for 2 hours. The reaction mixture was concentrated to dryness under reduced pressure, to obtain the compound AD-4 (2HCl salt). Yield 99%; ESI MS m/z 181.1 (M+H)⁺; ¹H NMR (400 MHz, D₂O) δ 7.38-7.32 (4H, m), 4.26 (1H, m), 3.32-3.17 (2H, m).

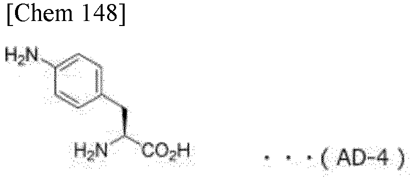

### [Synthesis example 42]

The compound II-2 was obtained by the following method.

The compound II-2 was obtained from cadaverine HCl salt and benzoic acid as raw materials by the same reaction as Step 1 of Synthesis example 1.
Yield 41%; ESI MS m/z 311.1 (M+H)⁺.

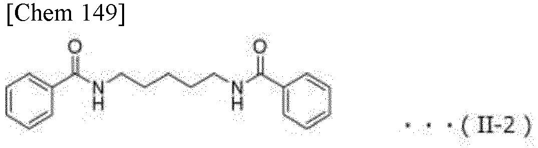

### [Synthesis example 43]

The compound of Comparative example 1 (the compound C-1) was obtained by the following method.

### (Step 1) Synthesis of the compound C-1 intermediate

The compound C-1 intermediate was obtained from the compound I-70 intermediate 4 and H-Asp (Ot-Bu)-Ot-Bu·HCl as raw materials by the same reaction as Step 1 of Synthesis example 1.
Yield 93%; ESI MS m/z 677.5 (M+H)⁺; ¹H NMR (400 MHz, CD₃OD) δ 7.18-7.06 (5H, m), 4.52 (1H, dd, J=5.6, 6.0 Hz), 4.43 (1H, dd, J=4.8, 8.4 Hz), 3.95 (1H, dd, J=5.6, 9.6 Hz), 3.50 (1H, dd, J=4.8, 13.6 Hz), 3.31 (1H, dd, J=8.4, 14.0 Hz), 2.83-2.79 (2H, m), 2.64-2.61 (2H, m), 2.42-2.38 (2H, m), 1.36 (18H, s), 1.35 (9H, s), 1.61 (1H, m), 1.51-1.39 (2H, m), 0.86 (3H, d, J=6.4 Hz), 0.84 (3H, d, J=6.4 Hz).

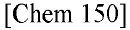

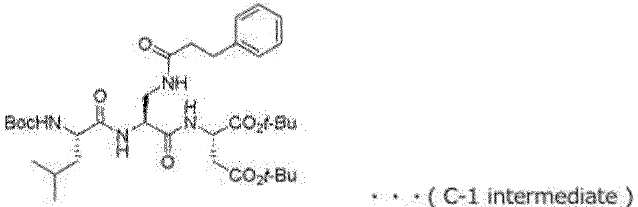

### (Step 2) Synthesis of the compound C-1

The compound C-1 (HCl salt) was obtained from the compound C-1 intermediate as a raw material by the same reaction as Step 3 of Synthesis example 1. Yield 99%; ESI MS m/z 465.2 (M+H)⁺; ¹H NMR (400 MHz, CD₃OD) δ 7.34-7.30 (2H, m), 7.26-7.22 (3H, m), 4.57 (1H, t, J=6.0 Hz), 4.48 (1H, t, J=6.0 Hz), 3.92 (1H, t, J=6.8 Hz), 3.65-3.54 (2H, m), 2.94-2.90 (2H, m), 2.87-2.76 (2H, m), 2.57 (2H, t, J=8.0 Hz), 1.75-1.72 (3H, m), 1.00 (3H, d, J=5.6 Hz), 0.99 (3H, d, J=5.6 Hz).

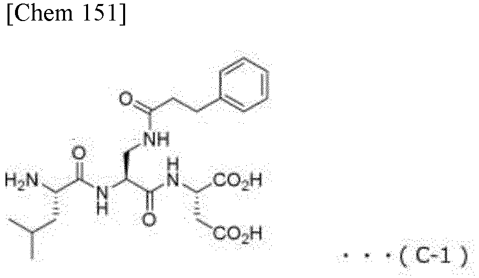

### [Synthesis example 44]

The compound of Comparative example 2 (the compound C-2) was obtained by the following method.

The compound C-2 (2HCl salt) was obtained from the compound I-76 intermediate 2 as a raw material by the same reaction as Step 3 of Synthesis example 1. Yield 99%; ESI MS m/z 218.0 (M+H)⁺; ¹H NMR (400 MHz, D₂O) δ 4.80 (1H, dd, J=6.0, 8.0 Hz), 4.02 (1H, dd, J=6.0, 8.0 Hz), 3.51 (1H, dd, J=6.0, 13.2 Hz), 3.25 (1H, dd, J=8.0, 13.2 Hz), 1.72-1.64 (3H, m), 0.89 (3H, d, J=6.0 Hz), 0.88 (3H, d, J=5.6 Hz).

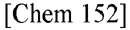

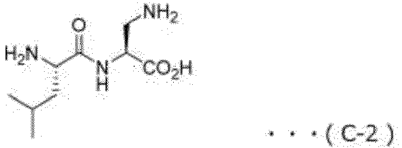

### [Synthesis example 45]

The compound of Comparative example 3 (the compound C-3) was obtained by the following method.

### (Step 1) Synthesis of the compound C-3 intermediate

The compound C-3 intermediate was obtained from the compound I-53 intermediate 2 and H-Asp (Ot-Bu)-Ot-Bu·HCl as raw materials by the same reaction as Step 1 of Synthesis example 1.
Yield 92%; ESI MS m/z 625.4 (M+Na)⁺; ¹H NMR (400 MHz, CD₃OD) δ 4.50 (1H, t, J=6.0 Hz), 4.37 (1H, dd, J=4.4, 8.0 Hz), 3.94 (1H, q, J=7.2 Hz), 3.41 (1H, dd, J=4.4, 14.0 Hz), 3.22 (1H, m), 2.66 (1H, dd, J=6.0, 16.8 Hz), 2.58 (1H, dd, J=6.8, 16.8 Hz).

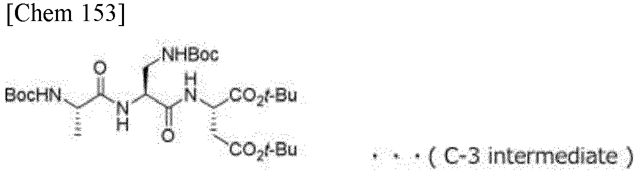

### (Step 2) Synthesis of the compound C-3

The compound C-3 (2HCl salt) was obtained from the compound C-3 intermediate as a raw material by the same reaction as Step 3 of Synthesis example 1. Yield 99%; ESI MS m/z 291.0 (M+H)⁺; ¹H NMR (400 MHz, D₂O) δ 4.77 (1H, dd, J=5.2, 8.0 Hz), 4.07 (1H, q, J=7.2 Hz), 3.72 (1H, m), 3.62 (1H, m), 3.43 (1H, dd, J=5.2, 13.6 Hz), 3.22 (1H, dd, J=8.0, 13.6 Hz), 1.46 (3H, d, J=7.2 Hz).

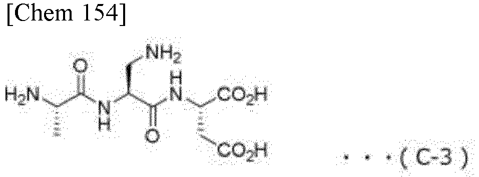

### [Synthesis example 46]

The compound of Comparative example 4 (the compound C-4) was obtained by the following method.

### (Step 1) Synthesis of the compound C-4 intermediate

The compound C-4 intermediate was obtained from Boc-Leu-OH·H₂O and the compound I-59 intermediate 1 as raw materials by the same reaction as Step 1 of Synthesis example 1.
Yield 45%; ESI MS m/z 567.4 (M+Na)⁺; ¹H NMR (400 MHz, CD₃OD) δ 4.44 (1H, t, J=6.0 Hz), 4.01-3.91 (2H, m), 3.61 (3H, s), 3.55 (1H, dd, J=5.2, 14.0 Hz), 3.44 (1H, dd, J=6.8, 14.0 Hz), 1.65-1.54 (2H, m), 1.46-1.38 (4H, m), 1.35 (18H, s), 0.88-0.82 (12H, m).

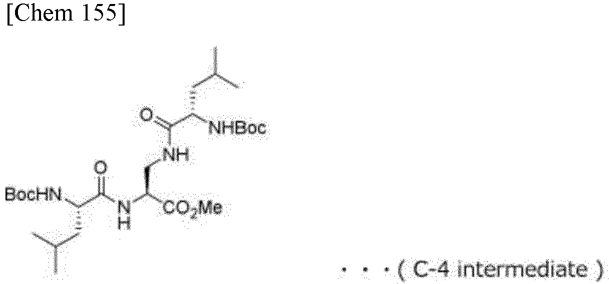

### (Step 2) Synthesis of the compound C-4

The compound C-4 (2HCl salt) was obtained from the compound C-4 intermediate as a raw material by the same reaction as Steps 2 and 3 of Synthesis example 1.
Yield 99%; ¹H NMR (400 MHz, D₂O) δ 4.49 (1H, t, J=5.6 Hz), 3.99 (1H, t, J=6.8 Hz), 3.92 (1H, t, J=7.2 Hz), 3.76 (1H, dd, J=5.6, 14.0 Hz), 3.55 (1H, dd, J=8.0, 14.0 Hz), 1.71-1.57 (6H, m), 0.91-0.87 (12H, m).

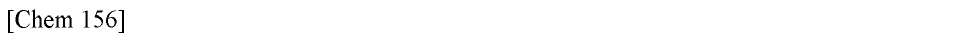

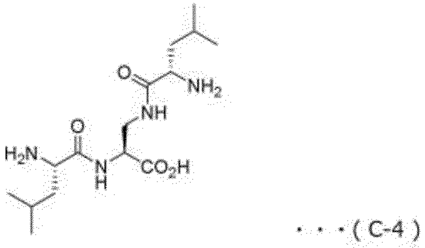

### [Synthesis example 47]

The compound of Comparative example 5 (the compound C-5) was obtained by the following method.

### (Step 1) Synthesis of the compound C-5 intermediate 1

The compound C-5 intermediate 1 was obtained from Cbz-D-Phe-OH and Boc-Dap-OMe·HCl as raw materials by the same reaction as Step 1 of Synthesis example 1. Yield 89%; ESI MS m/z 522.2 (M+Na)⁺; ¹H NMR (400 MHz, CD₃OD) δ 7.33-7.23 (10H, m), 5.06 (1H, brd, J=12.4 Hz), 5.00 (1H, brd, J=12.4 Hz), 4.34 (1H, m), 4.24 (1H, m), 3.72-3.48 (2H, m), 3.12 (1H, dd, J=5.2, 14.4 Hz), 2.86 (1H, m), 1.45 (9H, s).

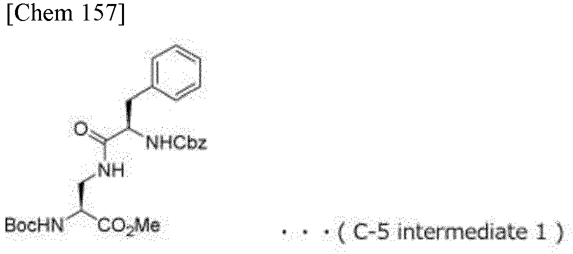

### (Step 2) Synthesis of the compound C-5 intermediate 2

The compound C-5 intermediate 2 (HCl salt) was obtained from the compound C-5 intermediate 1 as a raw material by the same reaction as Step 3 of Synthesis example 1.
Yield 99%; ESI MS m/z 400.1 (M+H)⁺; ¹H NMR (400 MHz, CD₃OD) δ 7.38-7.22 (10H, m), 5.09 (1H, d, J=12.8 Hz), 5.05 (1H, d, J=12.8 Hz), 4.31 (1H, dd, J=6.0, 9.2 Hz), 4.20 (1H, dd, J=4.4, 5.6 Hz), 3.85 (3H, s), 3.58-3.53 (2H, m), 3.14 (1H, dd, J=6.0, 10.0 Hz), 2.90 (1H, dd, J=5.6, 10.0 Hz).

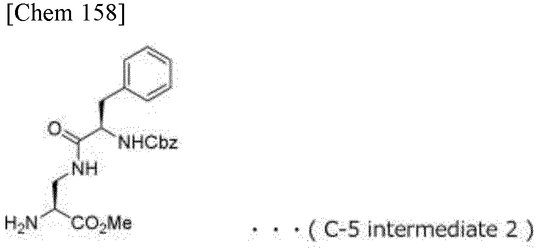

### (Step 3) Synthesis of the compound C-5 intermediate 3

The compound C-5 intermediate 3 was obtained from Cbz-Phe-OH and the compound C-5 intermediate 2 as raw materials by the same reaction as Step 1 of Synthesis example 1.
Yield 99%; ESI MS m/z 681 (M+H)⁺; ¹H NMR (400 MHz, CDCl₃) δ 7.49 (1H, brd, J=8.0 Hz), 7.29-7.11 (20H, m), 6.00 (1H, brd, J=8.0 Hz), 5.91 (1H, brd, J=7.6 Hz), 5.03-4.90 (4H, m), 4.48 (1H, t, J=6.4 Hz), 4.36-4.30 (2H, m), 3.68 (3H, s), 3.09-3.02 (3H, m), 2.93-2.83 (2H, m).

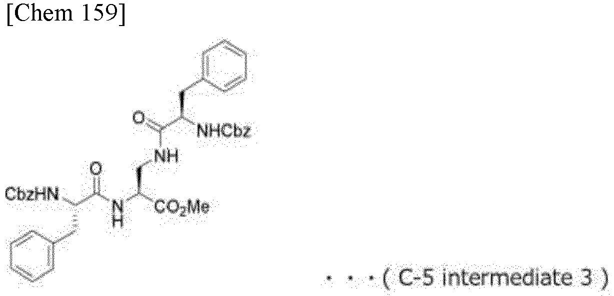

### (Step 4) Synthesis of the compound C-5

The compound C-5 intermediate 3 (68 mg, 0.10 mmol) was dissolved in chloroform/ ethanol (1:1) (10 mL), then added with 5% palladium carbon (12 mg), and stirred at room temperature for 20 hours under hydrogen atmosphere. The reaction mixture was filtered, and the obtained filtrate was concentrated to dryness under reduced pressure. The residue was dissolved in ethanol (2 mL), then added with 1N NaOH aqueous solution (0.5 mL), and stirred at room temperature for 3 hours. The reaction mixture was neutralized with 1N HCl, then passed through a strongly basic anion exchange resin Dowex 1x8 (OH⁻) column, washed thoroughly with ion exchange water, and then eluted with 5% acetic acid aqueous solution, to obtain the compound C-5 (acetate salt).
Yield 28%; ESI MS m/z 399.2 (M+H)⁺; ¹H NMR (400 MHz, D₂O) δ 7.35-7.18 (10H, m), 4.21-4.09 (3H, m), 3.50 (1H, dd, J=6.0, 13.6 Hz), 3.36 (1H, dd, J=5.6, 13.6 Hz), 3.15-3.07 (4H, m), 2.00 (3H, s).

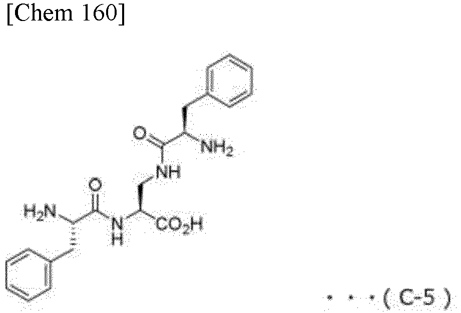

### [Example 11] Effect of nitrogen-containing compounds on induction of environmental stress tolerance genes by ABA

The gene expression inducing activity was compared among the compounds I-53 to 1-91, the compounds AD-1 to AD-4, the compounds II-1 to II-2, and the compounds C-1 to C-5 when combined with ABA in the same manner as in Example 5.

As a result, the compounds I-53 to I-74, the compounds AD-1 to AD-3, and the compounds II-2 showed an "activity level" of >1, and that is, they enhanced the gene expression inducing activity of ABA. Also, the compounds I-75 to I-91, the compounds AD-4, and the compound II-1 showed an "activity level" of <1, and that is, they repressed the gene expression inducing activity of ABA. On the other hand, the compounds C-1 to C-5 showed an "activity level" of 1, and that is, they had no effect on the gene expression inducing activity of ABA.

### Industrial Applicability

According to the present invention, environmental stress tolerance of a plant can be induced.

## Claims

1. A composition for inducing environmental stress tolerance of a plant,
wherein the composition contains the following ingredients (A) and (B):
(A) an abscisic acid-like substance;
(B) one or more kinds of compounds selected from the group consisting of an amino acid, an amino acid derivative, and another nitrogen-containing compound.

2. The composition according to claim 1, wherein the ingredient (A) is one or more kinds of ingredients selected from the group consisting of abscisic acid, an abscisic acid derivative, an abscisic acid agonist, and an inhibitor of abscisic acid degradation.

3. The composition according to claim 1 or 2, wherein the ingredient (A) is (S)-(+)-abscisic acid.

4. The composition according to any one of claims 1 to 3, wherein the amino acid of the ingredient (B) is one or more kinds of amino acids selected from the group consisting of lysine, tryptophan, valine, arginine, histidine, glutamine, asparagine, leucine, glycine, and glutamic acid.

5. The composition according to any one of claims 1 to 4, wherein the amino acid of the ingredient (B) is one or more kinds of amino acids selected from the group consisting of lysine, tryptophan, and valine.

6. The composition according to any one of claims 1 to 5, wherein the amino acid of the ingredient (B) is lysine.

7. The composition according to any one of claims 1 to 6, wherein the amino acid of the ingredient (B) is an L-isomer.

8. The composition according to any one of claims 1 to 7, wherein the amino acid derivative of the ingredient (B) is a compound shown by the following formula (I): 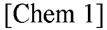 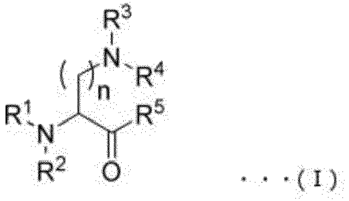
wherein, in the formula (I),
"n" represents an integer of 1 to 4,
R1 to R4 each independently represent a hydrogen atom, an alkyl group that may be substituted, a cycloalkyl group that may be substituted, an aryl group that may be substituted, a heteroaryl group that may be substituted, an alkenyl group that may be substituted, an alkynyl group that may be substituted, an acyl group, a sulfo group, a sulfonyl group, an acylamino group, an acyloxy group, a carbamoyl group, or an amidino group, or at least some of R1 to R4 together form a substituent, and
R5 represents a hydrogen atom, a hydroxyl group, an alkoxy group that may be substituted, an alkoxyaryl group that may be substituted, an amino group, an alkylamino group that may be substituted, or an arylamino group that may be substituted.

9. The composition according to claim 8, wherein the compound shown by the formula (I) satisfies one or more conditions selected from the following (1) to (7):
(1) the R1 and R3 are hydrogen atoms;
(2) the R1 to R4 are hydrogen atoms;
(3) the R2 and R4 are each independently an acyl group having a carbon number of 1 to 20;
(4) one of the R2 and R4 is a hydrogen atom and the other is an acyl group having a carbon number of 1 to 20;
(5) the R1 is a hydrogen atom and one or each of the R3 and R4 is an alkyl group that may be substituted, the alkyl group having a carbon number of 1 to 6;
(6) the R5 is an alkoxy group that may be substituted, the alkoxy group having a carbon number of 1 to 6;
(7) the R5 is an amino group or an alkylamino group that may be substituted, the alkylamino group having a carbon number of 1 to 6.

10. The composition according to claim 8 or 9, wherein the substituent formed by at least some of R1 to R4 together is a cyclic group having 1 to 3 hetero atoms.

11. The composition according to any one of claims 1 to 10, wherein the amino acid derivative of the ingredient (B) is a dipeptide.

12. The composition according to any one of claims 1 to 11, wherein the amino acid derivative of the ingredient (B) is one or more kinds of compounds selected from the compounds shown by the following formulas (I-1) to (I-91) and (AD-1) to (AD-4).

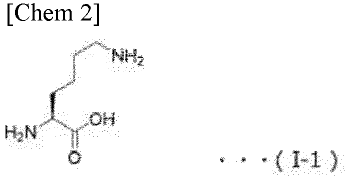

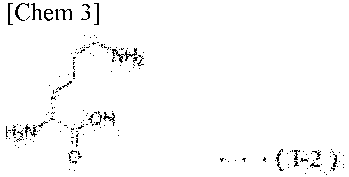

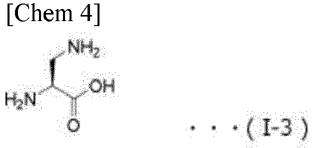

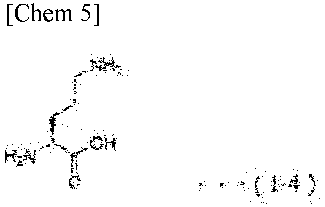

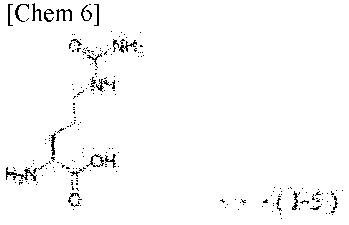

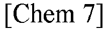

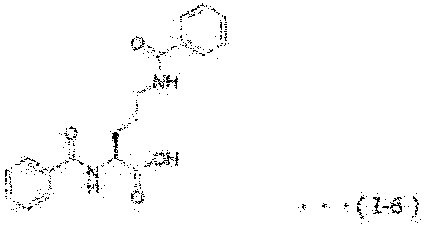

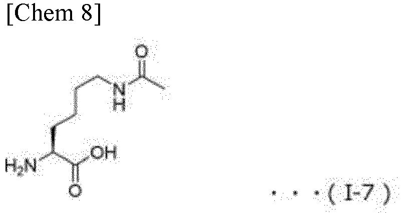

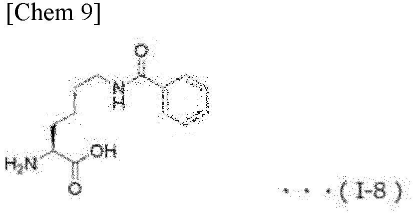

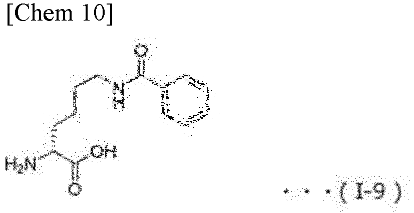

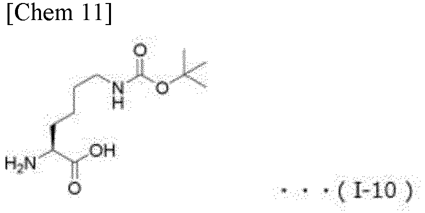

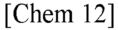

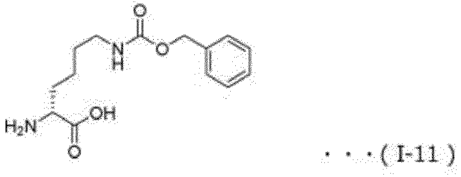

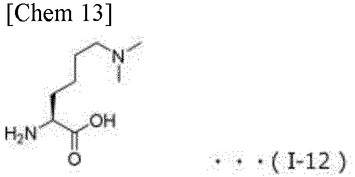

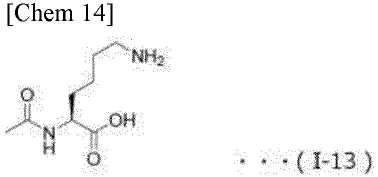

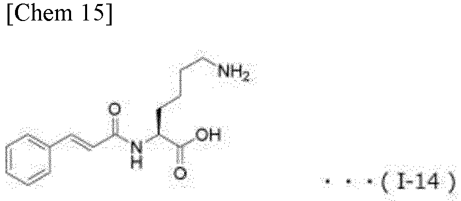

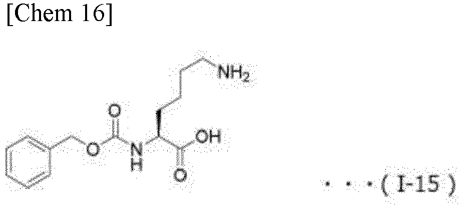

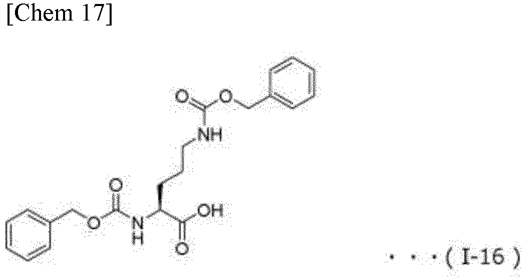

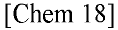

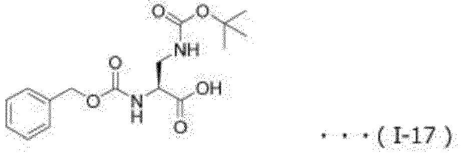

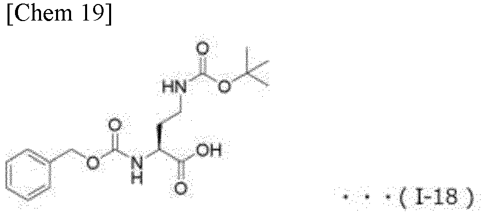

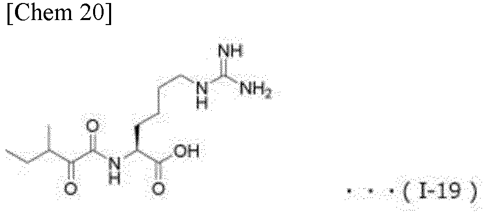

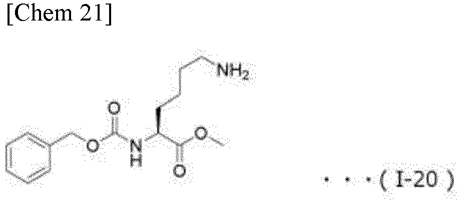

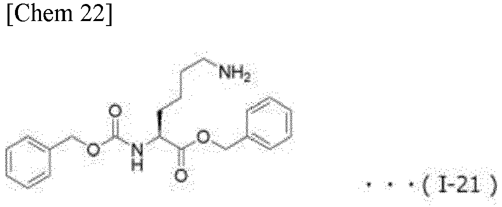

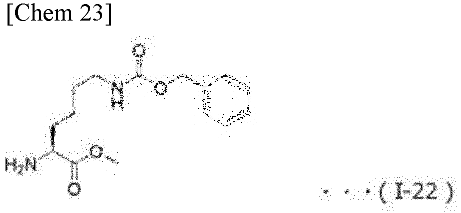

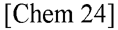

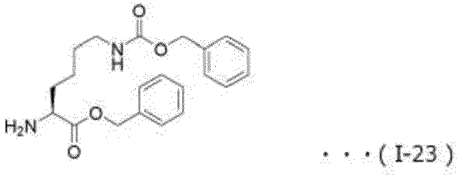

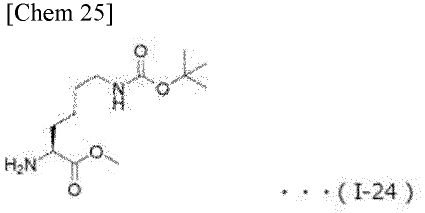

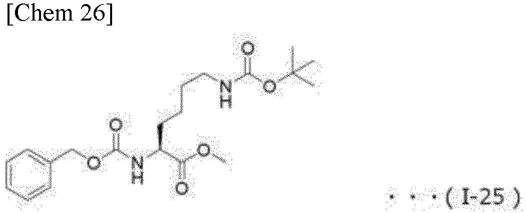

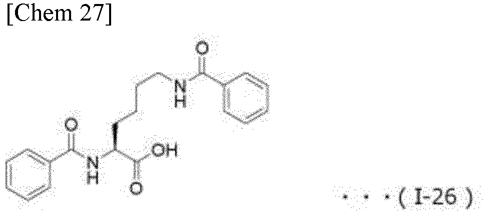

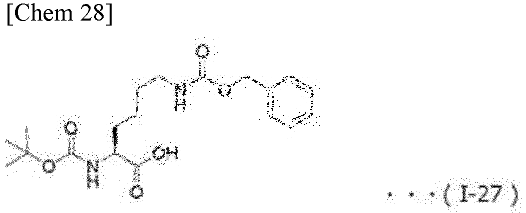

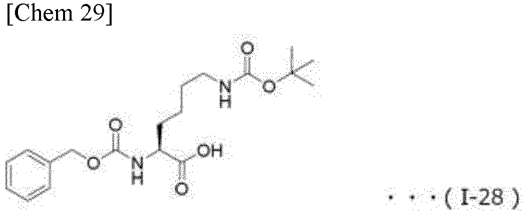

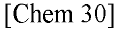

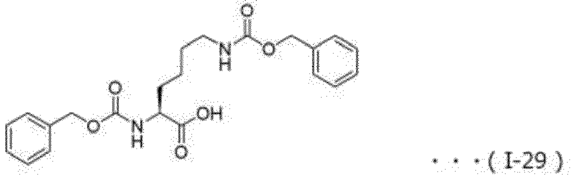

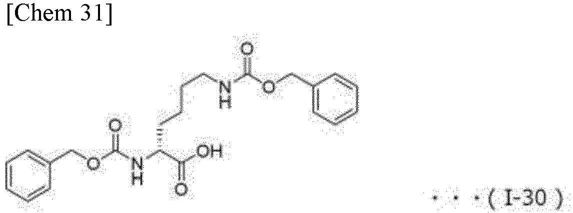

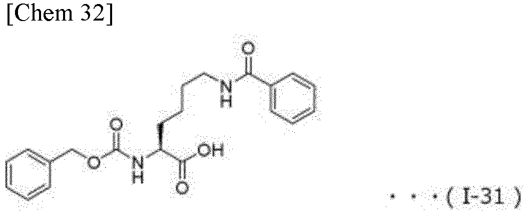

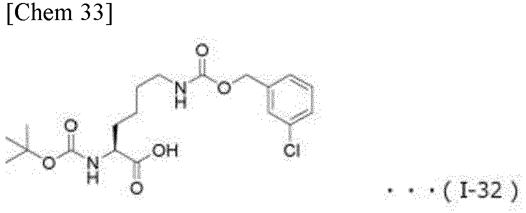

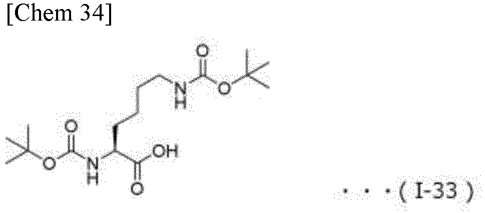

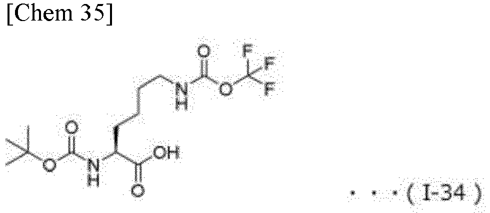

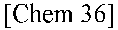

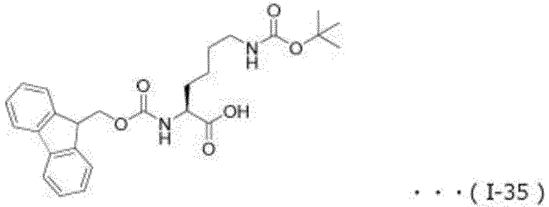

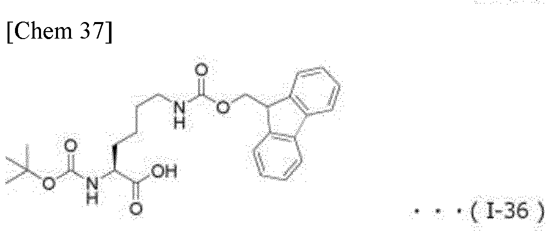

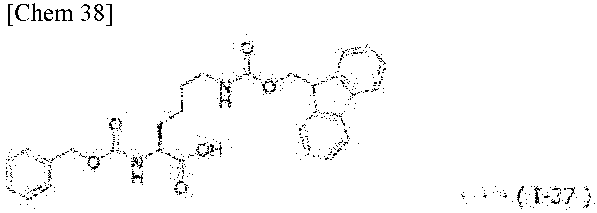

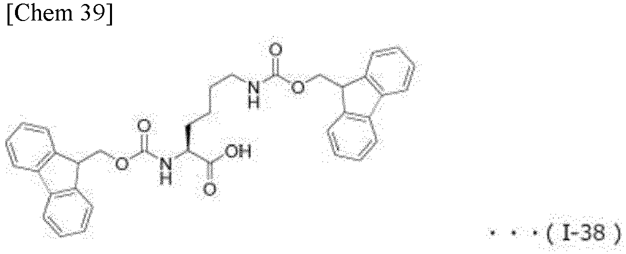

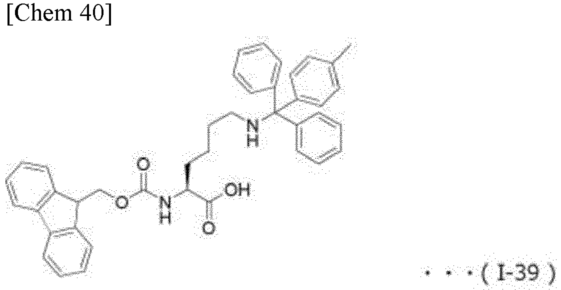

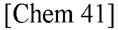

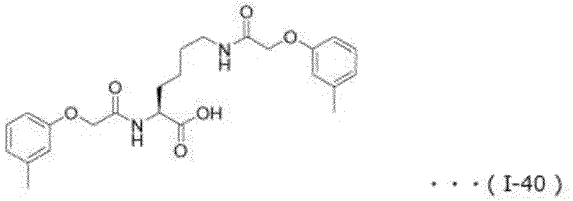

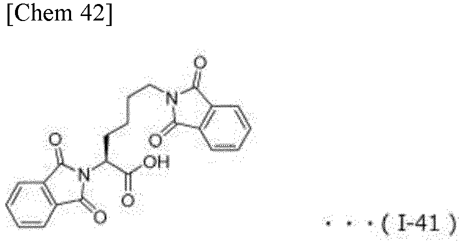

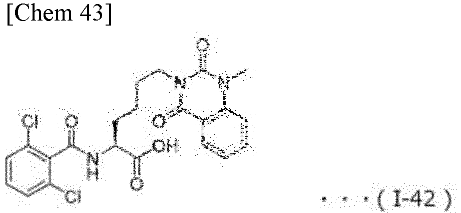

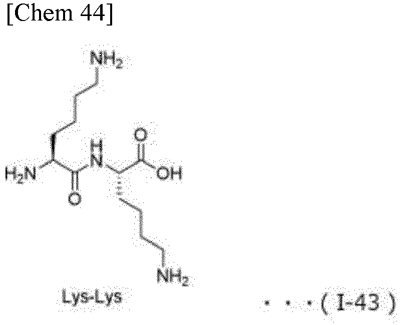

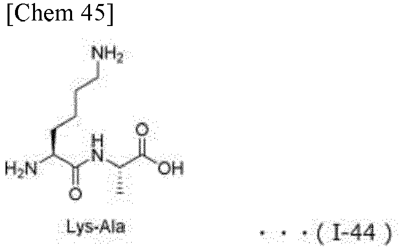

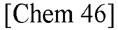

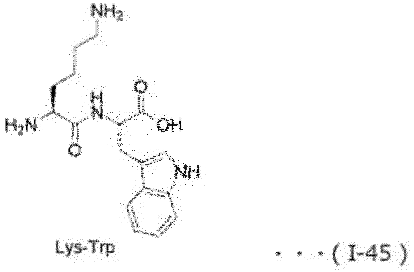

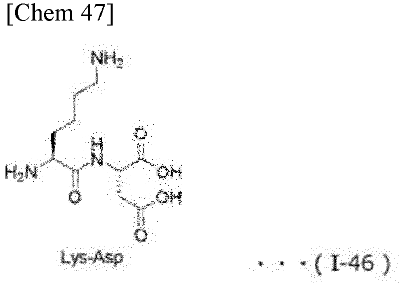

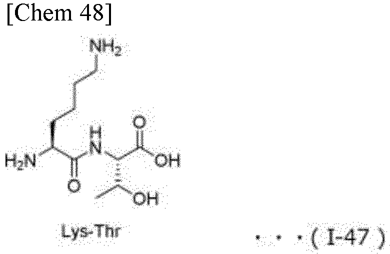

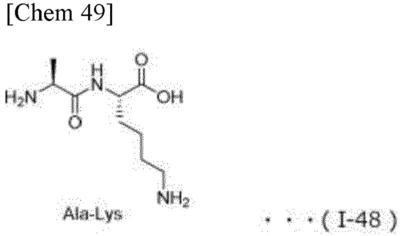

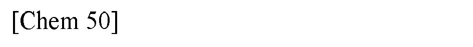

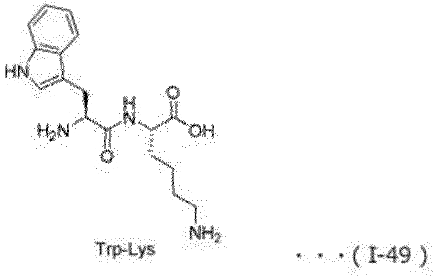

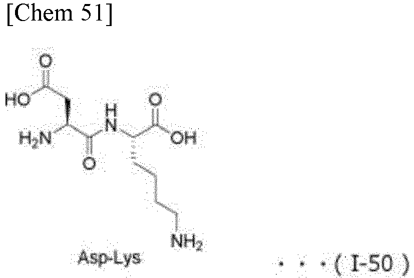

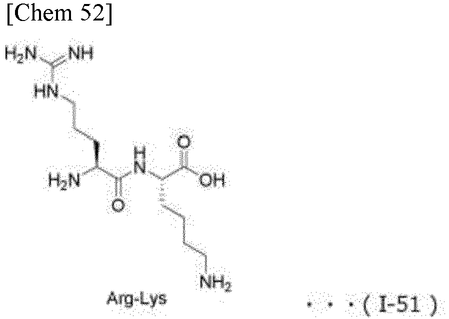

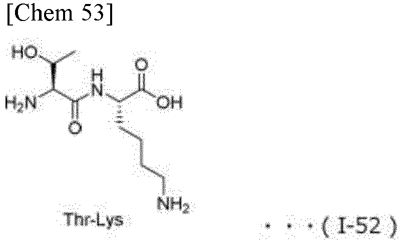

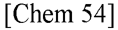

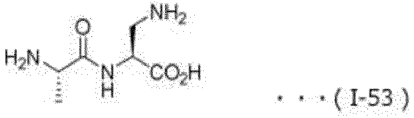

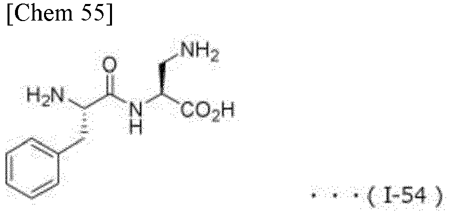

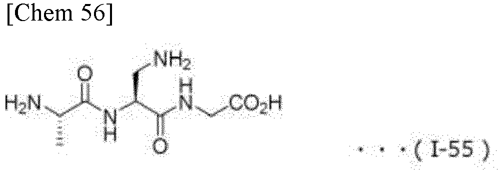

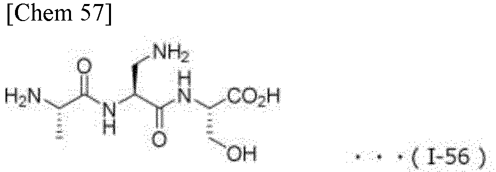

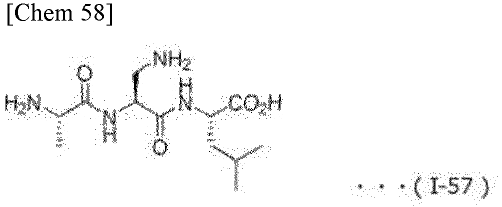

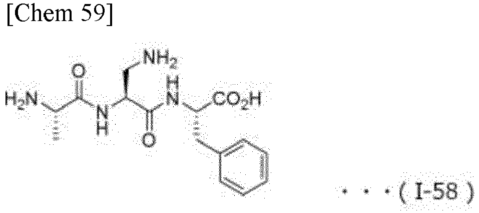

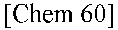

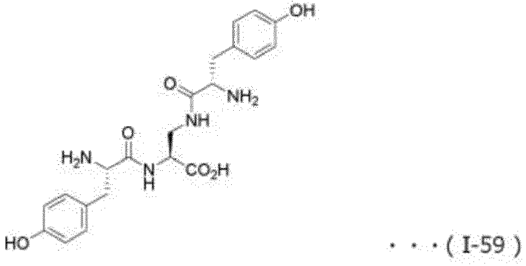

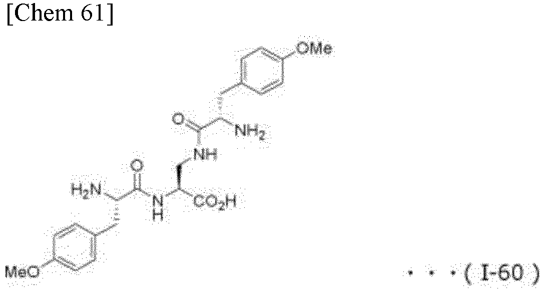

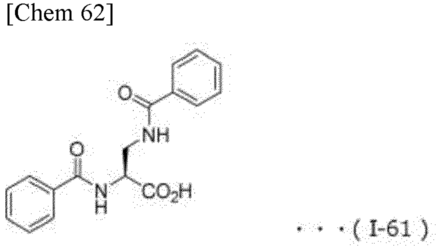

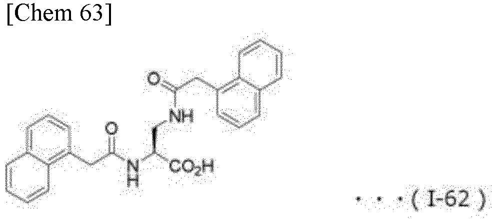

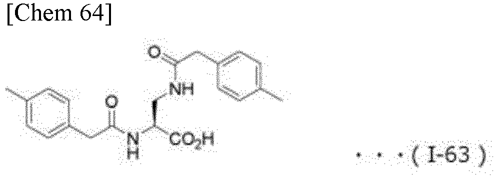

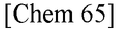

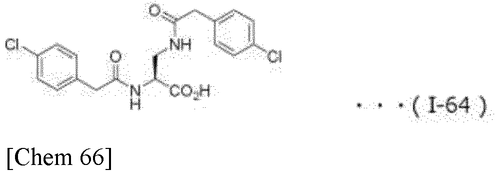

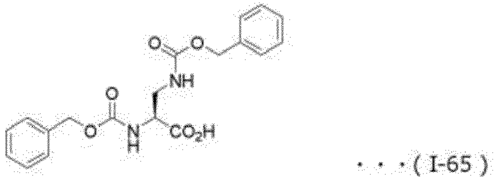

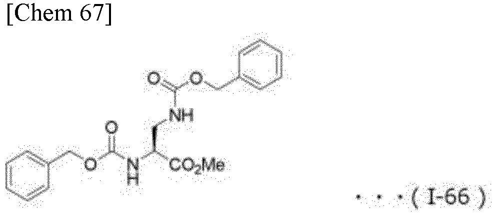

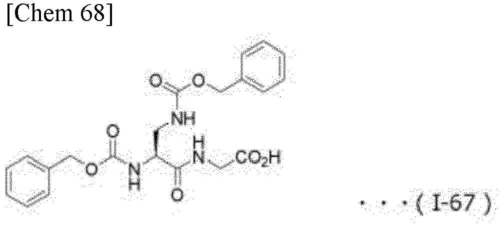

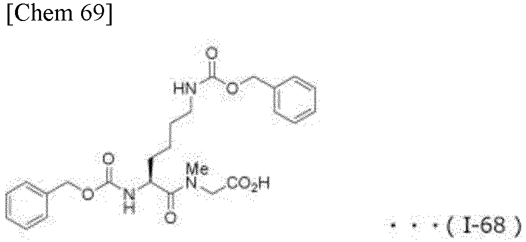

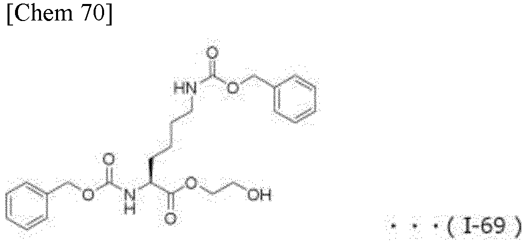

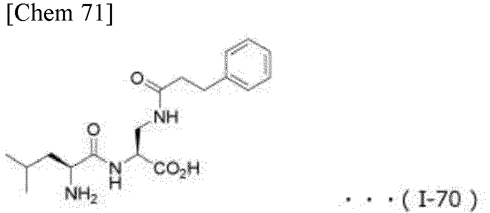

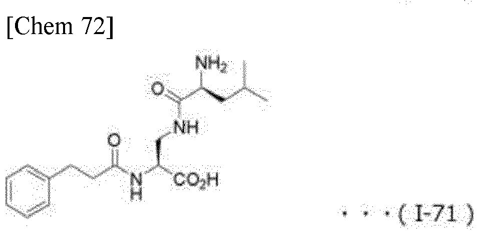

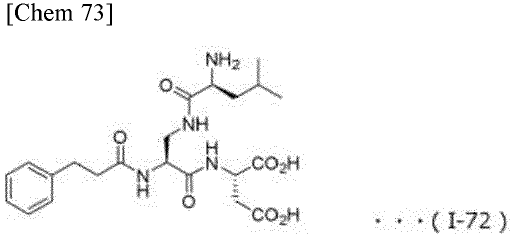

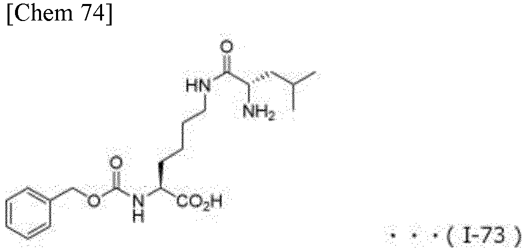

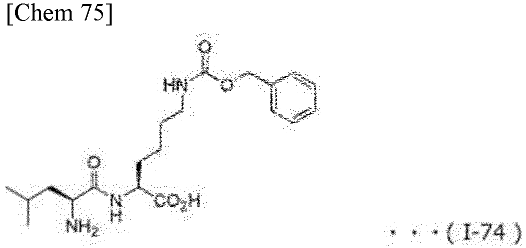

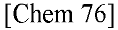

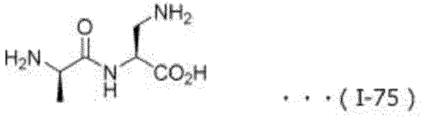

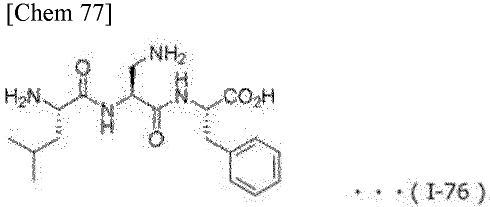

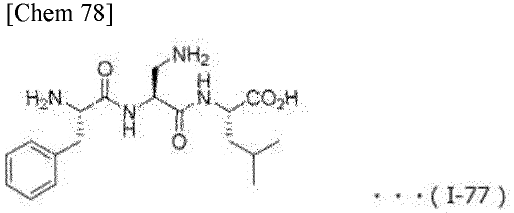

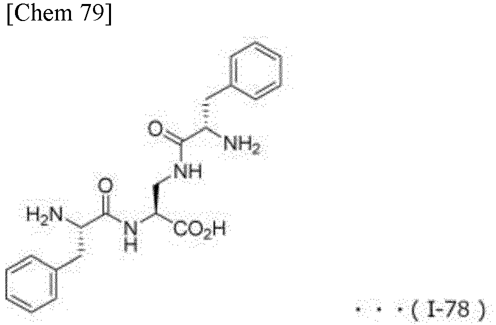

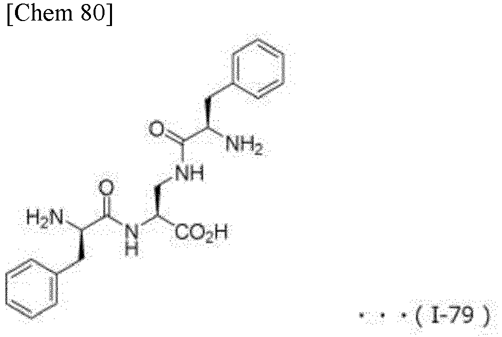

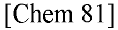

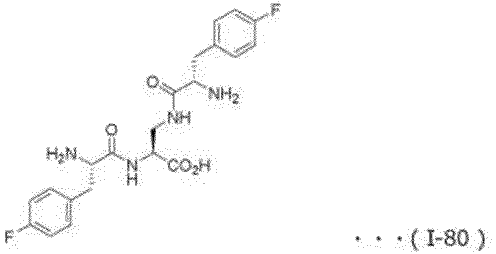

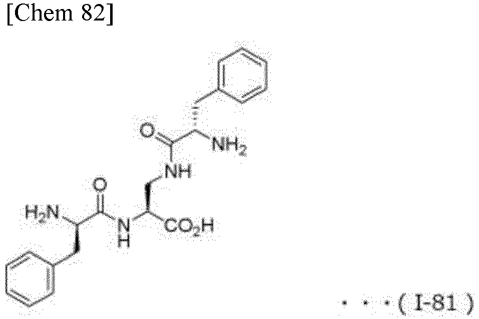

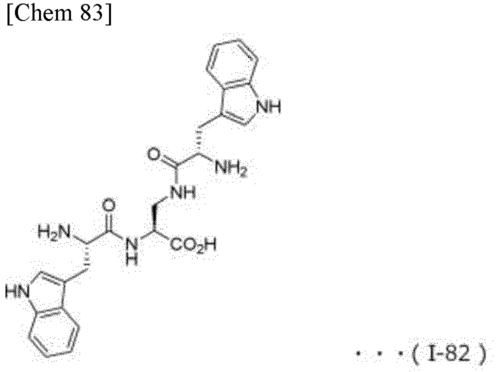

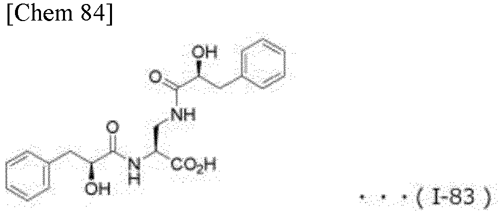

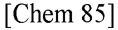

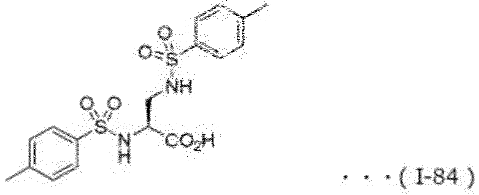

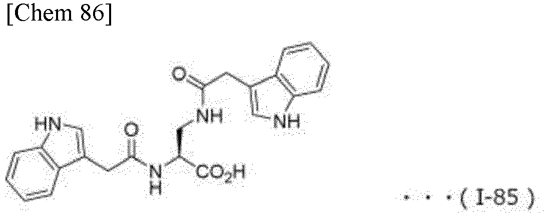

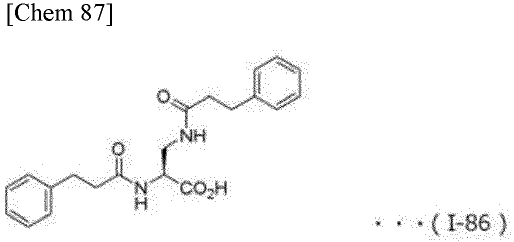

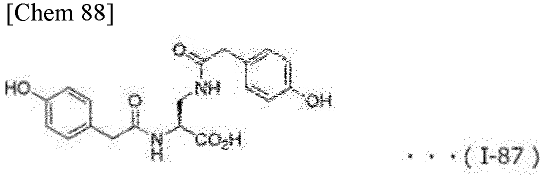

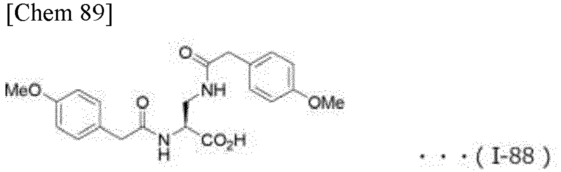

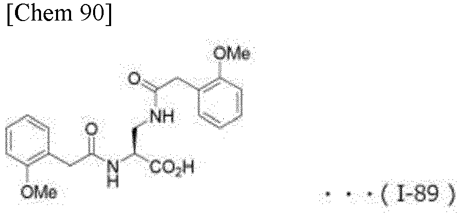

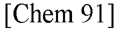

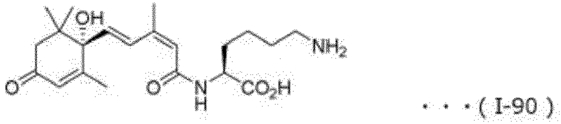

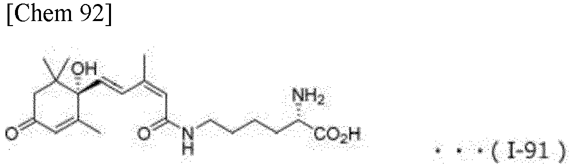

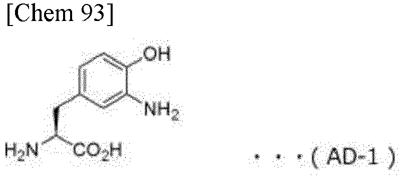

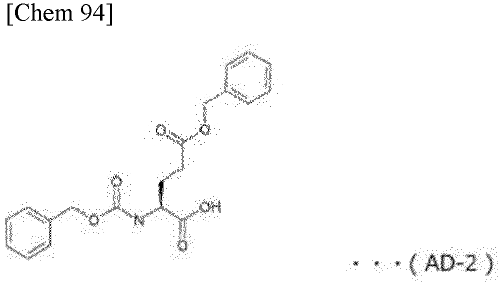

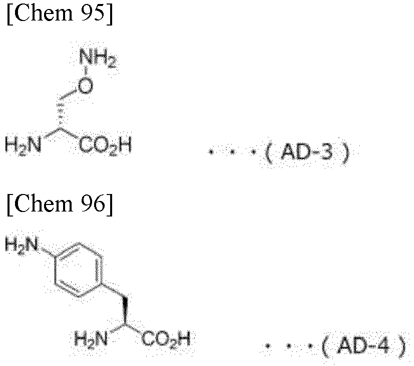

13. The composition according to any one of claims 1 to 12, wherein the nitrogen-containing compound of the ingredient (B) is a compound shown by the following formula (II): 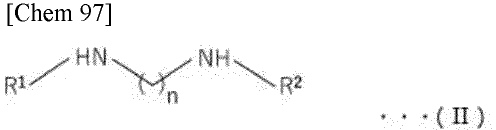
wherein, in the formula (II),
"n" represents an integer of 2 to 5, and
R1 and R2 each independently represent a hydrogen atom or an acyl group.

14. The composition according to claim 13, wherein the nitrogen-containing compound of the ingredient (B) is the compound shown by the following formula (II-1) and/or the compound shown by the following formula (II-2).

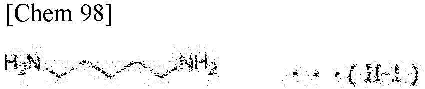

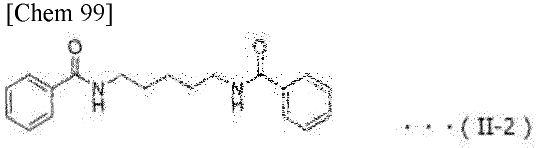

15. The composition according to any one of claims 1 to 14, wherein a part or the whole of the ingredient (A) forms a condensate with a part or the whole of the ingredient (B).

16. The composition according to any one of claims 1 to 15, which is used in the form of a liquid containing the ingredient (A) at a concentration of 0.004 µM to 10 mM.

17. The composition according to any one of claims 1 to 16, which is used in the form of a liquid containing the ingredient (B) at a concentration of 0.25 mM to 100 mM.

18. A method for inducing environmental stress tolerance of a plant, the method comprising:
applying the following ingredients (A) and (B) to the plant:
(A) an abscisic acid-like substance;
(B) one or more kinds of compounds selected from the group consisting of an amino acid, an amino acid derivative, and another nitrogen-containing compound.

19. A method for producing a plant body, the method comprising:
cultivating a plant with applying the following ingredients (A) and (B) to the plant; and
collecting a plant body:
(A) an abscisic acid-like substance;
(B) one or more kinds of compounds selected from the group consisting of an amino acid, an amino acid derivative, and another nitrogen-containing compound.

20. A method for suppressing dehydration of a plant after harvest, the method comprising:
applying the following ingredients (A) and (B) to the plant before harvesting the plant:
(A) an abscisic acid-like substance;
(B) one or more kinds of compounds selected from the group consisting of an amino acid, an amino acid derivative, and another nitrogen-containing compound.

21. A search method for a method for modulating a function of the following ingredient (A), the search method comprising:
applying the following ingredients (A) and (B) to a plant; and
identifying action of the ingredient (B):
(A) an abscisic acid-like substance;
(B) one or more kinds of compounds selected from the group consisting of an amino acid, an amino acid derivative, and another nitrogen-containing compound.

22. The method according to claim 21, wherein the action is regulation of expression of a gene of the plant.

23. The method according to any one of claims 18 to 22, wherein the ingredient (A) is one or more kinds of ingredients selected from the group consisting of abscisic acid, an abscisic acid derivative, an abscisic acid agonist, and an inhibitor of abscisic acid degradation.

24. The method according to any one of claims 18 to 23, wherein the ingredient (A) is (S)-(+)-abscisic acid.

25. The method according to any one of claims 18 to 24, wherein the amino acid of the ingredient (B) is one or more kinds of amino acids selected from the group consisting of lysine, tryptophan, valine, arginine, histidine, glutamine, asparagine, leucine, glycine, and glutamic acid.

26. The method according to any one of claims 18 to 25, wherein the amino acid of the ingredient (B) is one or more kinds of amino acids selected from the group consisting of lysine, tryptophan, and valine.

27. The method according to any one of claims 18 to 26, wherein the amino acid of the ingredient (B) is lysine.

28. The method according to any one of claims 18 to 27, wherein the amino acid of the ingredient (B) is an L-isomer.

29. The method according to any one of claims 18 to 28, wherein the amino acid derivative of the ingredient (B) is a compound shown by the following formula (I): 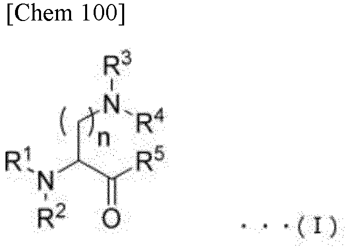
wherein, in the formula (I),
"n" represents an integer of 1 to 4,
R1 to R4 each independently represent a hydrogen atom, an alkyl group that may be substituted, a cycloalkyl group that may be substituted, an aryl group that may be substituted, a heteroaryl group that may be substituted, an alkenyl group that may be substituted, an alkynyl group that may be substituted, an acyl group, a sulfo group, a sulfonyl group, an acylamino group, an acyloxy group, a carbamoyl group, or an amidino group, or at least some of R1 to R4 together form a substituent, and
R5 represents a hydrogen atom, a hydroxyl group, an alkoxy group that may be substituted, an alkoxyaryl group that may be substituted, an amino group, an alkylamino group that may be substituted, or an arylamino group that may be substituted.

30. The method according to claim 29, wherein the compound shown by the formula (I) satisfies one or more conditions selected from the following (1) to (7):
(1) the R1 and R3 are hydrogen atoms;
(2) the R1 to R4 are hydrogen atoms;
(3) the R2 and R4 are each independently an acyl group having a carbon number of 1 to 20;
(4) one of the R2 and R4 is a hydrogen atom and the other is an acyl group having a carbon number of 1 to 20;
(5) the R1 is a hydrogen atom and one or each of the R3 and R4 is an alkyl group that may be substituted, the alkyl group having a carbon number of 1 to 6;
(6) the R5 is an alkoxy group that may be substituted, the alkoxy group having a carbon number of 1 to 6;
(7) the R5 is an amino group or an alkylamino group that may be substituted, the alkylamino group having a carbon number of 1 to 6.

31. The method according to claim 29 or 30, wherein the substituent formed by at least some of R1 to R4 together is a cyclic group having 1 to 3 hetero atoms.

32. The method according to any one of claims 18 to 31, wherein the amino acid derivative of the ingredient (B) is a dipeptide.

33. The method according to any one of claims 18 to 32, wherein the amino acid derivative of the ingredient (B) is one or more kinds of compounds selected from the compounds shown by the following formulas (I-1) to (I-91) and (AD-1) to (AD-4).

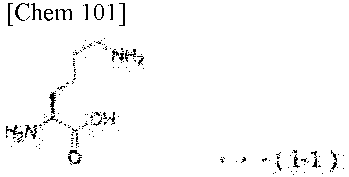

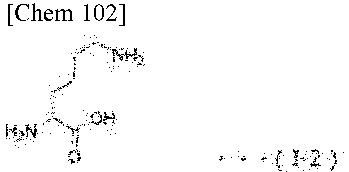

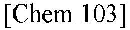

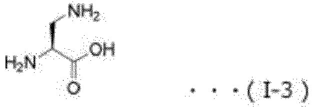

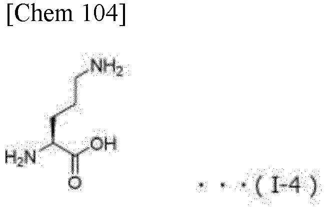

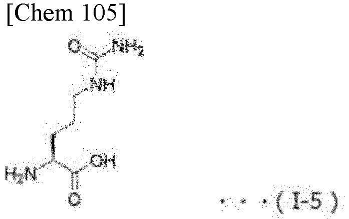

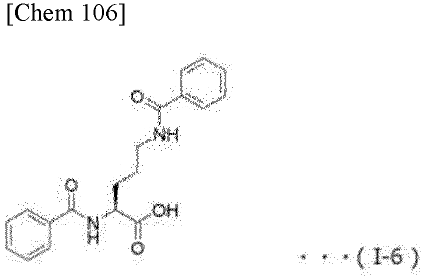

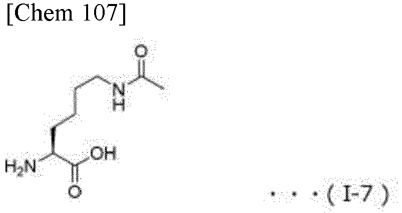

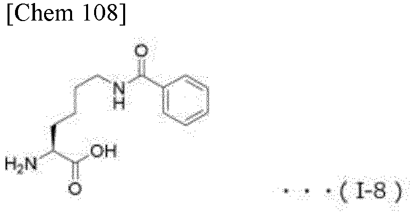

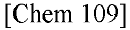

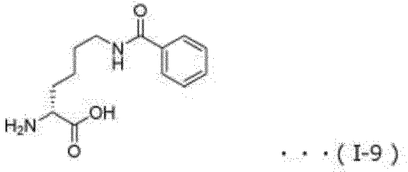

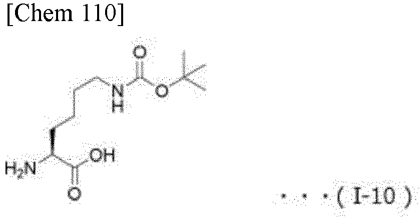

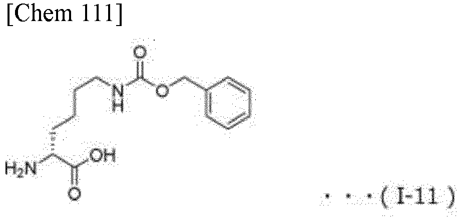

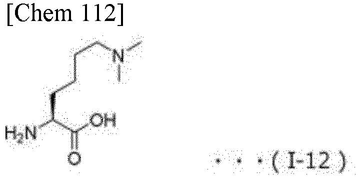

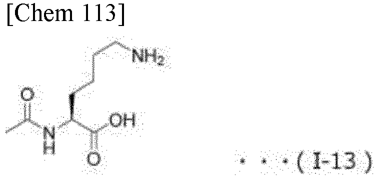

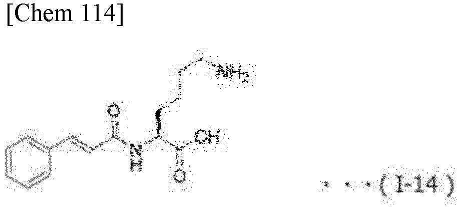

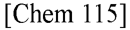

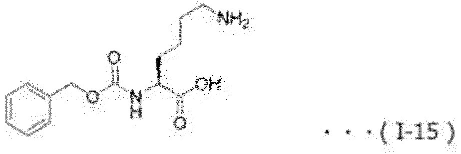

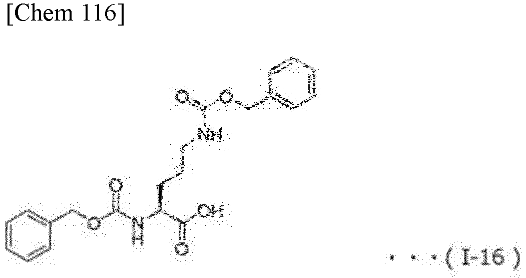

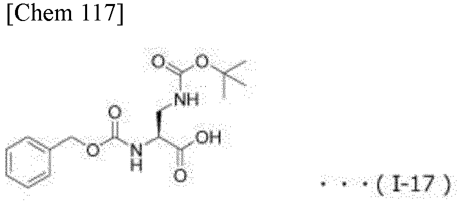

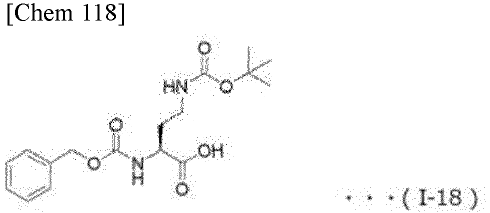

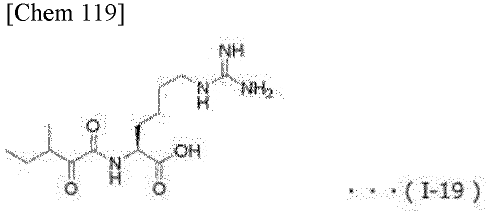

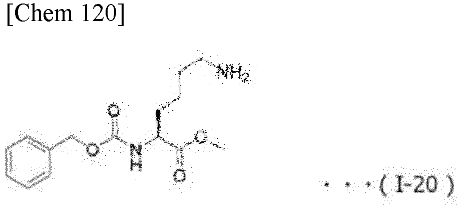

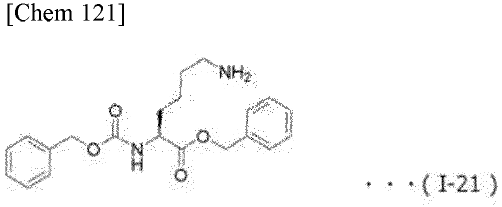

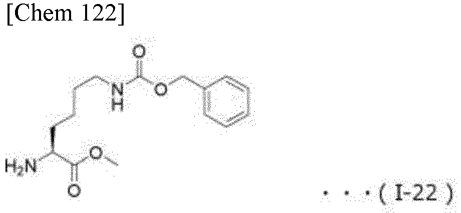

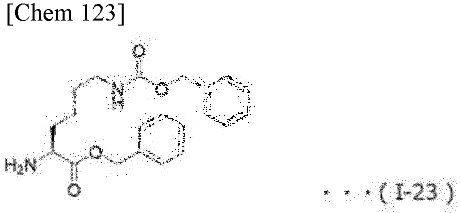

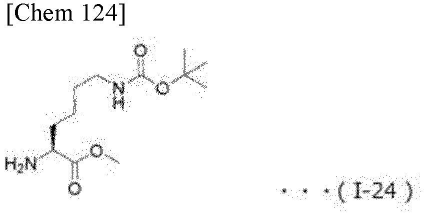

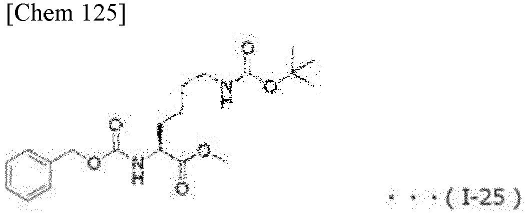

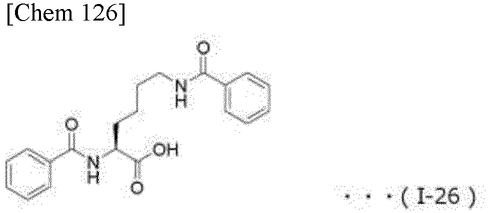

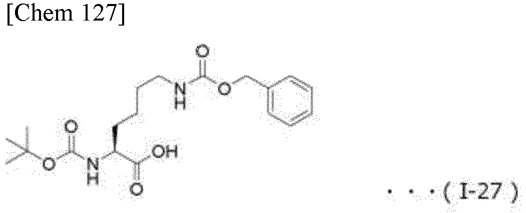

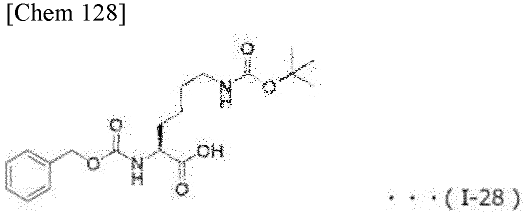

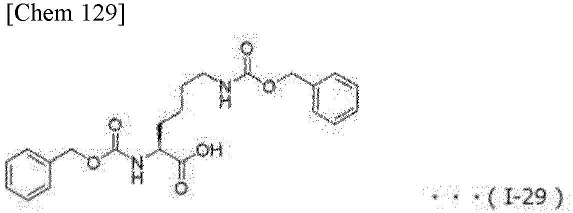

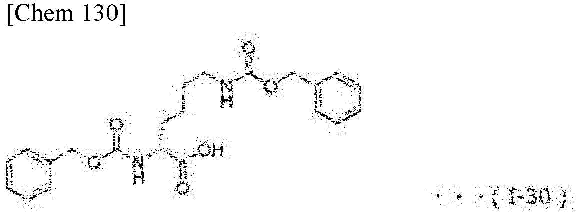

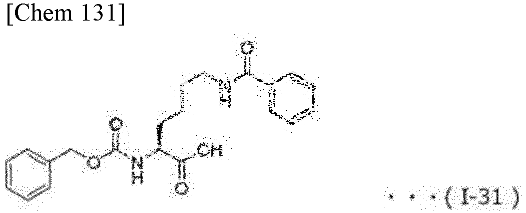

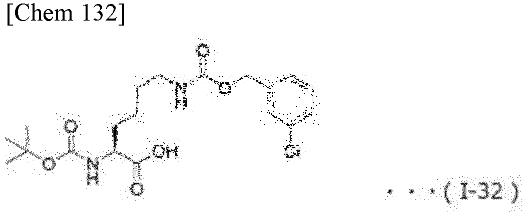

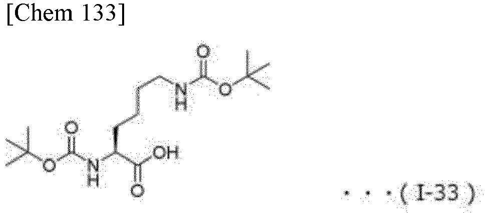

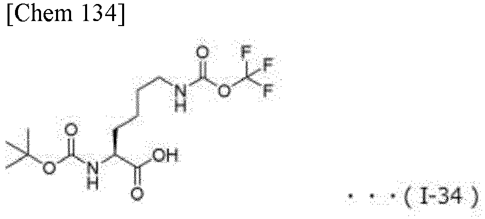

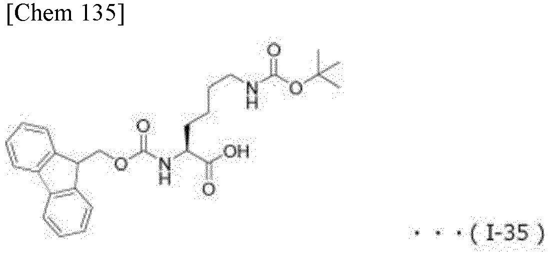

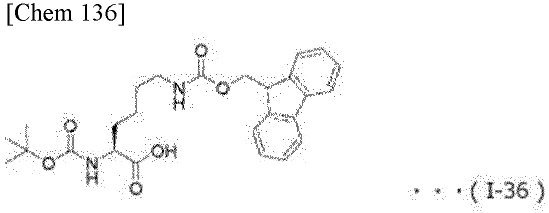

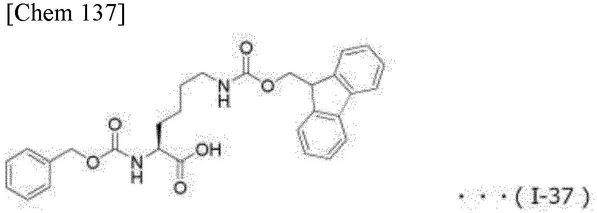

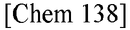

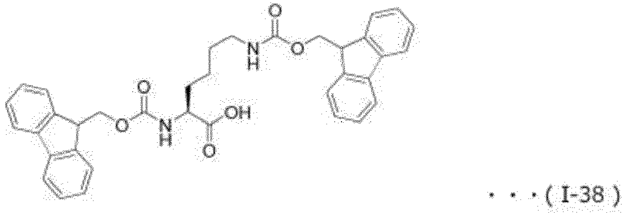

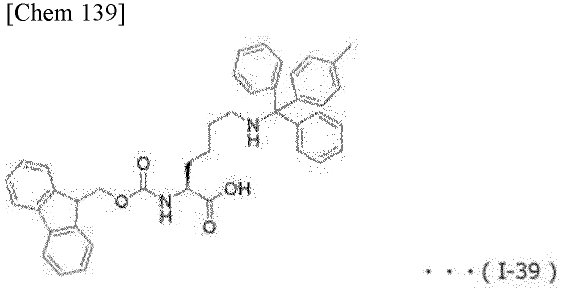

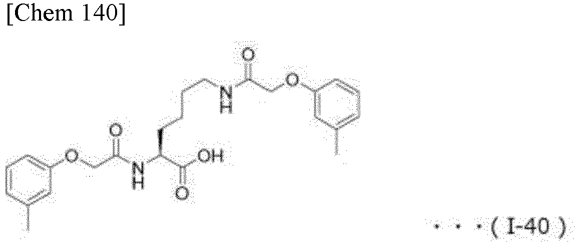

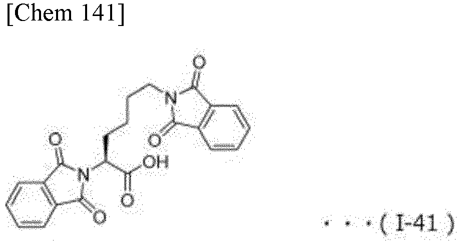

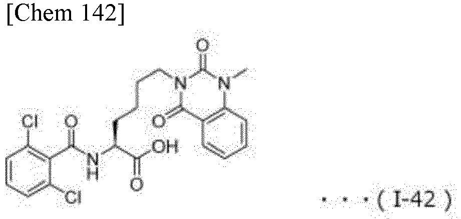

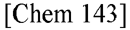

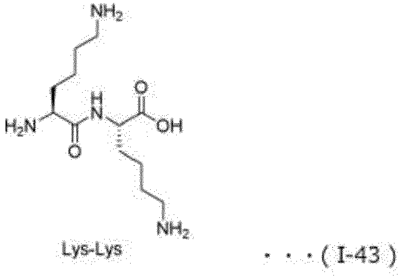

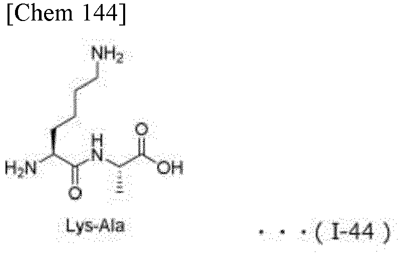

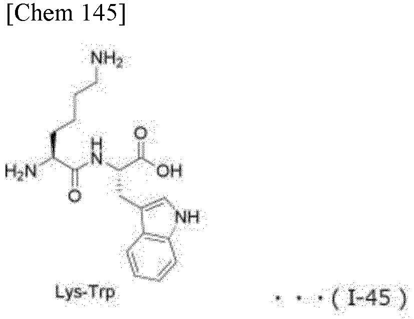

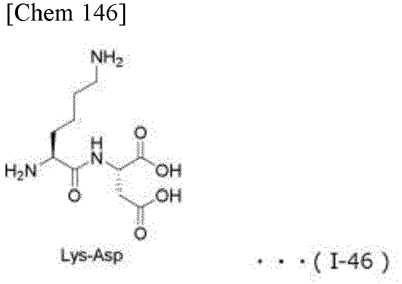

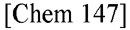

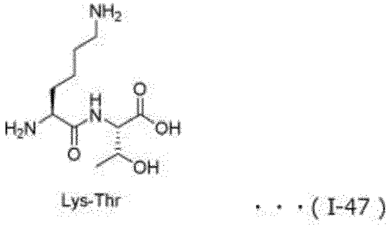

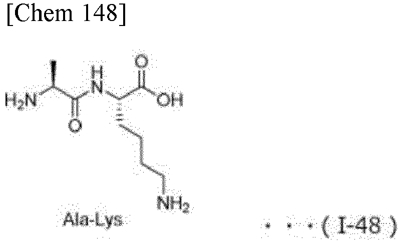

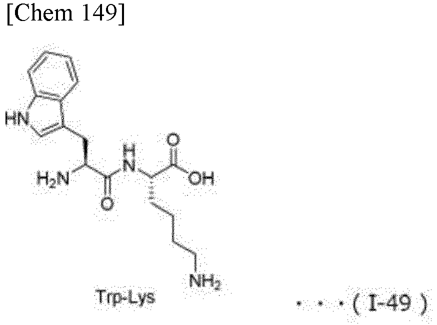

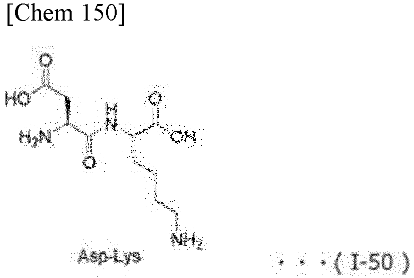

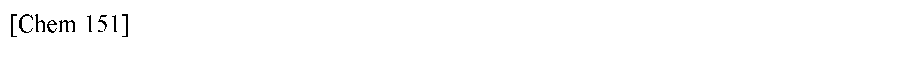

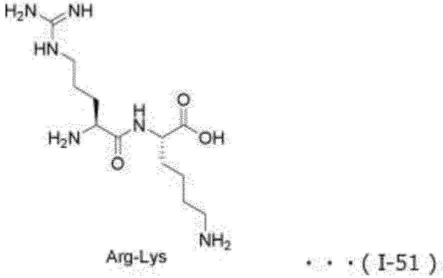

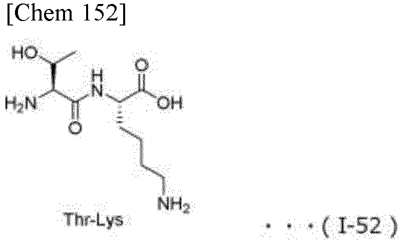

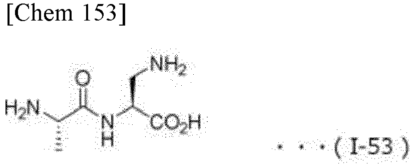

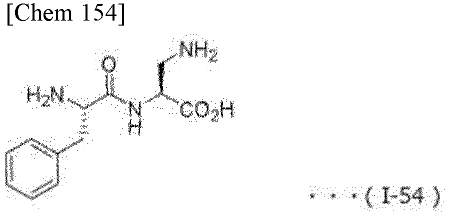

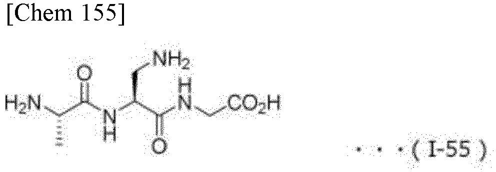

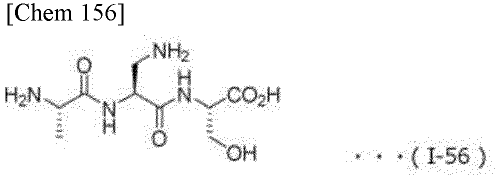

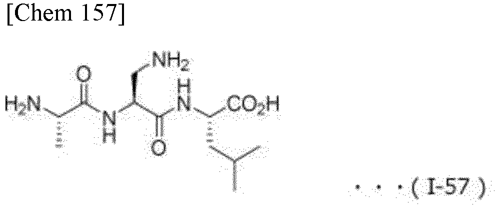

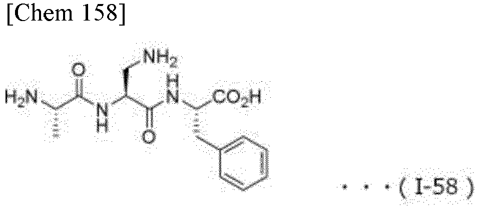

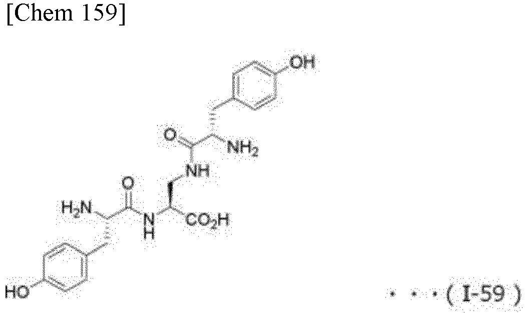

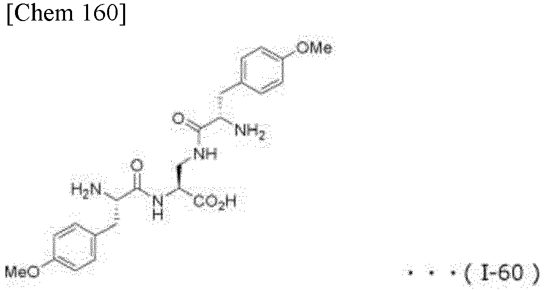

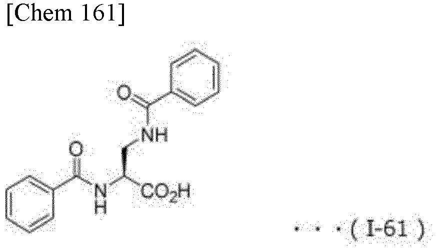

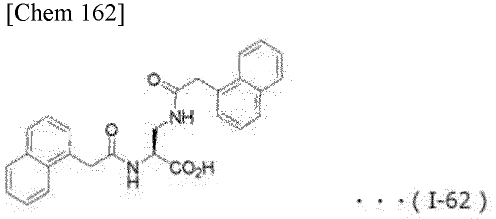

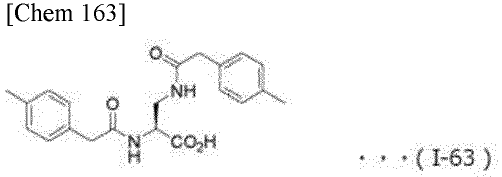

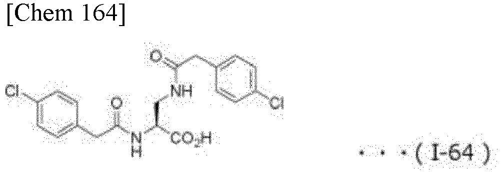

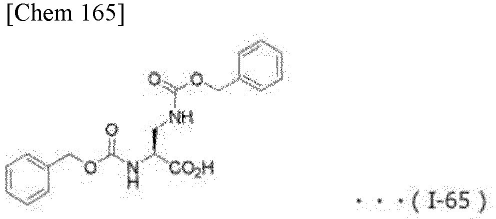

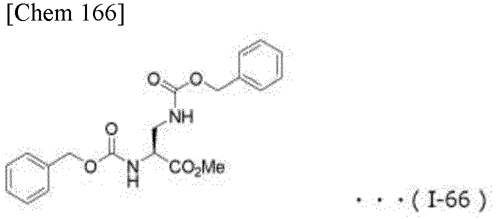

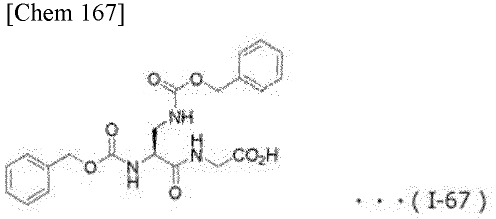

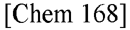

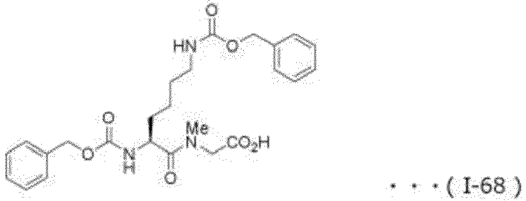

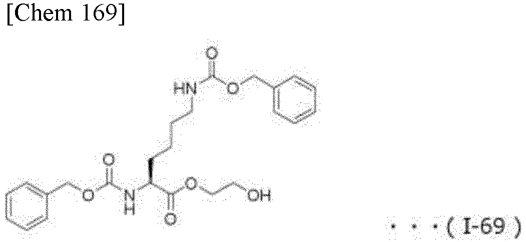

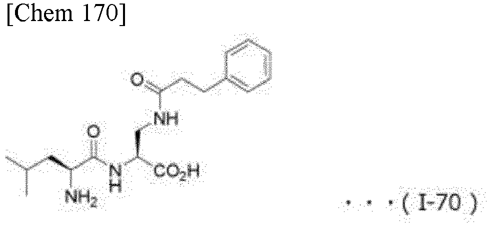

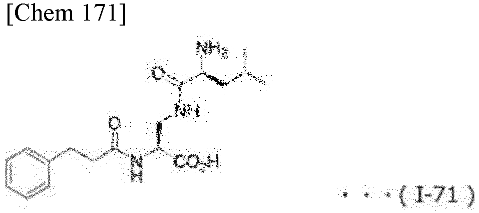

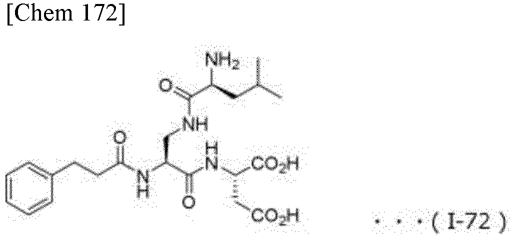

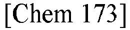

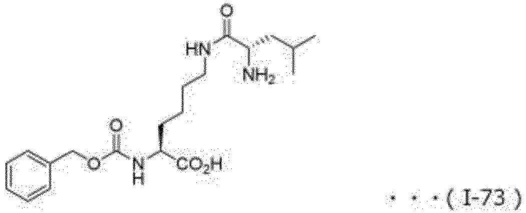

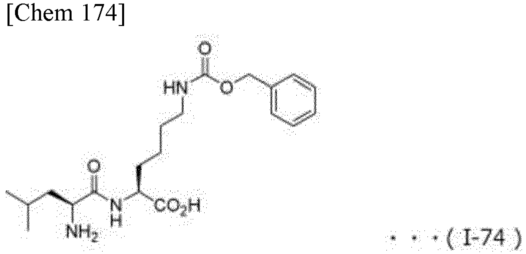

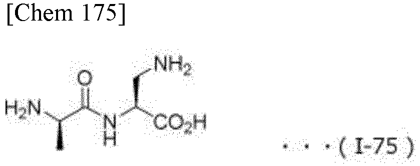

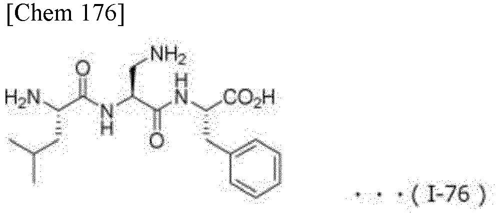

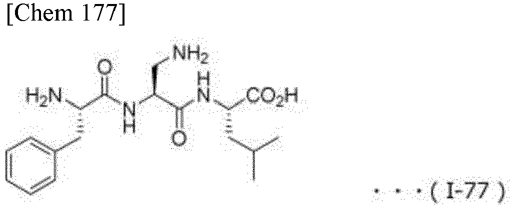

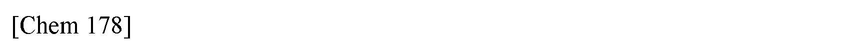

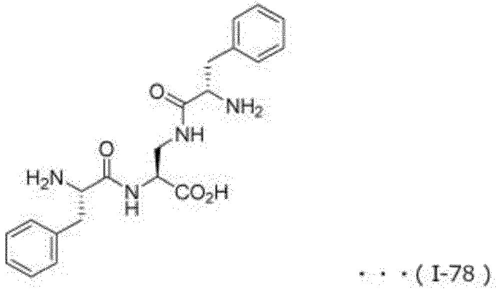

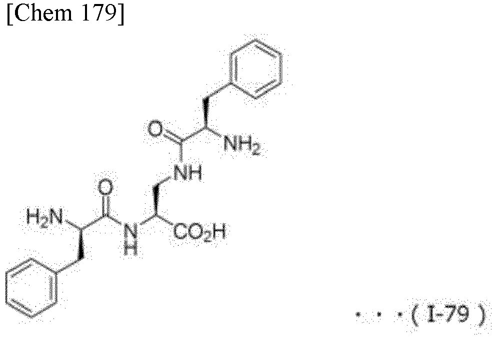

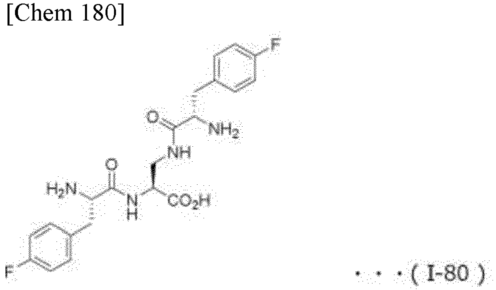

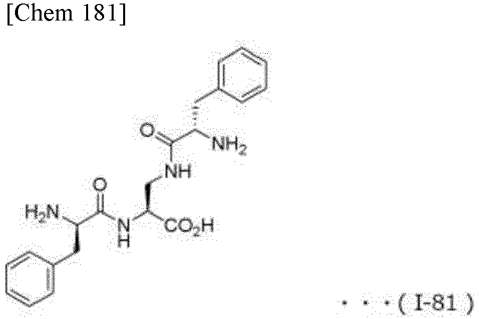

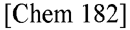

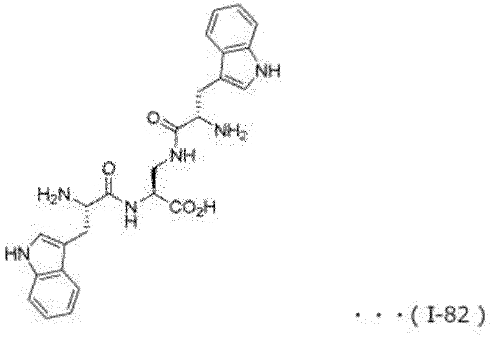

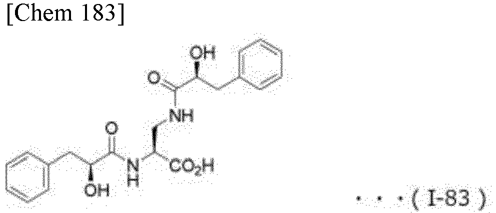

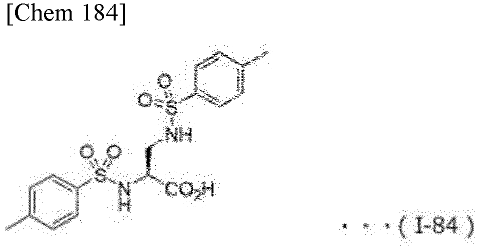

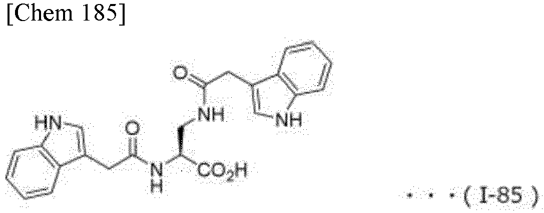

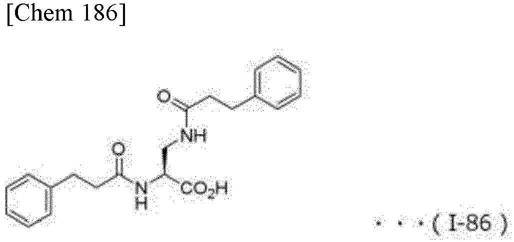

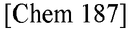

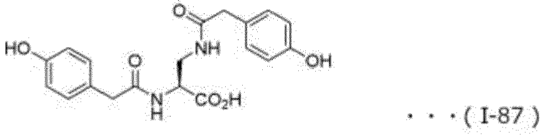

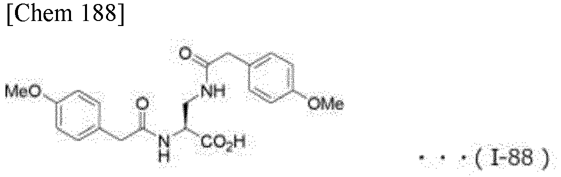

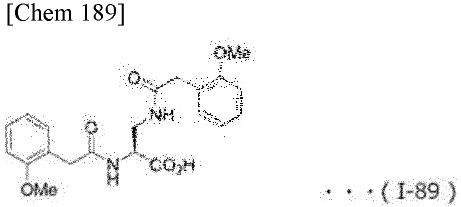

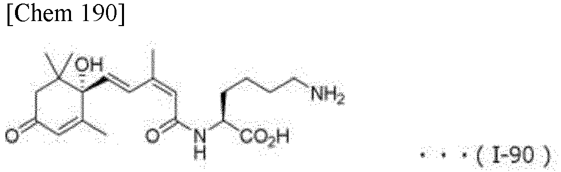

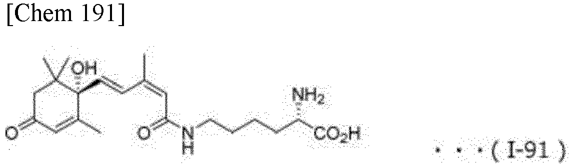

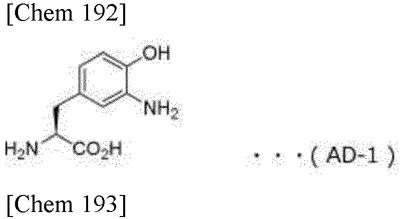

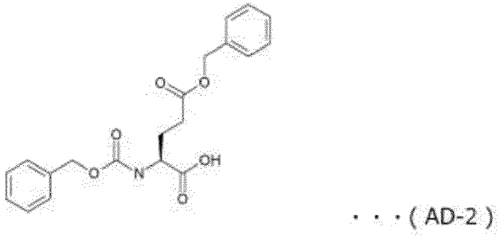

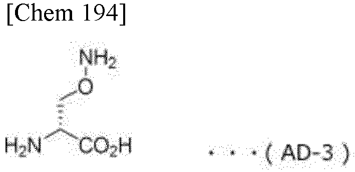

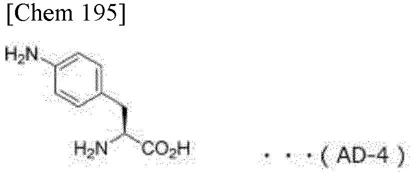

34. The method according to any one of claims 18 to 33, wherein the nitrogen-containing compound of the ingredient (B) is a compound shown by the following formula (II): 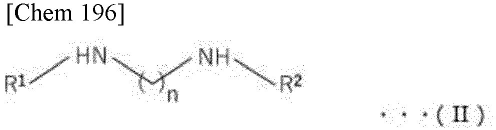
wherein, in the formula (II),
"n" represents an integer of 2 to 5, and
R1 and R2 each independently represent a hydrogen atom or an acyl group.

35. The method according to claim 34, wherein the nitrogen-containing compound of the ingredient (B) is the compound shown by the following formula (II-1) and/or the compound shown by the following formula (II-2).

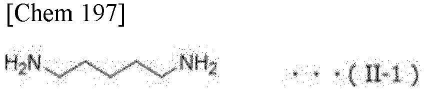

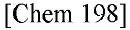

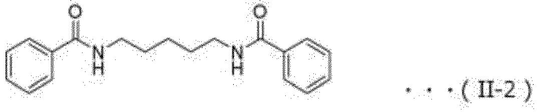

36. The method according to any one of claims 18 to 35, wherein a part or the whole of the ingredient (A) forms a condensate with a part or the whole of the ingredient (B).

37. The method according to any one of claims 18 to 36, wherein the ingredient (A) is used in the form of a liquid containing the ingredient (A) at a concentration of 0.004 µM to 10 mM.

38. The method according to any one of claims 18 to 37, wherein the ingredient (B) is used in the form of a liquid containing the ingredient (B) at a concentration of 0.25 mM to 100 mM.

39. The method according to any one of claims 18 and 23 to 38, wherein the inducing of environmental stress tolerance is an increase in expression of a gene involved in environmental stress tolerance.

40. The method according to claim 39, wherein the gene involved in environmental stress tolerance is one or more kinds of genes selected from MAPKKK18 gene, RD29A gene, RD29B gene, ABF3F gene, and SLAC1 gene.

41. A condensate of abscisic acid and lysine.

42. The condensate according to claim 41, wherein the abscisic acid is (S)-(+)-abscisic acid.

43. The condensate according to claim 41 or 42, wherein the lysine is L-lysine.
